# EUROPEAN PATENT SPECIFICATION

(11) **EP 4 000 891 B1**
(45) Date of publication and mention of the grant of the patent: **09.08.2023**
(21) Application number: 21207573.3
(22) Date of filing: 10.11.2021
(51) Int. Cl.: B29C 70/38, B29C 31/08

(54) **METHODS AND SYSTEMS FOR ASSEMBLING A STRUCTURE**
VERFAHREN UND SYSTEME ZUR MONTAGE EINER STRUKTUR
PROCÉDÉS ET SYSTÈMES D'ASSEMBLAGE D'UNE STRUCTURE

(30) Priority: 18.11.2020 US 202063115036 P; 26.01.2021 NL 2027410
(43) Date of publication of application: 25.05.2022
(73) Proprietor: The Boeing Company, Arlington, VA 22202 (US)
(72) Inventor: Jones, Darrell D., CHICAGO, 60606-1596 (US); Whiting, Robert William, CHICAGO, 60606-1596 (US); Smith, Daniel R., Chicago, 60606-1596 (US); Halbritter, Allen James, CHICAGO, 60606-1596 (US)
(74) Representative: Arnold & Siedsma

(56) References cited:
- EP-A1- 3 406 431

## Description

### Field

The disclosure relates to the field of assembly, and in particular, to placement of preforms for assembly of composite parts.

### Background

Multi-layer preforms of constituent material (e.g., Carbon Fiber Reinforced Polymer (CFRP)) may be formed into any of a variety of shapes for hardening into a composite part. When fabricating complex composite parts, multiple preforms may be placed together onto a mandrel for curing together into a single, integral part. However, the placement of preforms together for curing, whether performed manually or automatically, is a substantially time-consuming process that reduces the speed at which composite parts are manufactured.

Therefore, it would be desirable to have a method and system that take into account at least some of the issues discussed above, as well as other possible issues.

Patent document EP 3 406 431 A1, according to its abstract, states: systems and methods for laying up laminates. A method includes laying up a multi-layer laminate of fiber reinforced material onto a surface, by: feeding a tape of fiber reinforced material to tape cutters which cut the tape into pieces, picking up pieces of the fiber reinforced material via pick-and-place devices at each of multiple lamination units that are in sequence in a direction of travel, and placing the pieces of fiber reinforced material via the pick-and-place devices to form a laminate as the surface and the lamination units change position with respect to each other and multiple pieces are laid-up concurrently.

### Summary

Embodiments described herein provide systems and methods for engaging in coordinated control of pick-and-place (PNP) machines to place preforms onto a mandrel. The PNP machines are operated in tandem when placing large objects, yet operate independently when placing smaller objects. This can increase the overall speed of placement of preforms, which in turn can enhance the speed of layup (and hence fabrication) of the composite part.

One embodiment is a method for placing preforms onto a mandrel. The method includes moving a mandrel in a process direction relative to a station that comprises multiple pick-and-place (PNP) machines, identifying a tray that stores a preform comprising an unhardened fiber-reinforced material, placing a strong back at the preform via at least one of the PNP machines, applying a vacuum that holds the preform in contact with the strong back, transporting the preform to a mandrel via the PNP machines, and placing the preform onto the mandrel.

A further embodiment is a non-transitory computer-readable medium embodying programmed instructions which, when executed by a processor, are operable for performing a method for assembling a structure. The method includes moving a mandrel in a process direction relative to a station that comprises multiple pick-and-place (PNP) machines, identifying a tray that stores a preform comprising an unhardened fiber-reinforced material, placing a strong back at the preform via at least one of the PNP machines, applying a vacuum that holds the preform in contact with the strong back, transporting the preform to a mandrel via the PNP machines, and placing the preform onto the mandrel.

A further embodiment is a placement system for fabricating a structure. The placement system includes pick-and-place (PNP) machines at a station within a cell, and a cell controller. The cell controller is operable to move a mandrel in a process direction relative to the station, identify a tray that stores a preform comprising an unhardened fiber-reinforced material, place a strong back at the preform via at least one of the PNP machines, apply a vacuum that holds the preform in contact with the strong back, transport the preform to a mandrel via the PNP machines, and place the preform onto the mandrel.

Other illustrative embodiments (e.g., methods and computer-readable media relating to the foregoing embodiments) may be described below. The features, functions, and advantages that have been discussed can be achieved independently in various embodiments or may be combined in yet other embodiments further details of which can be seen with reference to the following description and drawings.

### Description of the Drawings

Some embodiments of the present disclosure are now described, by way of example only, and with reference to the accompanying drawings. The same reference number represents the same element or the same type of element on all drawings.
FIG. 1 is a schematic block diagram illustrating a manufacturing line having a placement system in an illustrative embodiment.
FIG. 2 is a schematic block diagram of a placement station that can be used in placement system of the manufacturing line of FIG. 1 in an illustrative embodiment.
FIG. 3 is a perspective view of the placement system shown in FIG. 2 in an illustrative embodiment.
FIG. 4 is a perspective view of a first example tray that can be used with the placement system shown in FIGS. 1 to 3 in an illustrative embodiment.
FIG. 5 is a perspective view of a second example tray that can be used with the placement system shown in FIGS. 1 to 3 including example preforms that may be placed by the placement system.
FIG. 6 is a side cross-sectional view of the trays shown in FIGS. 4 and 5 taken at line 6-6 without the preform(s) present.
FIG. 7 is a side cross-sectional view of the tray shown in FIG. 6 having a preform, such as the preform(s) shown in FIG. 5.
FIG. 8 is a side cross-sectional view of the tray shown in FIGS. 6 and 7 and a strong back that can be used with placement system shown in FIGS. 1 to 3.
FIG. 9 is a side cross-sectional view of the strong back of FIG. 8 engaged with the tray of FIG. 8.
FIG. 10 is a side cross-sectional view of the strong back shown in FIGS. 8 and 9 having the preform.
FIG. 11 is a side cross-sectional view of a mandrel that can be used with the placement system shown in FIGS. 1 to 3 and/or with the manufacturing line shown in FIG. 1.
FIG. 12 is a side cross-sectional view of the mandrel, strong back, and preform shown in FIGS. 6 to 11 in an illustrative embodiment.
FIG. 13 is a side cross-sectional view of the mandrel, strong back, and preform shown in FIG. 12 in which the strong back and/or preform has been placed over the mandrel.
FIG. 14 is a side cross-sectional view of the mandrel, strong back, and preform shown in FIGS. 12 and 13 in which the preform has been placed in the mandrel.
FIG. 15 is an end view of a mandrel that can be used as the mandrel shown in FIGS. 11 to 14 and/or that can be used with the placement system shown in FIGS. 1 to 3 and/or manufacturing line shown in FIG. 1 in an illustrative embodiment.
FIG. 16 is an end view of the mandrel of FIG. 15 accompanied by a strong back assembly that can be used as the strong back shown in FIGS. 8 to 10 and 12 to 14 in an illustrative embodiment.
FIG. 17 is a bottom view of the strong back having the preform(s) placed thereon in an illustrative embodiment, taken at line 17-17 in FIG. 16.
FIG. 18 is an end cross-sectional view of the mandrel and preform(s) shown in FIG. 17.
FIG. 19 is a perspective view of a first example of multiple placement stations that can be used with the placement system shown in FIG. 1.
FIG. 20 is a perspective view of a second example of multiple placement stations that can be used with the placement system shown in FIG. 1.
FIG. 21 is a perspective view that illustrates arrangement of placements stations, an assembly station, and mandrel segments that can be used in the placement system of FIG. 1 in an illustrative embodiment.
FIG. 22 is a flowchart illustrating a method for assembling a structuring using the placement system of FIGS. 1 to 3 in an illustrative embodiment.
FIG. 23 is a message diagram that can be used during the method shown in FIG. 22 in an illustrative embodiment.
FIGS. 24A and 24B are a flowchart illustrating a placement method for operating the placement system shown in FIGS. 1 to 21 in illustrative embodiments.
FIG. 25 is a flowchart illustrating a method for operating the placement system and/or manufacturing line shown in FIG. 1 that can be used to perform a post-placement method before or during the placement method shown FIGS. 24A and 24B in an illustrative embodiment.
FIG. 26 is a flowchart illustrating a method of preparing the mandrel shown in FIGS. 2 to 21 that can be used to perform the reuse shown in the method of FIG. 25.
FIG. 27 is a flow diagram of aircraft production and service methodology in which the system and/or manufacturing line shown in FIGS. 1 to 21 and/or the method shown in FIGS. 22 to 26 can be used in an illustrative embodiment.
FIG. 28 is a schematic block diagram of an aircraft that can be made using the system and/or manufacturing line shown in FIGS. 1 to 21 and/or the method shown in FIGS. 22 to 26 in an illustrative embodiment.
FIG. 29 is a perspective view of the aircraft shown in FIG. 28.

### Description

The figures and the following description provide specific illustrative embodiments of the disclosure. It will thus be appreciated that those skilled in the art will be able to devise various arrangements that, although not explicitly described or shown herein, embody the principles of the disclosure and are included within the scope of the disclosure. Furthermore, any examples described herein are intended to aid in understanding the principles of the disclosure, and are to be construed as being without limitation to such specifically recited examples and conditions. As a result, the disclosure is not limited to the specific embodiments or examples described below, but by the claims and their equivalents.

Composite parts, such as Carbon Fiber Reinforced Polymer (CFRP) parts, are initially laid-up in multiple layers that together are referred to as a preform. Individual fibers within each layer of the preform are aligned parallel with each other, but different layers may exhibit different fiber orientations in order to increase the strength of the resulting composite part along different dimensions. The preform may include a viscous resin that solidifies in order to harden the preform into a composite part (e.g., for use in an aircraft). Carbon fiber that has been impregnated with an uncured thermoset resin or a thermoplastic resin is referred to as "prepreg." Other types of carbon fiber include "dry fiber" which has not been impregnated with thermoset resin but may include a tackifier or binder. Dry fiber may be infused with resin prior to curing. For thermoset resins, the hardening is a one-way process referred to as curing, while for thermoplastic resins, the resin may reach a viscous form if the resin is re-heated.

Embodiments described herein provide a pulsing or moving line design and systems and methods for engaging in coordinated control of pick-and-place (PNP) machines and synchronized manual assist operations to place preforms onto a stationary or moving mandrel. In one example having a moving segment (e.g., a mandrel segment) or a full tool (e.g., a mandrel) continuously moving or pulsing along a manufacturing line, the systems and methods described herein can increase work density on the mandrel (e.g., by having more stations and/or more zonal coverage while simultaneously having increased parallel processing operations occurring in feeder lines to the stations). The herein-described systems and methods can provide an order of magnitude reduction in work density and increase parallel processing operations by a similar amount in a tight packing density within a manufacturing facility. All operations, both automated and manual, can be synchronized to support line velocity.

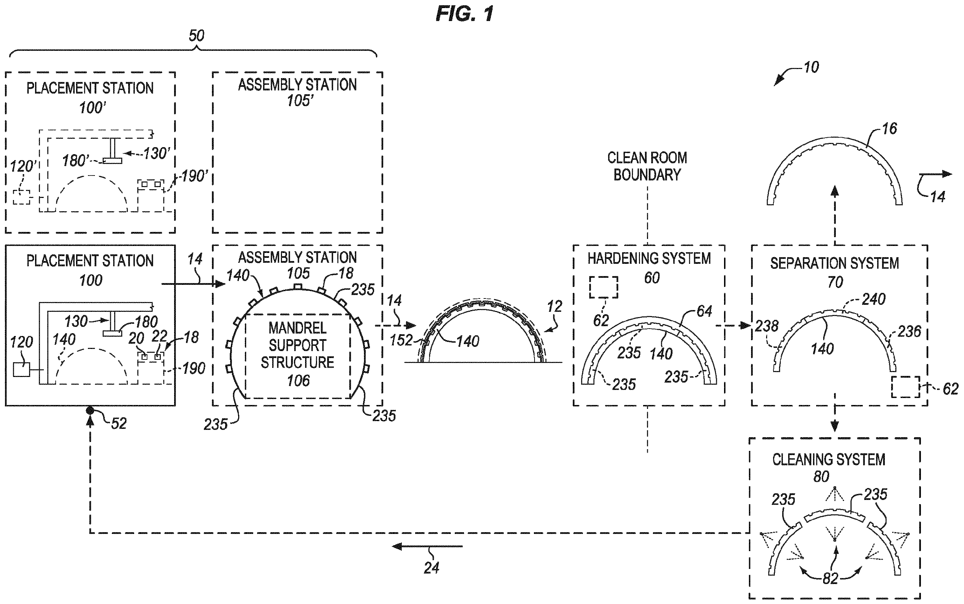

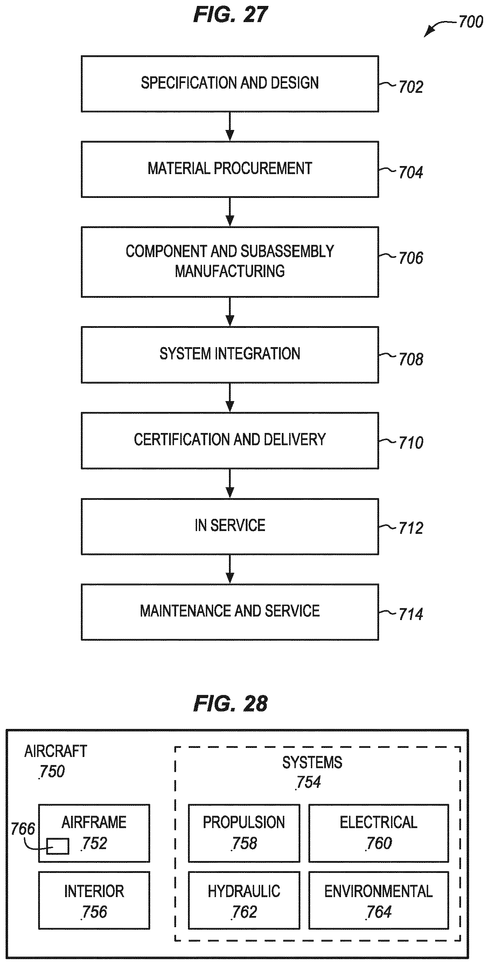

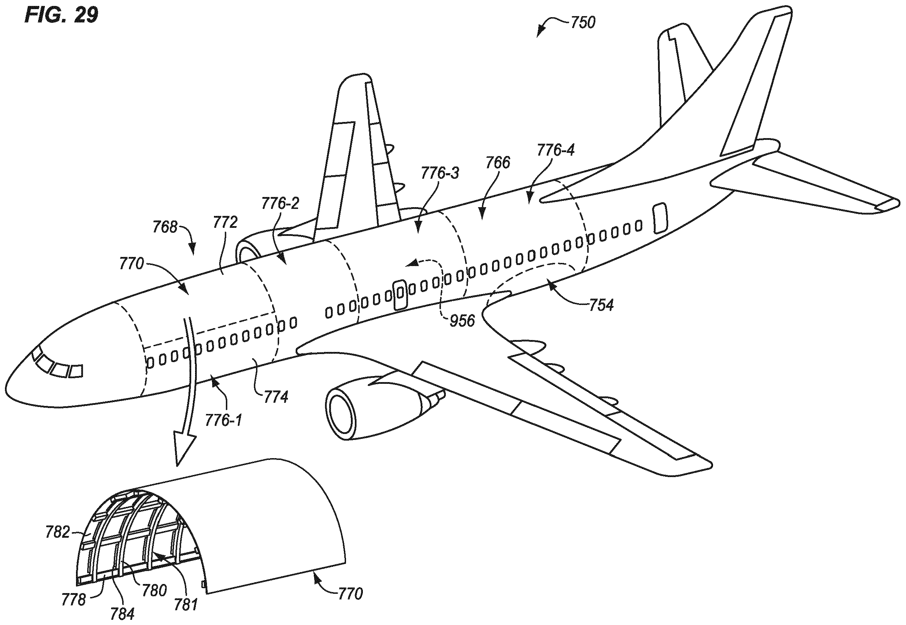

FIG. 1 is a schematic block diagram illustrating a manufacturing line 10 having a placement system 50 for fabricating or assembling a structure 12. In the examples herein, the structure 12 moves along the manufacturing line 10 in a process direction 14 to become a composite part 16 after unhardened fiber-reinforced material 152 that makes up the structure 12 is hardened. Hardening includes curing for thermoset materials or consolidating for thermoplastic materials. The structure 12 can be a portion 768, such as a half-barrel section 770, of a fuselage 766 that can be used in an aircraft 750 (shown in FIGS. 28 and 29).

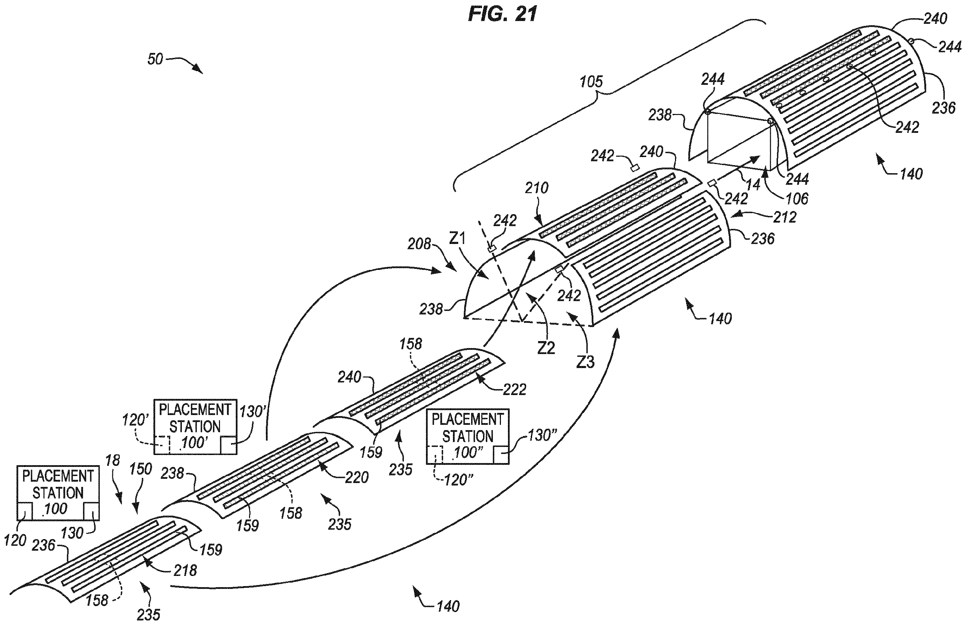

To move the structure 12 along the manufacturing line 10, a mandrel 140 moves along the manufacturing line 10 through at least the placement system 50. In some examples, the mandrel 140 includes mandrel segments 235, which are described in more detail with respect to FIG. 21.

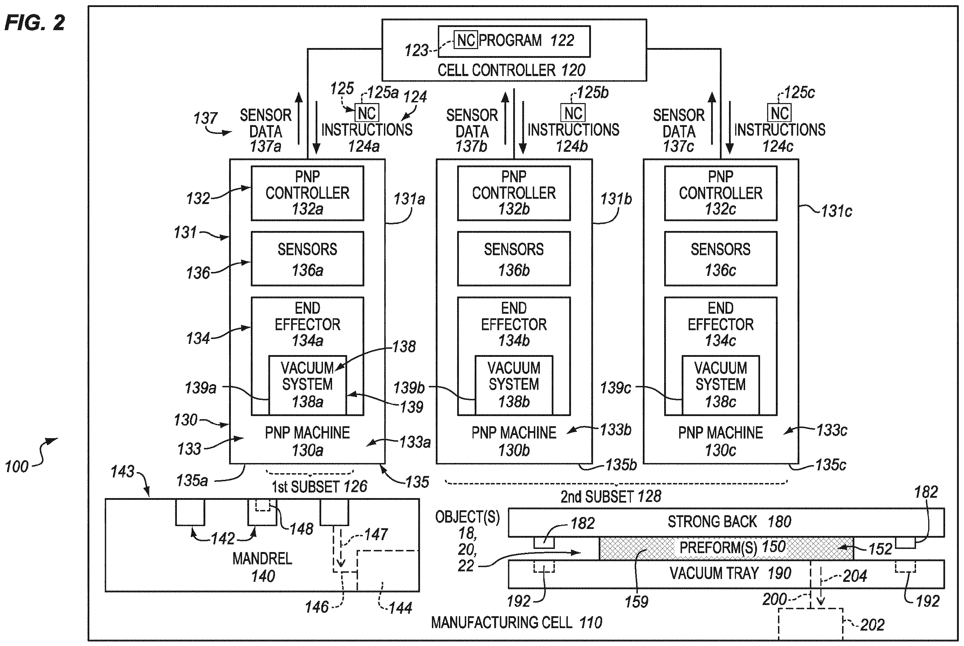

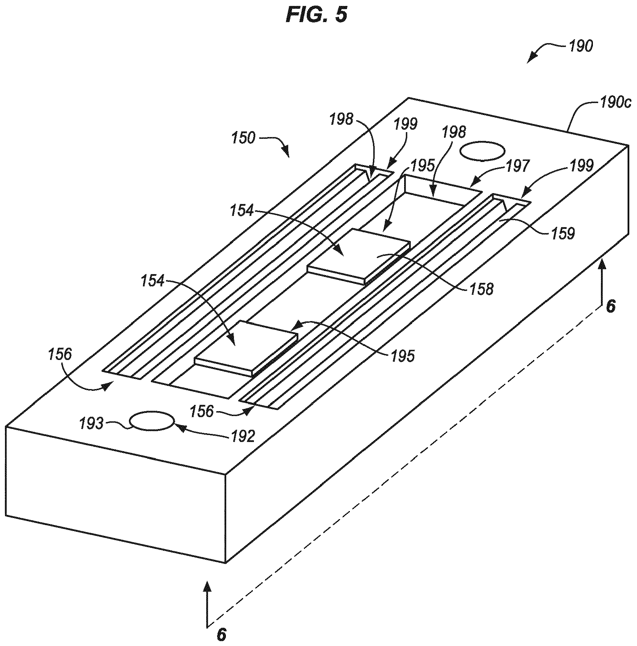

The placement system 50 fabricates or assembles the structure 12 from objects 18. The objects 18 can each include a preform 150 of unhardened fiber-reinforced material 152 (shown in FIGS. 2 and 5). The placement system 50 places the preforms 150 onto the mandrel 140 for hardening into the composite part 16. One or more of the object(s) 18 can be a first type of object 18, such as discrete objects 20, and/or a second type of object 18, such as a large object 22. The large object 22 is bigger than the discrete objects 20. Accordingly, the placement system 50 can fabricate or assemble the structure 12 from objects 18 including discrete object 20 and one or more large objects 22. In the examples described below, the large object 22 spans multiple pick-and-place (PNP) machines 130.

Referring to FIGS. 1, 5, and 18, when the objects 18 are preforms 150, the preforms 150 can be a first type of preform, such as discrete preforms 154 (e.g., frame filler preforms 158), and/or a second type of preform, such as a large preform 156 (e.g., a stringer preform 159). Accordingly, in some examples, the placement system 50 assembles the structure 12 from preforms 150 including discrete preforms 154 and one or more large preform 156. When the placement system 50 is used to make the portion 768 of the fuselage 766 as the structure 12, the discrete objects 20 can be the frame filler preforms 158 (also known as "postage stamps") and/or short stringers, and the large object 22 can be a medium or long stringer preforms 159. Because the large preform 156 is an example of the large object 22, the large preform 156 spans multiple PNP machines 130.

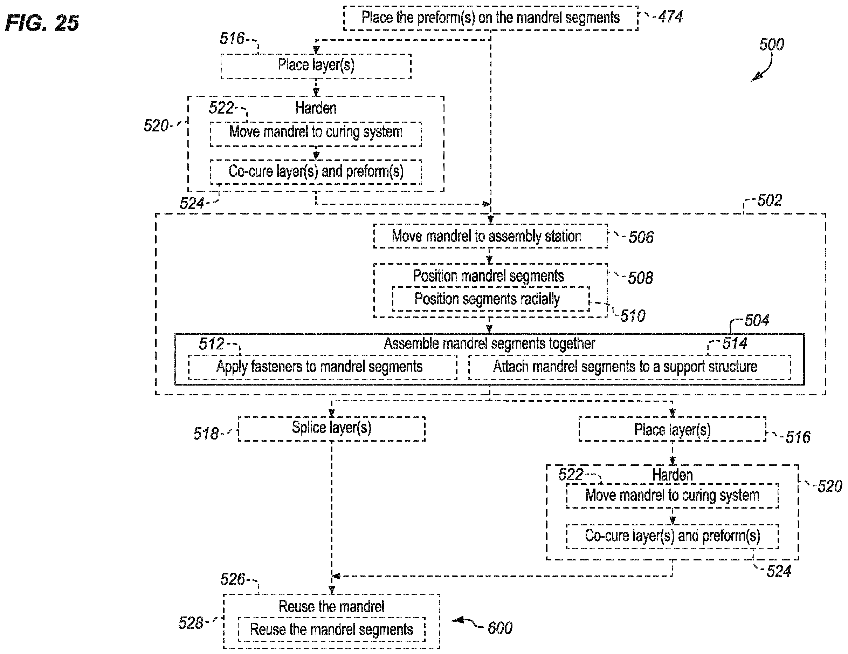

Referring again to FIG. 1, the placement system 50 includes at least a placement station 100. The placement system 50 can optionally include at least one assembly station 105. The manufacturing line 10 can further include a hardening system 60, a separation system 70, a cleaning system 80, and/or other suitable systems, such as a lamination system (not shown) or a fastener installation system (not shown). The placement system 50, hardening system 60, separation system 70, and/or cleaning system 80 can be arranged in series or parallel depending on the structure being assembled and the manufacturing processes being used along the manufacturing line 10. Although FIG. 1 shows the placement system 50, the hardening system 60, the separation system 70, and the cleaning system 80 being in sequential order, the hardening system 60 may be positioned after the separation system 70, as described in more detail with respect to FIG. 25.

The hardening system 60 is configured to harden an unhardened material, such as the unhardened fiber-reinforced material 152, into a hardened material. The hardening system 60 can cure a thermoset material and/or consolidate a thermoplastic material. For example, the hardening system 60 includes an autoclave. The hardening system 60 can also be configured to apply release films 62 to the structure 12 and/or the mandrel 140 prior to hardening the structure 12. The release films 62 can include bagging materials, peel plies, separation films, etc. In one example, release films 62, such as separation films and/or peel plies, are applied to the mandrel 140, and release films 62, such as bagging materials, are applied to the structure 12. The release films 62 can be applied to the mandrel 140 before the mandrel 140 enters the placement system 50.

After the structure 12 is hardened by the hardening system 60, the structure 12 can become a hardened structure 64, which can be the composite part 16 when the structure 12 is formed from the unhardened fiber-reinforced material 152. For example, the hardened structure 64 is a cured structure forming the composite part 16. The hardened structure 64 or composite part 16 moves along the manufacturing line 10 to receive addition manufacturing processes. For example, the composite part 16 and/or hardened structure 64 moves to a new location, such as to a different system, in the manufacturing line 10 to receive further manufacturing processes. The different system can be a fabrication or assembly system, and the further manufacturing processes can assemble the composite part 16 into a final product, such as the aircraft 750 (shown in FIGS. 28 and 29).

The separation system 70 is configured to separate (e.g., demold) the hardened structure 64 from the mandrel 140. In one example, the separation system 70 is configured to move the hardened structure 64 vertically to separate the hardened structure 64 from the mandrel 140. When the mandrel 140 is formed from mandrel segments 235, the separation system 70 is configured to separate the hardened structure 64 from the mandrel segments 235, either individually or as assembled together as the mandrel 140. The separation system 70 is further configured to separate the mandrel segments 235 from each other. When release films 62 are applied at the hardening system 60, the separation system 70 removes the release films 62 from the hardened structure 64 and/or the mandrel 140. When the mandrel 140 is formed from mandrel segments 235, the release films 62 are removed from the mandrel segments 235 after the hardened structure 64 is separated from the mandrel 140 and before the mandrel segments 235 are separated from each other.

When the mandrel 140 is reused in the placement station 100, the mandrel 140 moves in a counter-process direction 24 to be reused in the placement system 50 after the mandrel 140 is separated from the structure 12, 64. More specifically, the mandrel 140 is transported to a start position 52 for the placement system 50 and/or placement station 100. Alternatively, the mandrel 140 could stay with the structure 12, 64 and continue along the manufacturing line 10 to support the structure 12, 64 as additional assembly and manufacturing processes are performed on the structure 12, 64 until the mandrel 140 is no longer needed to support the structure 12, 64.

The cleaning system 80 is configured to clean the mandrel 140 and/or mandrel segments 235. For example, the cleaning system 80 is configured to apply at least one cleaning chemical 82 to the mandrel 140 and/or mandrel segments 235. The at least one cleaning chemical 82 can be a solvent, water, and/or soap. In one example, the at least one cleaning chemical 82 is selected from the group consisting of: solvents, water, and soap. When the at least one cleaning chemical 82 includes multiple different cleaning chemicals 82 applied by the cleaning system 80, the cleaning system 80 can apply the multiple different cleaning chemicals 82 sequentially and/or simultaneously.

In addition or as an alternative to, the cleaning system 80 includes components for scrubbing, rubbing, or other cleaning processes using, for example, moving brushes, scrubbers, etc. The cleaning devices can be used before, during, or after the at least one cleaning chemical 82 is applied. In alternative embodiment, the mandrel segments 235 are separated from each other after the mandrel 140 is cleaned; however, the mandrel segments 235 may be more thoroughly cleaned and/or cleaned in parallel if first separated from each other.

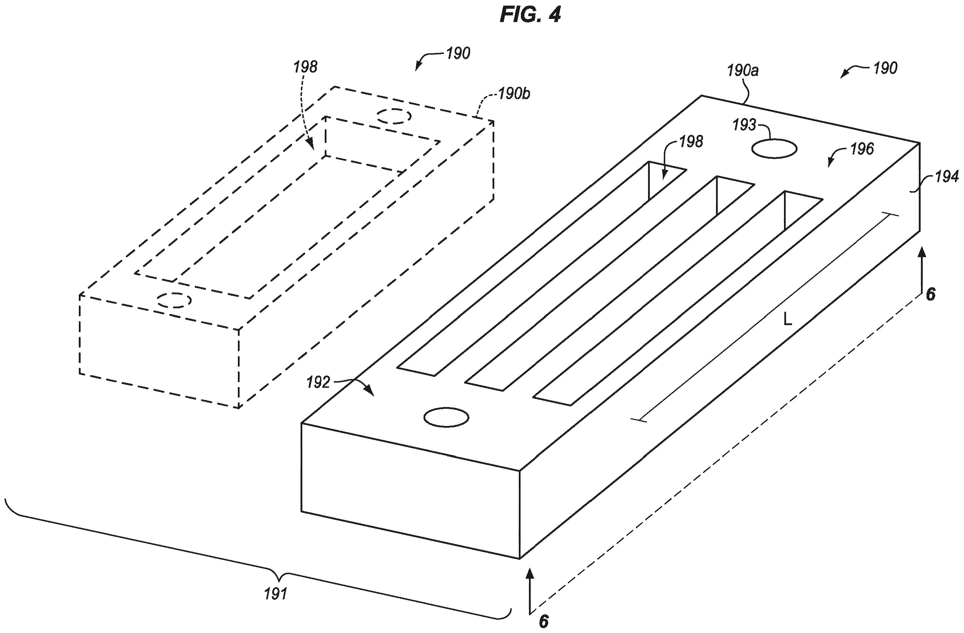

The placement system 50 includes pick-and-place (PNP) machines 130 at a placement station 100 and a cell controller 120 that is operable to perform the methods described herein. More specifically, the placement station 100 includes a PNP machine 130 and a cell controller 120. The cell controller 120 is in communication with the PNP machine 130 to perform a placement operation in the placement station 100. For example, the cell controller 120 is operatively coupled to the PNP machines 130 to place the objects 18 on the mandrel 140 using the PNP machines 130. The placement station 100 can further include a strong back 180 and/or a tray 190. The tray 190 is configured to hold one type of object 20 or 22 or both types of objects 20 and 22, as described in more detail with respect to FIGS. 4 and 5.

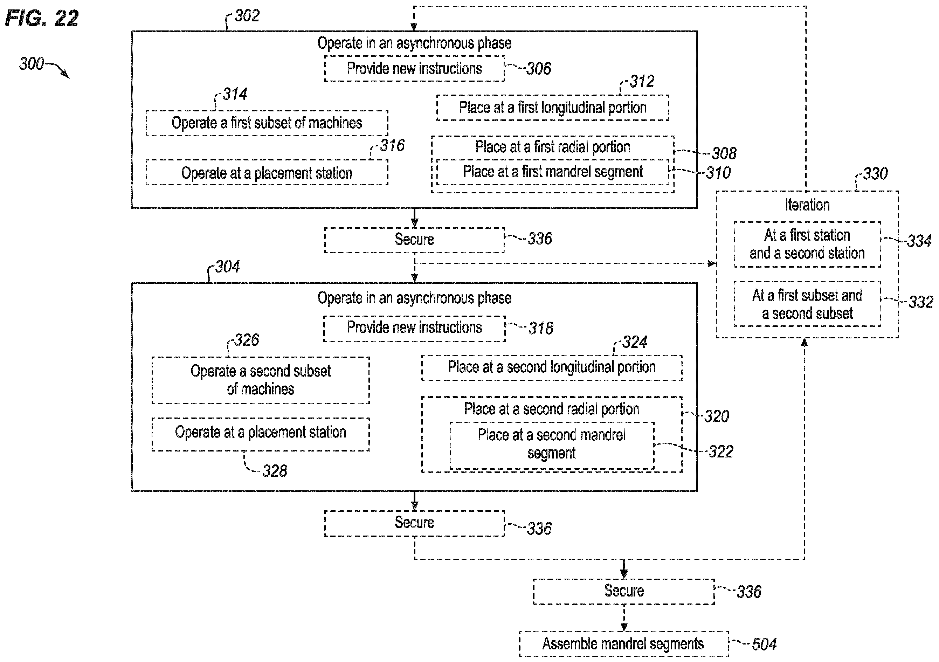

The placement system 50 includes one or more placement station(s) 100. When more than one placement station 100, 100' is included in the placement system 50, the PNP machines 130, 130' can be distributed across multiple placement stations 100, 100'. The multiple placement stations 100, 100' can be programmed and/or arranged to perform parallel operations or can be programmed and/or arranged to perform a series of operations. The PNP machines 130, 130' in the multiple placement stations 100, 100' can be operated in the same mode or different modes, as described in more detail with respect to FIG. 22.

When the placement system 50 includes a first placement station 100 and a second placement station 100', each placement station 100, 100' can includes its own cell controller 120 and 120' or have a common cell controller 120 that controls multiple placement stations 100, 100'. In one example, the placement stations 100, 100' have a common cell controller 120 when the placement stations 100, 100' are in the same manufacturing cell 110 (shown in FIG. 2); however, placement stations 100, 100' in different manufacturing cells 110 can be operated by the same cell controller 120. When each placement station 100, 100' includes a respective cell controller 120, 120', the cell controllers 120, 120' are configured to communicate with each other to coordinate operations of PNP machines 130, 130' in different placement stations 100, 100'.

The placement system 50 can further include one or more assembly stations 105. When the mandrel 140 includes mandrel segments 235 the placement system 50 includes the assembly station 105. The assembly station 105 is configured to assemble the mandrel segments 235 together to form the mandrel 140. The assembly station 105 includes a mandrel support structure 106. The mandrel support structure 106 is configured to support the mandrel segments 235 before, during, or after the mandrel segments 235 are assembled together. Even when the mandrel 140 is not formed of mandrel segments 235, the mandrel support structure 106 can be assembled to the mandrel 140 to provide support to the mandrel 140 during manufacturing processes. The mandrel support structure 106 is also configured to move with the mandrel 140 to subsequent systems along the manufacturing line 10. The mandrel support structure 106 can be detached from the mandrel 140 and/or mandrel segments 235 when support is no longer needed, wherever that occurs along the manufacturing line 10. While the assembly station 105 is shown as being after the placement station 100, the assembly station 105 can be before the placement station 100 when the mandrel 140 is to be supported by the mandrel support structure 106 during placement operations performed at the placement station 100.

When more than one assembly station 105, 105' is included in the placement system 50, the assembly stations 105, 105' can be programmed and/or arranged to perform parallel operations or can be programmed and/or arranged to perform a series of operations. When the assembly station 105 is omitted from the placement system 50, the placement system 50 can be considered to include the PNP machine 130 and the cell controller 120 of the placement station 100.

The mandrel 140 is configured to move relative to the placement station 100, and consequently through the placement system 50. More specifically, the mandrel 140 moves in the process direction 14 relative to the placement station 100. The process direction 14 is the direction the mandrel 140 and subassemblies move along the manufacturing line 10 as materials, such as the unhardened fiber-reinforced materials 152, and subassemblies, such as the structure 12, 64, become a final assembly, such as the aircraft 750 (shown in FIG. 28). At times, the mandrel 140 can move in the counter-process direction 24 to or at an angle to the process direction 14 depending on which manufacturing processes are to be completed along the manufacturing line 10. When the mandrel 140 is at the placement system 100, the placement system 100 is considered as including the mandrel 140, but, at times, the placement system 50 may not have the mandrel 140 therein. Further, the cell controller 120 is in communication with the mandrel 140 to move the mandrel 140 with respect to the placement station 100.

FIG. 2 is a schematic block diagram of the placement station 100 that can be used in the placement system 50 shown in FIG. 1. The placement station 100 is configured to coordinate the action of PNP machines 130 in an illustrative embodiment. Placement station 100 comprises any system, device, or component operable to place preforms (e.g., for stringers) onto the mandrel 140 for later hardening into an integral composite part, such as the composite part 16 (shown in FIG. 1). In this embodiment, placement station 100 has been enhanced to selectively synchronize the actions of PNP machines 130 in order to increase the rate of placement of the preforms 150 onto the mandrel 140.

The placement station 100 includes PNP machines 130 and a cell controller 120. More specifically, the placement stations 100 includes multiple (i.e., two or more) PNP machines, such as three or more PNP machines 130a, 130b, and 130c. The PNP machines 130 can be divided into subsets that each have one or more PNP machines 130. For example, the PNP machines 130 are divided into a first subset 126 of PNP machines 130 and a second subset 128 of PNP machines 130. As illustrated in FIG. 2, the first subset 126 includes a first PNP machine 130a, and the second subset 128 includes a second PNP machine 130b and a third PNP machine 130c. The first subset 126 and second subset 128 are illustrated as having one PNP machine and two PNP machines for clarity only, and each subset 126 and 128 can include any number of PNP machines 130, whether the PNP machines 130 in a subset are adjacent or not. The PNP machines 130 in the first subset 126 are distinct from the PNP machines 130 in the second subset 128. However, PNP machines 130 can be reassigned between the first subset 126 and the second subset 128 depending on the structure 12 (shown in FIG. 1) being assembled and/or the placement methods being performed.

The cell controller 120 is operative to control the PNP machines 130. More specifically, the cell controller 120 and the PNP machines 130 are in communicatively coupled together such that instructions 124 are communicated from the cell controller 120 to the PNP machine(s) 130 and data 137 are communicated from the PNP machine(s) 130 to the cell controller 120. For example, when the placement station 100 includes three PNP machines 130a, 130b, and 130c, the cell controller 120 receives first data 137a, second data 137b, and third data 137c from each of the PNP machines 130a, 130b, and 130c.

The placement station 100 and/or the PNP machines 130 are within a manufacturing cell 110. The cell controller 120 is configured to control the operations, such as placement operations, that occur with the manufacturing cell 110. The cell controller 120 is also operative to assign each PNP machine 130 in the manufacturing cell 110 to the first subset 126 or the second subset 128. The cell controller 120 is operative to reassign the PNP machines 130 to a different subset 126 and/or 128 as needed.

During assembly of the structure 12, PNP machines 130 pick up and place the objects 18, such as the preforms 150, onto the mandrel 140. The preforms 150 can each be formed of an unhardened fiber-reinforced material 152. The preforms 150 discussed herein may be hardened into short stringers, medium stringers that span multiple of the PNP machines 130, or even long stringers that span many of the PNP machines 130. While objects 18 in the form of a stringer preform 159 are illustrated in FIG. 1 (e.g., having internal bladders, gap fillers, and other components not shown), in further embodiments the objects 18 may comprise any suitable components, such as other preforms, frame fillers, isolation plies, etc. Stated succinctly, the PNP machines 130 are disposed within reach of the discrete objects 20 (e.g., small preforms and/or discrete preforms 154, such as frame filler preforms 158 as shown in FIG. 5), the mandrel 140, and large objects 22 (e.g., large preforms 156) that span multiple PNP machines 130. Phrased another way, the PNP machines 130 are disposed within reach of the objects 18 and the mandrel 140. When the objects 18 are preforms 150, the PNP machines 130 are disposed within reach of the mandrel 140 and the preforms 150. And, the mandrel 140 moves with respect to the PNP machines 130, for example, in the process direction 14.

Each PNP machine 130 can be similarly configured and includes a body 131 having a lower end 133. The body 131 is configured to house the components of the PNP machine 130. Further, each PNP machine 130 includes a PNP controller 132, sensor(s) 136, and end effector 134. The PNP controller 132, sensor(s) 136, and end effector 134 can be positioned in and/or attached to the body 131. In some embodiments, the sensors 136 are included in the body 131 and in the end effector 134.

When the placement station 100 includes three PNP machines 130a, 130b, and 130c, the first PNP machine 130a includes a first body 131a, a first lower end 133a, one or more first sensors 136a, and a first end effector 134a. Similarly, the second PNP machine 130b includes a second body 131b, a second lower end 133b, one or more second sensors 136b, and a second end effector 134b and the third PNP machine 130c includes a third body 131c, a third lower end 133c, one or more third sensors 136c, and a third end effector 134c.

The end effector 134 can optionally move along a body 131 of the PNP machine 130 and/or extend and retract from the body 131 of the PNP machine 130. In one example, the body 131 includes a track or other device that enables the end effector 134 to move at least vertically along the body 131. Additionally or alternatively, the end effector 134 is positioned near the lower end 133 of the body 131 and at least a portion of the end effector 134 extends vertically out of the body 131. For example, the end effector 134 can move vertically to the lower end 133 of the body 131 and a portion of the end effector 134, such as the gripping system 139, extends vertically from the body 131 and retracts vertically to the body 131.

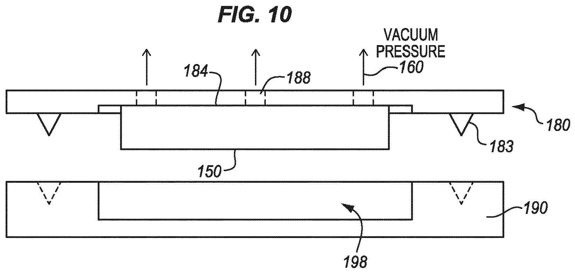

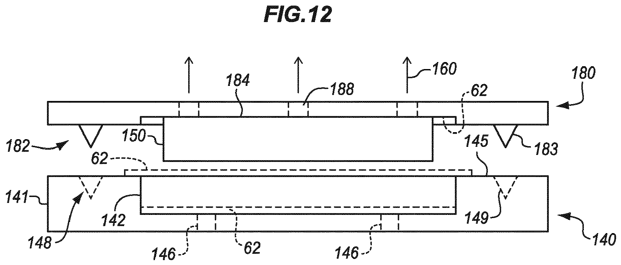

The end effector 134 includes at least a gripping system 139, such as a vacuum system 138. In an alternative embodiment, the gripping system 139 and/or the vacuum system 138 is included in the PNP machine 130 separately from the end effector 134. In a particular example, the PNP machines 130 include vacuum systems 138 to apply vacuum pressure 160 (shown in FIGS. 10 and 12) that holds the large preform 156 and discrete preforms 154. The PNP machine 130 has a distal end 135. The distal end 135 can be defined by the end effector 134 and/or gripping system 139 when the end effector 134 is positioned near or below the lower end 133 of the PNP machine 130 and/or when extended from the PNP machine 130.

When the placement station 100 includes three PNP machines 130a, 130b, and 130c, the first PNP machine 130a includes a first distal end 135a, a first gripping system 139a, and/or a first vacuum system 138a. Similarly, the second PNP machine 130b includes a second distal end 135b, a second gripping system 139b, and/or a second vacuum system 138b and the third PNP machine 130c includes a third distal end 135c, a third gripping system 139c, and/or a third vacuum system 138c.

The end effector 134 can include additional components to perform operations other than gripping or can be removable and replaceable in the PNP machine 130 to enable a different type of end effector to be coupled to the PNP machine 130. The sensor(s) 136 are configured to supply the data 137 to the cell controller 120 to enable control of the associated PNP machine 130. The sensor(s) 136 can be a position sensor(s) (e.g., to measure or determine a position of the end effector 134 and/or PNP machine 130). Alternatively or additionally, the sensor(s) can be pressure sensor(s) (e.g., to measure the vacuum pressure applied by the vacuum system 138), line break sensor(s), hydraulic sensor(s), image sensor(s) (e.g., a camera), radio frequency sensor(s) (e.g., RFID and/or RADAR), light sensor(s) (e.g., LIDAR), bar code or QR code reader, etc.

During pick and placement operation, PNP machines 130 may operate the gripping system 139 at an end effector 134 to place the strong back 180 over an object 18 disposed in the tray 190. The PNP machines 130 may move the object 18 via the strong back 180 into position at mandrel 140, such as within a cut-out 142 of the mandrel 140 dimensioned to receive the object 18. The gripping system 139 can be the vacuum system 138 that is configured to apply the vacuum pressure 160. For example, the vacuum system 138 selectively applies the vacuum pressure 160. The vacuum pressure 160 is applied to or thorough the strong back 180 to grip the object 18. Alternatively, the vacuum pressure 160 is applied to the object 18 when the strong back 180 is not included in the placement station 100. The tray 190 can be a vacuum tray configured to apply vacuum pressure to the object(s) 18 to maintain the position of the object(s) 18 with respect to the tray 190.

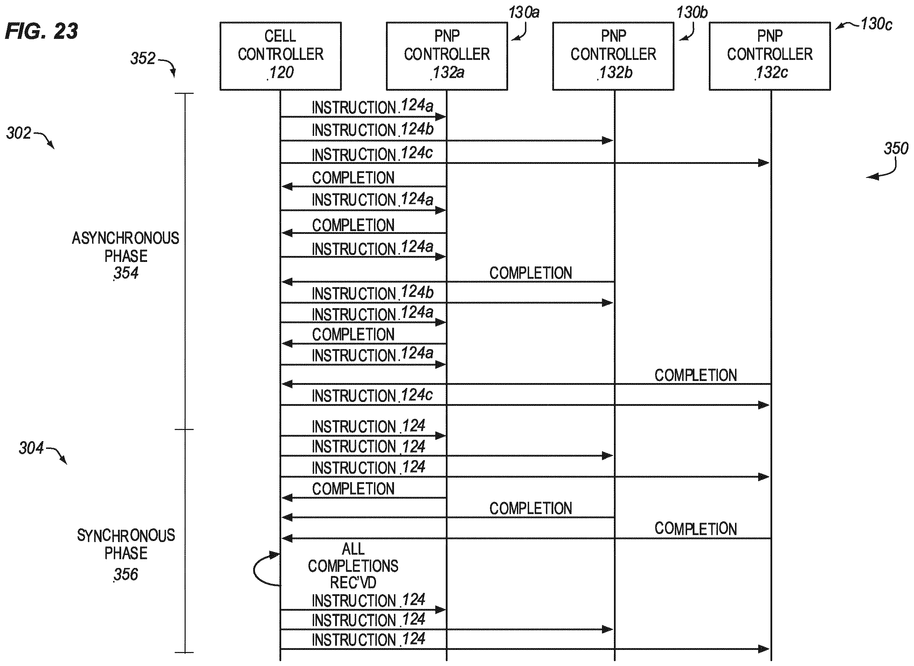

The cell controller 120 coordinates the actions of PNP machines 130 by selectively operating the PNP machines 130 in synchronous and asynchronous modes, as described in more detail with respect to FIGS. 22 and 23. A cyclical placement operation (e.g., operation 352 shown FIG. 23) includes a series of phases where the PNP machines 130 are operated in a particular mode during each phase. When the PNP machines 130 perform the cyclical placement operation, the PNP machines 130 are operated in the synchronous mode during a synchronous phase of a cycle, and the PNP machines 130 are operated in the asynchronous mode during an asynchronous phase of the cycle.

During synchronous modes, the cell controller 120 coordinates the provisioning of instructions 124 from a program 122 to multiple PNP machines 130. In one example, the program 122 is a Numerical Control (NC) program 123 and the instructions 124 are NC instructions 125. The instructions 124 are a series of instructions that are sent to each PNP machine 130 at appropriate times. Accordingly, the instructions 124 can be formatted as a series of instructions that include a prior instruction 124 and a new instruction 124 sent after the prior instruction 124, such as the series shown in FIG. 23. The program 122 includes sets of instructions 124 to correspond to different types of mandrels 140 and/or mandrel segments 235 (shown in FIG. 21) and to different types of objects 18 to be placed by the PNP machines 130.Further, the vacuum system 138 selectively applies the vacuum pressure 160 according to the program 122.

In one embodiment, cell controller 120 withholds the transmission of new instructions 124 to the PNP machines 130 until each of the PNP machines 130 has completed its current instruction. This enables the PNP machines 130 to lift, carry, and transport a large object 22 (e.g., such as a stringer preform 159 to form a medium stringer, a long stringer, etc.) in a coordinated fashion. During asynchronous modes, the cell controller 120 provides instructions from the program 122 to each of the PNP machines 130 as quickly as each PNP machine 130 completes an operation, without waiting upon progress reports from other PNP machines 130a, 130b, or 130c.

The first subset 126 of PNP machines 130 can be operated in the synchronous mode, and the second subset 128 of PNP machines 130 can be operated in the asynchronous mode. Alternatively, all of the PNP machines 130 are operated in the synchronous mode or in the asynchronous mode. In some examples, a subset 126 and/or 128 is distributed across multiple placement stations 100, 100'. For example, a first PNP machine 130 of a subset 126 can be in the first placement station 100, and a second PNP machine 130' of the subset 126 can be in the second placement station 100'.

When the placement system 50 includes multiple placement stations, such as a first placement station 100 and a second placement station 100', the cell controller 120 and/or 120' can operate the PNP machines 130 in the first placement station 100 to operate in the synchronous mode or in the asynchronous mode, and the cell controller 120' operates the PNP machines 130' in the second placement station 100' to operate in the other mode such that each placement station 100, 100' operates in a different mode. The cell controller 120 and/or 120' can alternatively operate the PNP machines 130, 130' in multiple placement stations 100, 100' to operate in the same mode.

The PNP controllers 132 manage the operations of each PNP machine 130 and interpret received instructions 124 to control the end effector 134. The PNP controllers 132 receive input from the sensors 136 (e.g., vacuum sensors, position sensors, line break sensors, hydraulic sensors, LIDAR sensors, etc.) and may report the data 137 to the cell controller 120 for interpretation. Based on the data 137 from the sensor(s) 136, the cell controller 120 may pause operations, notify a technician, or modify the instructions 124 that are provided to the PNP machines 130. The cell controller 120 and the PNP controllers 132 may be implemented, for example, as custom circuitry, as a hardware processor executing programmed instructions, or some combination thereof.

The placement station 100 can further include the tray 190. The tray 190 can be moved out of the placement station 100 to load preform(s) 150 into the tray 190, or the preform(s) 150 can be loaded into the tray 190 while the tray 190 is in the placement station 100. The placement system 100 can further include the strong back 180. In embodiments where the PNP machine(s) 130 directly holds the preform(s) 150, the strong back 180 can be moved out of the placement station 100. The vacuum system 138 selectively applies vacuum pressure 160 (e.g., suction) to the strong back 180 and/or to the preform 150 (e.g., directly or via the strong back 180) in accordance with instructions 124 in the program 122.

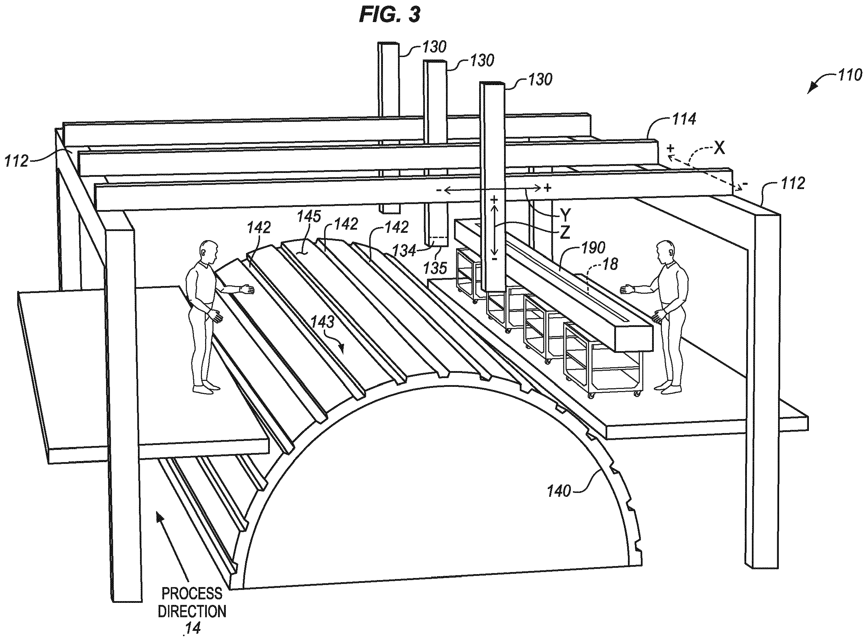

The mandrel 140 is moveable into and through the placement station 100, and accordingly through the manufacturing cell 110, relative to the PNP machines 130. Such movement is described in more detail with respect to FIG. 3. The mandrel 140 has a contoured cross-section 143 (shown in more detail in FIG. 3). More specifically, the mandrel 140 includes cut-outs 142 that define the contoured cross-section 143 of the mandrel 140. The cut-outs 142 can be channels, grooves, recesses, or other contours that correspond to the objects 18 that are to be placed, fabricated, and/or assembled on the mandrel 140. Optionally, the mandrel 140 may have an associated vacuum system 144 to secure the preforms 150 in the cut-outs 142. Vacuum channel 146 can be defined through the mandrel 140 to provide flow communication with the vacuum system 144 such that the vacuum system 144 applies a vacuum pressure 147 to a cut-out 142 via a respective vacuum channel 146.

The optional vacuum system 144 is included in the placement system 50, the placement station 100, and/or the mandrel 140. When the vacuum system 144 is included in the placement station 100, the mandrel 140 is connected in flow communication with the vacuum system after the mandrel 140 is positioned in the placement station 100 and is disconnected from the vacuum system 144 when the mandrel 140 is moved out of the placement station 100. When the placement system 50 includes the assembly station 105, the placement system 50 includes the vacuum system 144 so the vacuum pressure 147 can be applied at the placement station 100 and the assembly station 105 until the mandrel 140 moves out of the placement system 50 and is disconnected from the vacuum system 144. However, the placement system 50 could include separate vacuum systems 144 for the placement station 100 and assembly station 105 such that mandrel 140 is disconnected and reconnected to vacuum systems 144 as the mandrel 140 moves from the placement station 100 to the assembly station 105. As an alternative to connecting and disconnecting the mandrel 140 with the vacuum system 144, the vacuum system 144 can be integrated into the mandrel 140 and moves with the mandrel 140 along the manufacturing line 10 through the various systems.

When the mandrel 140 includes mandrel segments 235, each mandrel segment 235 can be connected and disconnected from respective vacuum systems 144 or a common vacuum system 144 at the placement system 50 and/or placement station 100. Alternatively, each mandrel segment 235 includes a respective vacuum system 144 that travels with each mandrel segment 235.

To assist with aligning the strong back 180 to the tray 190 and to the mandrel 140, the strong back 180 includes strong back indexing elements 182, the tray 190 includes tray indexing elements 192, and the mandrel 140 includes mandrel indexing elements 148. The strong back indexing elements 182 are configured to align with the tray indexing elements 192 and the mandrel indexing elements 148. In a particular embodiment, the strong back indexing elements 182 engage with (e.g., fit into) the mandrel indexing elements 148 and the tray indexing elements 192.

FIG. 3 is a perspective view of the placement station 100 showing the PNP machines 130 disposed in the manufacturing cell 110 in an illustrative embodiment. The manufacturing cell 110 includes a frame 112 and supports 114. The supports 114 are coupled to the frames 112 and are configured to support the PNP machines 130. As shown in FIG. 3, the PNP machines 130 are supported by the frame 112 and supports 114. The PNP machines 130 travel along the frame 112 and the supports 114 in order to acquire and transport preforms 150 (shown in FIG. 2) from the tray 190 for placement onto the mandrel 140 having the contoured cross-section 143 and the cut-outs 142 for receiving stringers.

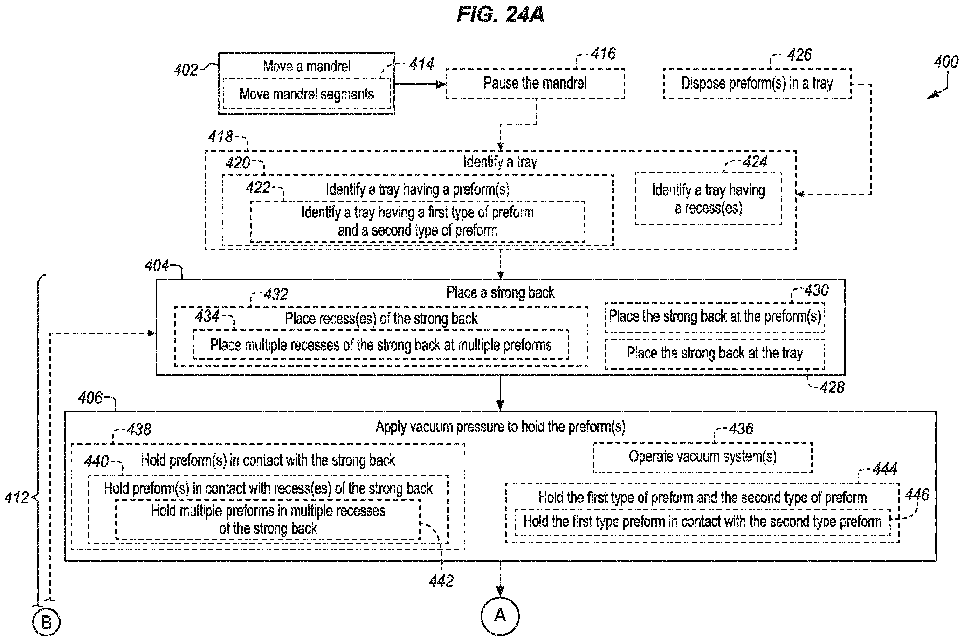

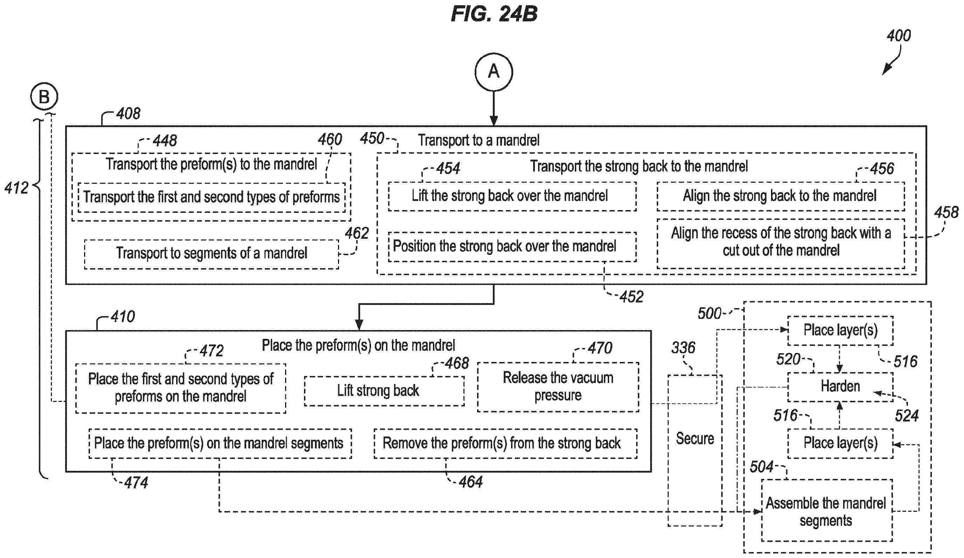

More specifically, the PNP machines 130 travel in Y directions along the supports 114. The supports 114 can optionally move in X directions along the frames 112. When the supports 114 can move in the X directions on the frames 112, the program 122 in the cell controller 120 includes instructions 124 that avoid collisions between the PNP machines 130 and/or end effectors 134. Further, the PNP machines 130 and/or end effectors 134 are configured to move vertically in the Z direction with respect to the supports 114. In one example, the PNP machine 130 moves in the Z direction along a track or other device that can move the PNP machine 130 vertically. Alternatively or additionally, the end effector 134 and/or gripping system 139 extends and retracts in the Z direction with respect to the PNP machine 130 as described above. As described in more detail with resepct to FIGS. 24A and 24B, at least the distal end 135 of the PNP machine 130 and/or the end effector 134 moves in the Y direction and Z direction, and optionally in the X direction, to be moved into place at the tray 190 and to transport an object 18 from the tray 190 to the mandrel 140.

FIG. 4 is a perspective view of a first example tray 190 that can be used with the placement system 50 shown in FIGS. 1 to 3 in an illustrative embodiment. The tray 190 is configured to hold at least one preform 150 (shown in FIG. 2) prior to application to the mandrel 140 (shown in FIGS. 1 to 3). The tray 190 stores preforms 150 for stringers 778 (shown in FIG. 29) or other objects 18, which will be placed onto the mandrel 140.

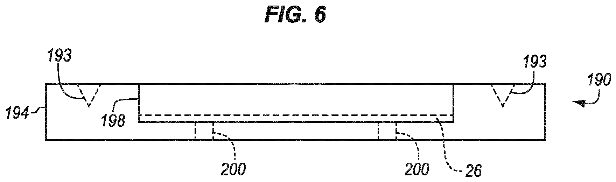

The tray 190 includes a body 194 having a surface 196 and one or more recesses 198 defined in the surface 196. The recess(es) 198 are configured for storing the object(s) 18. The tray 190 further includes indexing cups 193 as the tray indexing elements 192. The indexing cups 193 facilitate alignment of the strong back 180 with the tray 190. The recesses 198 have a length L. In some embodiments, a layer of Fluorinated Ethylene Propylene (FEP) or another release film 26 (shown in FIG. 6) is positioned in the recess 198 to facilitate parting of the preform 150 from the tray 190.

The tray 190 can be a first type of tray 190a that includes multiple recesses 198. Each recess 198 is configured to store a corresponding preform 150. Each recess 198 can be the same depth or at least one recess 198 can be deeper or shallower than the other recesses 198. In the example shown in FIG. 4, the multiple recesses 198 are similarly configured to store multiple of the same type of preform 150. For example, the tray 190a includes multiple recesses 198 that are each configured to store a corresponding large preform 156 (shown in FIG. 5) such that the tray 190a stores multiple large preforms 156. Alternatively, the tray 190 can be a second type of tray 190b that includes one recess 198. The recess 198 can store one preform or multiple preforms 150. When the recess 198 stores multiple preforms 150, the preforms 150 can be multiple discrete preforms 154 (shown in FIG. 5), multiple large preforms 156, or a combination of discrete preform(s) 154 and large preform(s) 156. For example, the tray 190b can stores an array of discrete preforms 154 within the same recess 198.

The two types of trays 190a, 190b can be a set 191 of trays 190 that can be used with the placement station 100. When the set 191 is used, the first type of tray 190a can store multiple stringer preforms 159 (shown in FIG. 5) and the second type of tray 190b can store multiple frame filler preforms 158 (shown in FIG. 5).

FIG. 5 is a perspective view of a second example tray 190 that can be used with the placement system 50 shown in FIGS. 1 to 3, including example preforms 150 that may be placed by the placement station 100. The preforms 150 include the large preforms 156 illustrated as stringer preforms 159 and discrete preforms 154 illustrated as frame filler preforms 158. The tray 190 of FIG. 5 is a third type of tray 190c includes recesses 198 configured to store one or more large preforms 156 and the discrete preforms 154. More specifically, the third type of tray 190c includes recesses 198 having a first shape 197 and a second shape 199. The first shape 197 corresponds to the discrete preforms 154, and the second shape 199 corresponds to the large preforms 156.

Having recesses of two different shapes, such as the first shape 197 and the second shape 199, allows the third type of tray 190c to store kitted preforms 150. When kitted, the discrete preforms 154 are arranged for placement at locations 781 in which a frame 780 (shown in FIG. 29) is to be installed relative to the large preform(s) 156 (i.e., relative to the stringers 778 (shown in FIG. 29) formed from the stringer preforms 159). In other words, the discrete objects 20 are disposed in the tray 190c with the large object(s) 22 at locations 195 in which the frame 780 is to be installed relative to the large object(s) 22. The locations 781 of the fuselage 766 correspond to locations 195 in the tray 190 either at full scale or at a reduced scale. When the correspondence is full scale, the preforms 154 and 156 are not moved relative to each other when being transported from the tray 190 to the mandrel 140. When the correspondence is at a reduced scale, the preforms 154 and 156 can be spread farther apart to transition to full scale as the preforms 154 and 156 are moved from the tray 190 to the mandrel 140.

In the example of FIG. 5, the discrete preforms 154 are disposed at locations 195 in which the frame 780 is to be installed relative to the large preforms 156. More specifically, the frame filler preforms 158 are positioned at the locations 195 in the recess 198 that correspond to where a frame 780 will be located with respect to the stringers 778 formed from the stringer preforms 159. For example, stringer preforms 159 are stored in each recess 198 having the second shape 199, and frame filler preforms 158 are stored in the recess 198 having the first shape 197 at the locations 195.

When the preforms 150 are kitted, the cell controller 120 operates the PNP machines 130 to transport the large preform(s) 156 and the discrete preforms 154 while maintaining the arrangement of the large preforms(s) 156 and the discrete preforms 154 with respect to each other. Accordingly, the kitted arrangement in the tray 190c is maintained from the tray 190c to placement on the mandrel 140.

As an alternative to kitting, an array of discrete preforms 154 fill the recess 198 with the first shape 197, and the PNP machines 130 pick each discrete preform 154 from the tray 190c and place the discrete preform 154 at a particular position on the mandrel 140 with respect to the large preforms 156 and other discrete preforms 154. This example enables more discrete preforms 154 to be stored in the tray 190c than when the discrete preforms 154 are spaced apart at the locations 195 in the recess 198. However, kitting the preforms 150 can ensure that the appropriate number of preforms 150 are at the placement station 100 for the particular part of the structure 12 that is currently being assembled.

FIGS. 6-14 illustrate transfer of a preform 150 from a tray 190 to a strong back 180, and from a strong back 180 to a mandrel 140 in an illustrative embodiment.

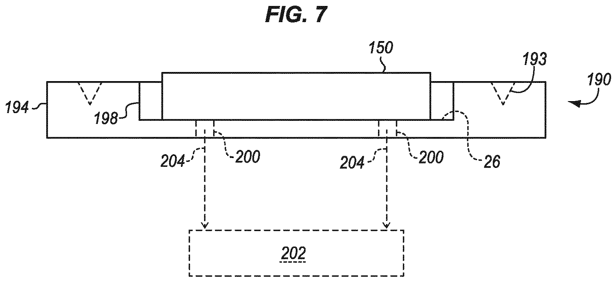

FIG. 6 is a side cross-sectional view of the tray 190 shown in FIGS. 4 and 5 taken at line 6-6 without the preform(s) 150 present. In FIG. 6, the tray 190 awaits loading with an object 18 (shown in FIGS. 1 and 2). Tray vacuum channels 200 are optional and shown in FIG. 6. Each recess 198 of the tray 190 can have one or more vacuum channels 200 extending from the recess 198 through the body 194. The vacuum channels 200 are configured to provide flow communication between the respective recess 198 and a vacuum system 202 to apply vacuum pressure 204 (shown in FIG. 7). FIG. 6 also illustrates the optional release film 26 that can be positioned in the recess(es) 198 to facilitate removal of the preform 150 (shown in FIG. 7) from the tray 190.

FIG. 7 is a side cross-sectional view of the tray 190 shown in FIG. 6 having a preform 150, such as the preform(s) shown in FIG. 5. In FIG. 7, the preform 150 has been loaded into the recess 198 (e.g., by an end effector of an automated machine, by a technician, etc.). This may be performed by laying up the preform 150 into the recess 198 via the operation of a tape laying machine, physically picking up the preform 150 from a layup mandrel and placing the preform 150 into the recess 198, etc. FIG. 7 also illustrates the vacuum pressure 204 that can be optionally applied to the preform 150 positioned in the recess 198. When used, the vacuum pressure 204 is applied through the vacuum channels 200 by the vacuum system 202 (shown in FIG. 2).

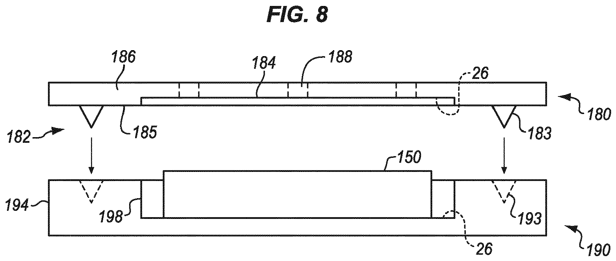

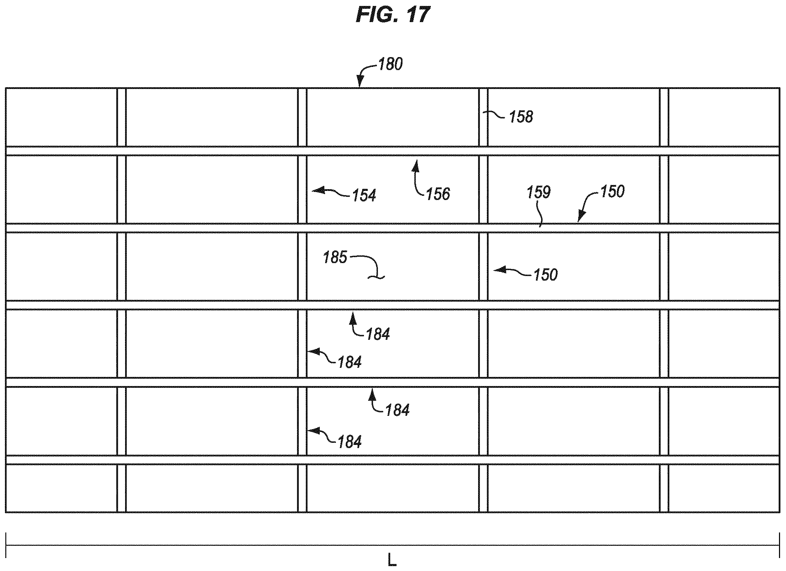

FIG. 8 is a side cross-sectional view of the tray 190 shown in FIGS. 6 and 7 and a strong back 180 that can be used with placement system 50 shown in FIGS. 1 to 3. In FIG. 8, the strong back 180 is disposed over the tray 190. The strong back 180 includes a recess 184 for receiving the preform 150. More specifically, the strong back 180 includes a body 186 having a surface 185 and one or more recesses 184 defined in the surface 185. The strong back 180 can include a recess 184 for each preform 150 to be removed from the tray 190 and/or the same number of recesses 184 as the number of tray recesses 198. In a particular example, the tray 190 stores multiple preforms 150 and the strong back 180 includes multiple recesses 184. An example of the strong back 180 including multiple recesses 184 is shown in FIG. 17. The recess 184 may also be loaded with the optional release film 26. In further embodiments, the strong back 180 may be dimensioned to carry multiple preforms 150 at once from the tray 190.

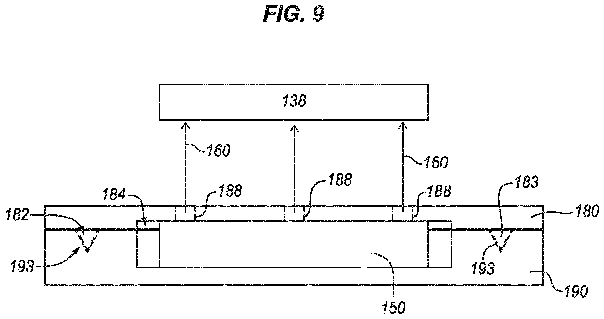

The strong back 180 further includes indexing pins 183 as the strong back indexing elements 182. The indexing pins 183 are for aligning the strong back 180 with the tray 190. Each indexing pin 183 has a shape that corresponds to the shape of the indexing cups 193 of the tray 190. For example, each indexing pin 183 can be configured as a cone when the cups 193 are conically-shaped holes. Accordingly, each indexing pin 183 can be received in a respective indexing cup 193 when the strong back 180 engages with the tray 190 (see FIG. 9).

Vacuum channels 188 are defined through the body 186 extending from the recess 184. The vacuum channels 188 are configured to provide flow communication between the recess 184 and the vacuum system 138 of the PNP machine 130 (shown in FIG. 2). The strong back 180 can include one or more vacuum channels 188 per recess 184. When the strong back 180 includes more than one recess 184, the strong back 180 also includes more than one vacuum channel 188 so at least one vacuum channel 188 is associated with each recess 184. The vacuum channels 188 are coupled with the recess 184. The vacuum channels 188 enable vacuum pressure 160 (shown in FIG. 10) applied by an end effector 134 of a PNP machine 130 (shown in FIG. 2) to suction the preform 150 into place on the strong back 180. Each vacuum channel 188 can be operated independently or with other vacuum channels 188 depending on which types, number, and/or sizes of preform(s) 150 are being picked up by the strong back 180. For example, only vacuum channels 188 where a preform 150 is being held are activated while vacuum channels 188 that do not have a preform 150 associated therewith are not activated.

FIG. 9 is a side cross-sectional view of the strong back 180 of FIG. 8 engaged with the tray 190 of FIG. 8. The strong back indexing elements 182 are configured to engage with the tray indexing elements 192 as the strong back 180 moves toward the tray 190. More specifically, the indexing pins 183 of the strong back 180 are shaped to contact the indexing cups 193 of the tray 190 to guide the strong back 180 with respect to the tray 190 to align the recess(es) 184 of the strong back 180 and the recess(es) 198 of the tray 190.

For example, the indexing pins 183 and the indexing cups 193 are tapered, such as being conically shaped, to allow more tolerance in the misalignment between the strong back 180 and the tray 190 initially and reduce the misalignment as the strong back 180 and the tray 190 move closer together, until the indexing pins 183 are centered in the indexing cups 193 when the strong back 180 is in position with respect to the tray 190 to begin holding and lifting the preform 150. Alternatively, the tray 190 includes indexing pins and the strong back 180 includes indexing cups that functions to align the tray 190 and strong back 180 as described.

When the strong back 180 is aligned with the preform 150 and/or tray 190, the vacuum pressure 160 is applied through the vacuum channels 188. For example, the cell controller 120 instructs the vacuum system(s) 138 to activate to apply the vacuum pressure 160. When the vacuum pressure 160 is applied, the preform 150 is held in contact with the strong back 180. If optional vacuum pressure 204 has been applied to the preform 150 through the tray 190, the cell controller 120 instructs the vacuum system 202 to deactivate and cease applying the vacuum pressure 204. Ceasing the vacuum pressure 204 at the tray 190 facilitates transferring the preform 150 from the tray 190 to the strong back 180.

FIG. 10 is a side cross-sectional view of the strong back 180 shown in FIGS. 8 and 9 having the preform 150. In FIG. 10, the strong back 180 is lifted while the vacuum pressure 160 is applied, holding the preform 150 and any other large preforms 156 and/or discrete preforms 154) against the strong back 180 as the strong back 180 and the preform 150 are lifted away from the tray 190 (not shown in FIG. 10). As the strong back 180 is lifted away from the tray 190, the indexing pins 183 disengage from the indexing cups 193 (shown in FIG. 9).

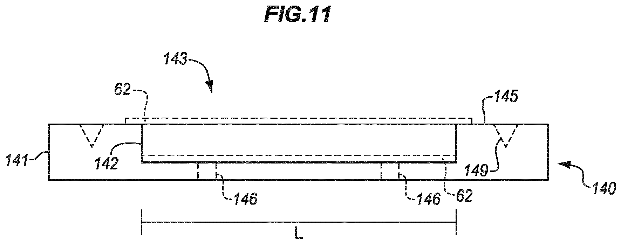

FIG. 11 is a side cross-sectional view of the mandrel 140 that can be used with the placement system 50 shown in FIGS. 1 to 3 and/or with the manufacturing line 10 shown in FIG. 1. The mandrel 140 awaits loading from the strong back 180 (not shown in FIG. 11). The mandrel 140 includes a body 141 having an outer surface 145 of the mandrel 140. The mandrel 140 further includes a cut-out 142 defined in the outer surface 145. The cut-out 142 shown in FIGS. 11-14 can be one of many cut-outs 142 in the mandrel 140 that are each designed to receive one or more preforms 150. The outer surface 145 defines at least a portion of the contoured cross-section 143 of the mandrel 140.

The outer surface 145, or at least each cut-out 142, optionally includes release film 62 to facilitate removal of the preform(s) 150 and/or hardened structure 64 (shown in FIG. 1) from the mandrel 140. When release films 62 are used on the mandrel 140, the release films 62 are applied to the mandrel 140 before or at entry to the placement system 50.

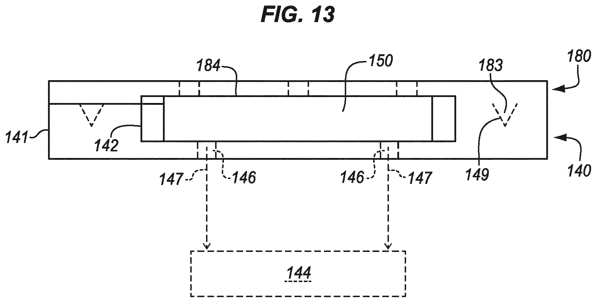

The vacuum channels 146 are defined through the body 141 extending from the cut-out 142 and/or outer surface 145. The vacuum channels 146 are configured to provide flow communication between the outer surface 145 and/or cut-out 142 and the vacuum system 144 (shown in FIG. 2). The mandrel 140 can include one or more vacuum channels 146 per cut-out 142. Alternatively or additionally, the mandrel 140 can include one or vacuum channels 146 to the outer surface 145 to, for example, hold discrete preforms 154 against the outer surface 145. When the mandrel 140 includes more than one cut-out 142, the mandrel 140 also includes more than one vacuum channel 146 so at least one vacuum channel 146 is associated with each cut-out 142. The vacuum channels 146 are coupled with the cut-out 142. The vacuum channels 146 enable vacuum pressure 147 (shown in FIG. 13) applied by the vacuum system 144 to suction the preform 150 into place on the mandrel 140. Each vacuum channel 146 can be operated independently or with other vacuum channels 146 depending on which types, number, and/or sizes of preform(s) 150 are placed on the mandrel 140. For example, only vacuum channels 146 where a preform 150 has been placed are activated while vacuum channels 146 that do not have a preform 150 associated therewith are not activated.

FIG. 12 is a side cross-sectional view of the mandrel 140, the strong back 180, and the preform 150 shown in FIGS. 6 to 11 in an illustrative embodiment. In FIG. 12, the strong back180 is moved over the mandrel 140 having one or more cut-outs 142. The strong back indexing elements 182 are configured to engage with the mandrel indexing elements 148 as the strong back 180 moves toward the mandrel 140. More specifically, the indexing pins 183 of the strong back 180 are shaped to contact the indexing cups 149 of the mandrel 140 to guide the strong back 180 with respect to the mandrel 140 to align the recess(es) 184 of the strong back 180 and the cut-outs 142 of the mandrel 140.

For example, similar to the indexing cups 193 of the tray 190 (shown in FIG. 9), the indexing cups 149 of the mandrel 140 are tapered to allow more tolerance in the misalignment between the strong back 180 and the mandrel 140 initially and reduce the misalignment as the strong back 180 and the mandrel 140 move closer together, until the indexing pins 183 are centered in the indexing cups 149 when the strong back 180 is in position with respect to the mandrel 140 to begin placing the preform 150 on the mandrel 140. Alternatively, when the tray 190 includes indexing pins and the strong back 180 includes indexing cups, the mandrel 140 includes indexing pins to engage the indexing cups of the strong back 180.

Each cut-out 142 may include its own associated copy of the indexing cups 149 for aligning with the strong back 180, or sets of the cut-outs 142 may share one or more sets of the indexing cups 149. In further embodiments, multiple preforms 150 are placed along a length L of a cut-out 142 side-by-side, and are mechanically integrated via scarf joints, ply ramps, or other features.

FIG. 13 is a side cross-sectional view of the mandrel 140, the strong back 180, and the preform 150 shown in FIG. 12 in which the strong back 180 and/or the preform 150 has been placed over the mandrel 140. When the strong back 180 is aligned with the mandrel 140, the vacuum pressure 160 through the vacuum channels 188 is released. For example, the cell controller 120 instructs the vacuum system(s) 138 to deactivate to release the vacuum pressure 160. When the vacuum pressure 160 is released, the preform 150 is placed in the cut-out 142 of the mandrel 140. Alternatively or additionally, when the vacuum pressure 160 is released, the preform 150 is placed on the outer surface 145 of the mandrel 140. If optional vacuum pressure 147 is to be applied to the preform 150 through the mandrel 140, the cell controller 120 instructs the vacuum system 144 (shown in FIG. 2) to activate and apply the vacuum pressure 147. Applying the vacuum pressure 147 at the mandrel 140 facilitates securing the preform 150 to the mandrel 140.

In FIG. 13, the vacuum pressure 160 is released or reversed, and the preform 150 (and any other large preform(s) 156 and/or discrete preform(s) 154 (shown in FIG. 5)) is deposited in-place at the cut-out 142. In embodiments where the objects 18 comprise unhardened preforms of fiber-reinforced material 152 (both shown in FIG. 1), the strong back 180 may be operated to secure (e.g., tack, press, consolidate, etc.) the preform 150 of unhardened fiber-reinforced material 152 onto the mandrel 140. The vacuum system 144 is operated to additionally or alternatively secure the preform 150 onto the mandrel 140 via the vacuum pressure 147.

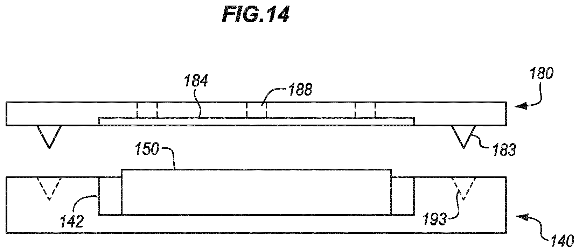

FIG. 14 is a side cross-sectional view of the mandrel 140, the strong back 180, and the preform 150 shown in FIGS. 12 and 13 in which the preform 150 has been placed on the mandrel 140. After the vacuum pressure 160 (shown in FIG. 12) is released to place the preform 150 on the mandrel 140, the strong back 180 is lifted away from the mandrel 140 by the PNP machine(s) 130 (shown in FIGS. 1 to 3). As the strong back 180 is lifted, the indexing pins 183 disengage from the indexing cups 193. The PNP machine(s) 130 move the strong back 180 to pick and place additional preforms 150 from the tray 190 on to the mandrel 140 until the desired number of preforms 150 are placed.

Using the components of the placement station 100 and techniques shown in FIGS. 6 to 14, the instructions 124 (shown in FIG. 2) in the asynchronous phase can cause each of the PNP machines 130 to place a strong back 180 over an object 18, such as a discrete object 20 (shown in FIGS. 1 and 2), apply vacuum pressure 160 that holds the object 18 at the strong back 180, lift the strong back 180 into place over the mandrel 140, and release the vacuum pressure 160 to remove the object 18 from the strong back 180 while the object 18 contacts the mandrel 140. The instructions 124 in the synchronous phase can cause each of the PNP machines 130 to synchronously place the strong back 180 over the large object 22 (shown in FIG. 1), apply the vacuum pressure 160 that holds the large object 22 that spans the PNP machines 180 at the strong back 180, lift the strong back 180 into place over the mandrel 140, and release the vacuum pressure 160 to remove the large object 22 from the strong back 180 while the large object 22 contacts the mandrel 140.

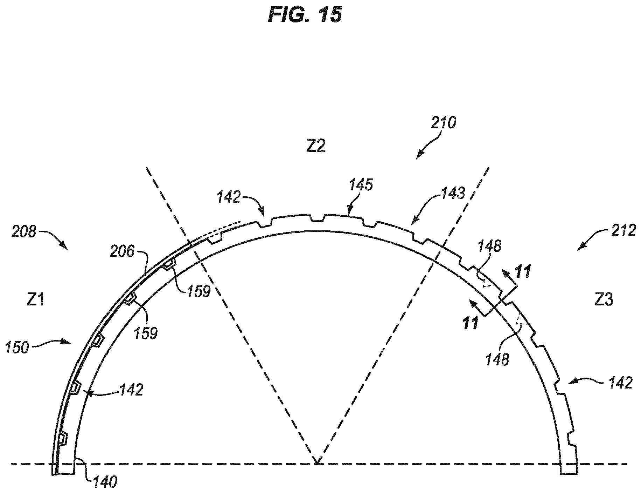

FIG. 15 is an end view of a mandrel 140 that can be used as the mandrel 140 shown in FIGS. 11 to 14 and/or that can be used with the placement system 50 shown in FIGS. 1 to 3 and/or manufacturing line 10 shown in FIG. 1 in an illustrative embodiment. For example, FIG. 15 is an end view of the mandrel 140 as illustrated in FIG. 3 and viewing a cross-section of the mandrel 140 at line 11 results in the view of the mandrel 140 of FIGS. 11 to 14. For exemplary purposes, radial zone Z1 illustrates the stringer preforms 159 and layer 206 after the strong back 180 has been lifted away from the mandrel 140, and radial zones Z2 and Z3 illustrate the mandrel 140 before the preforms 150 are placed on the mandrel 140.

The mandrel 140 has cut-outs 142 (e.g., in the form of channels) for receiving preforms 150 in an illustrative embodiment. The cut-outs 142 and/or outer surface 145 defines the contoured cross-section 143 of the mandrel 140. The contoured cross-section 143 is arcuate in the example of FIGS. 3 and 15 to 21. In FIG. 15, cut-outs 142 along the outer surface 145 are each intended to receive a stringer preform 159. Plies of material forming a skin 782 of an aircraft 750 may then be laid up as layer(s) 206 atop the stringer preforms 159 and hardened, resulting in a half-barrel section 770 (or full-barrel section 776) that is a single integral piece that includes both the skin 782 and the stringers 778 for co-curing (see FIG. 29).

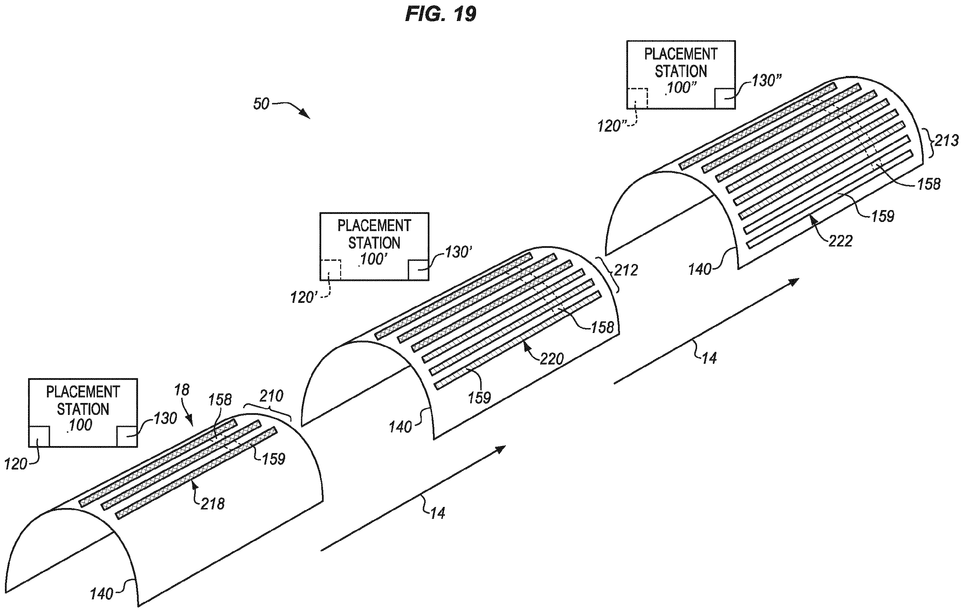

To facilitate the placement process, the mandrel 140 is divided into radial portions 208, 210, and 212, corresponding with radial zones Z1, Z2, and Z3, respectively. The preforms 150 can be placed on the mandrel 140 sequentially through or in parallel at the radial zones Z1, Z2, and Z3 and/or at the radial portions 208, 210, and 212 in the placement station 100. Alternatively, the mandrel 140 may receive preforms 150 in different radial portions 208, 210, and 212 from different placement stations 100, 100', and 100", as shown in FIG. 19. The example of FIG. 19 can be modified to use one or more placement stations 100 to place the preforms 150 in multiple zones Z1, Z2, and/or Z3 in parallel by operating multiple PNP machines 130 simultaneously at different radial portions 208, 210, 212. One or more radial portions 208, 210, and/or 212 may be assigned to technicians for manual placement of the preforms 150. This coordinated placement across the radial portions 208, 210, and 212 provides a technical benefit by increasing the rate of placement for preforms 150 onto a single mandrel 140.

When the mandrel 140 is assembled from the mandrel segments 235 (shown in FIG. 21), each mandrel segment 236, 238, and 240 is a different radial portion 208, 210, or 212 of the mandrel 140. Further, when the mandrel 140 is assembled from the mandrel segments 235, each mandrel segment 236, 238, and 240 is positioned in a different radial zone Z1, Z2, or Z3. Further details of the assembling 504 and positioning 508 are shown in FIG. 25.

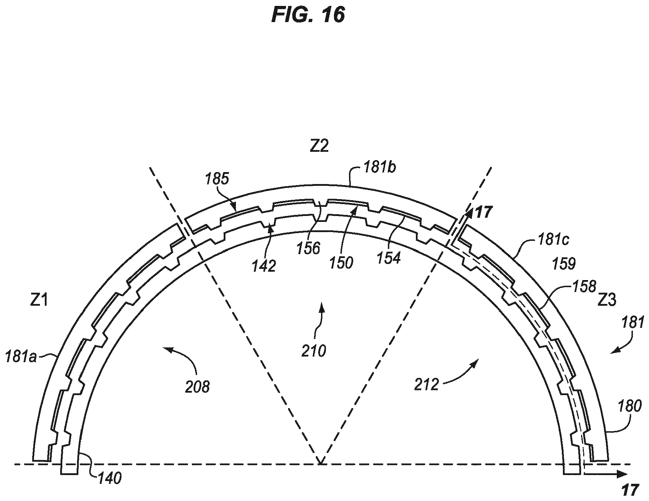

FIG. 16 is an end view of the mandrel 140 accompanied by the strong back, in an illustrative embodiment. In this example, the strong back 180 includes strong back segments 181 and can be used as the strong back in FIGS. 8 to 10 and 12 to 14. For example, the strong back 180 includes a first strong back segment 181a, a second strong back segment 181b, and a third strong back segment 181c; however, the strong back 180 can include any suitable number of strong back segments 181. For example, the strong back 180 includes a single strong back segment 181 that is repositioned with respect to the mandrel 140 as the preforms 150 are placed on the mandrel. The strong back segment 181 is moved through the radial zones Z1, Z2, and Z3 to be positioned (e.g., via transporting 408 (shown in FIGS. 24A and 24B)) in each radial portion 208, 210, and 212 of the mandrel 140. Alternatively, the strong back 180 is continuous along the mandrel 140 and does not include strong back segments 181.

The cross-sectional shape of the strong back 180 corresponds to (e.g., is complementary to) the cross-sectional shape of the mandrel 140. Further, the mandrel 140 and the strong back 180 are shaped to correspond to the structure 12 being assembled by the placement system 50. More specifically, as illustrated in FIG. 16, the mandrel 140 is arcuate and the strong back 180 is arcuate. When the strong back 180 includes strong back segments 181, each strong back segment 181 is arcuate. The mandrel 140, which can be arcuate shaped, and strong back 180, which can be correspondingly arcuate shaped, can be used to assemble and/or fabricate the portion 768 of the fuselage 766 (shown in FIG. 29).

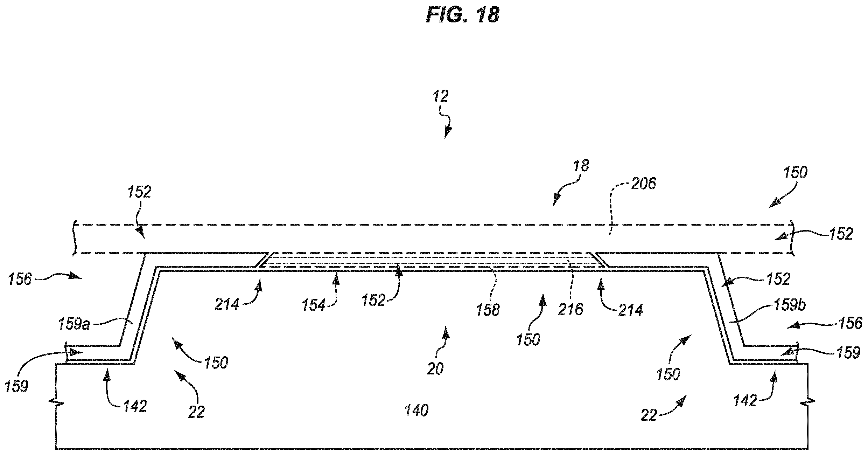

As shown in FIG. 16, the strong back 180 and/or each strong back segment 181 includes multiple preforms 150. For example, the strong back 180 includes large preforms 156 for placement within a corresponding cut-out 142. Furthermore, during the placement operation, the strong back 180 and/or each strong back segment 181 includes discrete preforms 154 at the inner surface 185 of the strong back 180. In an exemplary embodiment, each discrete preform 154 is a set of buffer plies (e.g., layers 216 of unhardened fiber-reinforced material 152 as shown in FIG. 18) forming preform pad-ups (i.e., multi-layered ply build-ups) known as "postage stamps" or "frame fillers" 784 that facilitate placement of frames 780 (shown in FIG. 29). In such an embodiment, the large preforms 156 are stringer preforms 159 and the discrete preforms 154 are the frame filler preforms 158.

FIG. 17 is a bottom view of the strong back 180 having the preform(s) 150 placed thereon in an illustrative embodiment, taken at line 17-17 in FIG. 16. FIG. 17 is an inner diameter view of the strong back 180 and/or a strong back segment 181 having discrete preforms 154 and large preforms 156. In this example, the strong back 180 includes multiple recesses 184. More specifically, the strong back 180 includes a recess 184 corresponding to each preform 150 of multiple preforms 150 to be picked and placed using the strong back 180. Accordingly, each preform 150 fits within a particular recess 184 of the multiple recesses 184 of the strong back 180.

Frame filler preforms 158 are arranged at discrete locations (e.g., at the recesses 184) on the inner surface 185 along the length L of the strong back 180, while stringer preforms 159 are arranged parallel to the length L. In these embodiments, associated trays 190 for holding the stringer preforms 159 and the frame filler preforms 158 may include recesses 198 for both the stringer preforms 159 and the frame filler preforms 158, such as the tray 190c and preforms 158, 159 as shown in FIG. 5.

When the vacuum pressure 160 is applied, each of the discrete preforms 154 is held in contact with at least one large preform 156. For example, the preforms 154 and 156 are held in contact with each other at the strong back 180 in an arrangement similar to the arrangement shown in FIG. 18.

While the recess 198 of the tray 190 (shown in FIG. 4), the cut-out 142 of the mandrel 140 (shown in FIG. 11), and the strong back 180 are all shown as having the same length L, the lengths of the recess 198, the cut-out 142, and the strong back 180 can be different from each other.

FIG. 18 is an end cross-sectional view of the mandrel 140 and preform(s) 150 shown in FIG. 17 with the strong back 180 moved away from the mandrel 140. The example illustrated in FIG. 18 includes a first stringer preform 159a and a second stringer preform 159b adjacent to the first stringer preform 159a. Each stringer preform 159 is positioned in a respective cut-out 142 in the mandrel 140. A frame filler preform 158 is positioned between the adjacent first stringer preform 159a and second stringer preform 159b. In the exemplary embodiment, the stringer preforms 159 and the frame filler preform 158 overlap at bevels 214; however, the stringer preforms 159 and the frame filler preform 158 may abut at flat ends or be spaced apart such that a gap is defined between at least two of the preforms 150.

Each frame filler preform 158 includes multiple layers 216 of the unhardened fiber-reinforced material 152. The multiple layers 216 create a pad-up area in the location 781 where the frame 780 is expected to be coupled to the skin 782 (shown in FIG. 29). The pad-up provided by the frame filler preform 158 can enable a more straightforward frame layup configuration because padding-up regions to meet a frame 780 may be easier than adding flange joggles to a frame to meet the skin 782 or adding flange joggles to the stringers 778.

Each discrete preform 154 is held in contact with at least one large preform 156, such as each frame filler preform 158 being held in contact with at least one stringer preform 159. The discrete preforms 154 and large preform 156 are held in contact via gravity. When the optional vacuum system 144 is included in the placement system 50, the discrete preforms 154 and large preform 156 are additionally or alternatively held in contact via the vacuum pressure 147 (shown in FIG. 2). Tactifier tape and media can be used in addition to compaction, gravity, and/or vacuum pressure 147 to maintain the positions of the preforms 150 with respect to each other throughout the placement operation and subsequent operations.

The structure 12 can optionally include one or more layers 206 over multiple preforms 150, such as discrete preforms 154 and/or large preforms 156, disposed on the mandrel 140. Consequently, the one or more layers 206 is laid up atop the mandrel 140. The layer 206 is formed of the unhardened fiber-reinforced material 152 and as such, the preform(s) 150 can be considered as including the layer 206 as a type of preform. When the structure 12 is the portion 768 of the fuselage 766, the one or more layers 206 form the skin 782 of the fuselage 766 (see FIG. 29). Accordingly, the layer 206 can also be referred to as a "skin layer". When the structure 12 includes the layer(s) 206, the cell controller 120 is operable to place the layer(s) 206 over the preforms 150 disposed on the mandrel 140.

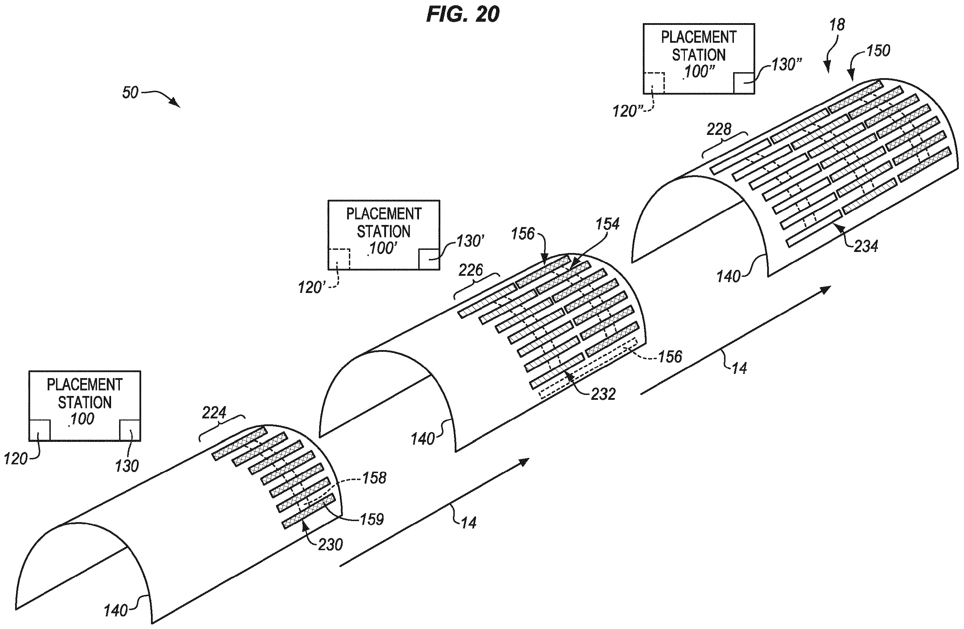

FIGS. 19 to 21 illustrate arrangements of placements stations, such as a first placement station 100, a second placement station 100', and a third placement station 100", that place preforms 150 different portions of the mandrel 140, in illustrative embodiments. In the following descriptions, the PNP machines 130 can be distributed across multiple placement stations 100, 100', 100", and the cell controller 120, 120', and/or 120" iteratively operates the PNP machines 130, 130', 130" at each of the placement stations 100, 100', 100" in the synchronous phase and asynchronous phase. In one example, each of the placement stations 100, 100', 100" operates PNP machines 130, 130', 130" to place objects 18 onto a different radial portion 208, 210, 212, or 213 of the contoured cross-section 143 of the mandrel 140. In another example, each of the placement stations 100, 100', 100" may operate PNP machines 130, 130', 130" to place objects 18 onto different lengthwise or longitudinal portions 224, 226, and 228 (shown in FIG. 20) of the mandrel 140.

FIG. 19 is a perspective view of a first example of multiple placement stations 100, 100', and 100" that can be used with the placement system 50 shown in FIG. 1. Specifically, FIG. 19 illustrates the placement system 50 wherein placement stations 100, 100', and 100" operate the PNP machines 130, 130', and/or 130" to place preforms 150 into different radial portions 208, 210, and 213 of the mandrel 140. This results in the mandrel 140 having a first group 218 of stringer preforms 159 placed by the first placement station 100, a second group 220 of stringer preforms 159 placed by the second placement station 100', and a third group 222 of stringer preforms 159 placed by the third placement station 100". Frame filler preforms 158 can optionally be placed with each group 218, 220, and 222 of stringer preforms 159.

This embodiment facilitates pulsed-line fabrication or continuously moving fabrication by enabling different placement stations 100, 100', and 100" in the process direction 14 to place different preforms 150, such as stringer preforms 159, in different radial portions 210, 212, and 213 of the mandrel 140 as the mandrel 140 moves in the process direction 14 with respect to the placement stations 100, 100', and 100".

FIG. 20 is a perspective view of a second example of multiple placement stations 100, 100', 100" that can be used with the placement system 50 shown in FIG. 1. In this example, the mandrel 140 is divided into a first longitudinal portion 224, a second longitudinal portion 226, and a third longitudinal portion 228; however, the mandrel 140 can be divided into any suitable number of longitudinal portions, depending on the size of the mandrel 140, the size of the objects 18, and/or the number and positions of the objects 18. Objects 18, such as preforms 150, can be placed in the longitudinal portions 224, 226, and/or 228 when the object 18 (e.g., preforms 150 or large preforms 156) are shorter than the length of the mandrel 140 or can be divided longitudinal segments that are shorter than the length of the mandrel 140 such that the objects 18 can fit the length of an associated longitudinal portion 224, 226, or 228.

More specifically, FIG. 20 illustrates the placement system 50 wherein stations 100, 100', 100" operate the PNP machines 130, 130', and/or 130" to place objects 18, such as preforms 150, onto a different longitudinal portion 224, 226, or 228 of the mandrel 140. For example, the first placement station 100 places a first group 230 of preforms 150 in the first longitudinal portion 224, the second placement station 100' places a second group 232 of preforms 150 in the second longitudinal portion 226, and the third placement station 100" places a third group 234 of preforms 150 in the third longitudinal portion 228. Each group 230, 232, and/or 234 of preforms 150 includes large preforms 156 (e.g., stringer preforms 159). Alternatively or additionally, each group 230, 232, and/or 234 of preforms 150 includes one or more large preforms 156 (e.g., stringer preforms 159) and one or more discrete preforms 154 (e.g., frame filler preforms 158). Accordingly, each placement station 100, 100', and 100" can place stringer preforms 159 and frame filler preforms 158 in one or more longitudinal portions 224, 226, and/or 228 depending on the structure 12 (shown in FIG. 1) being assembled.

Further, any of the large preforms 156 can span more than one longitudinal portion 224, 226, and/or 228. When the large preforms 156 extend to or through different longitudinal portions 224, 226, and/or 228, any suitable placement station 100, 100', or 100" can place the large preform 156. For example, when the large preform 156 spans the first longitudinal portion 224 and the second longitudinal portion 226, the first placement station 100 or the second placement station 100' can place the large preform 156.

This example can result in the mandrel 140 having the first group 230 of stringer preforms 159 placed by the first placement station 100, the second group 232 of stringer preforms 159 placed by the second placement station 100', and the third group 234 of stringer preforms 159 placed by the third placement station 100" to assemble stringers 778 (shown in FIG. 29). The preforms 150 that cross different longitudinal portions 224, 226, and/or 228 may be integrated together via any suitable splicing techniques, such as scarf joints, lap splices, or step lap splices. This segmented approach lends itself to pulsed or continuously moving fabrication environments, as each of the first group 230, the second group 232, and the third group 234 of stringer preforms 159 can be added at a series of placement stations 100, 100', 100" of the manufacturing line 10 (shown in FIG. 1).

FIG. 21 is a perspective view that illustrates arrangement of placement stations 100, 100', and 100" and the assembly station 105 that can be used in the placement system 50 of FIG. 1 in an illustrative embodiment. FIG. 21 also is a perspective view of mandrel segments 235 that can be used with the mandrel 140 of any preceding figure. The mandrel 140 includes multiple mandrel segments 235. The mandrel segments 235 include a first mandrel segment 236, a second mandrel segment 238, and a third mandrel segment 240. Although three mandrel segments 236, 238, and 240 are described herein, the mandrel 140 can include any suitable number of mandrel segments 235. Each mandrel segment 235 includes the above-described components and features of the mandrel 140, such as the cut-outs 142, the contoured cross-section 143, the optional vacuum system 144, the outer surface 145, the optional vacuum channels 146, and/or the mandrel indexing elements 148 (e.g., the indexing cups 149) shown in FIGS. 2, 3, and 11-16.

More specifically, FIG. 21 illustrates the placement system 50 wherein the placement stations 100, 100', and 100" operate to place objects 18, such as preforms 150, onto mandrel segments 236, 238, and 240 of the mandrel 140. At the placement stations 100, 100', and 100", objects 18, such as preforms 150, are placed in a respective mandrel segment 235 by the PNP machines 130; 130', and 130". More specifically, the first placement station 100 places the first group 218 of preforms 150 on to the first mandrel segment 236, the second placement station 100' places the second group 220 of preforms 150 on to the second mandrel segment 238, and the third placement station 100" places the third group 222 of preforms 150 on to the third mandrel segment 240. As discussed above, each group 218, 220, and 222 can include one or more stringer preforms 159 and/or one or more frame filler preforms 158.

Each mandrel segment 236, 238, and 240 corresponds to a respective radial portion 208, 210, or 212 of the mandrel 140. For example, the first mandrel segment 236 corresponds to the third radial portion 212, the second mandrel segment 238 corresponds to the first radial portion 208, and the third mandrel segment 240 corresponds to the second radial portion 210. However, the correspondence of each mandrel segment 236, 238, or 240 to a radial portion 208, 210, or 212 can be any suitable assignment depending on the structure 12 (shown in FIG. 1) being assembled and the processes being performed by the placement system 50. Accordingly, placing objects 18 onto different mandrel segments, such as the first mandrel segment 236, the second mandrel segment 238, and/or the third segment 240, can be considered placing the objects 18 onto different radial portions 208, 210, and 212 of the mandrel 140.

One or more cell controllers 120, 120', and/or 120" include all or part of the program 122 having the instructions 124 (shown in FIG. 2). The program 122 includes instructions 124 corresponding to each mandrel segment 236, 238, and 240. The PNP machines 130, 130', and 130" receive the instructions 124 from the program 122 corresponding to a particular mandrel segment 236, 238, or 240 at the placement station 100, 100', or 100" where the PNP machines 130, 130', or 130" are operating.

The mandrel segments 235 (also known as "segments" or "segmented mandrels") are assembled into the mandrel 140 having different radial portions 208, 210, and 212 that each correspond with a different one of the mandrel segments 238, 240, and 236. That is, the mandrel segments 236, 238, and 240 may be fastened together to form the mandrel 140 using fasteners 242.

Further, seals can be installed between adjacent mandrel segments 235. For example, the seals between the mandrel segments 235 are installed last. In one example, the mandrel segments 236 and 238 are in place prior to assembling the mandrel segment 240 so the seals care pressed normal rather than at an angle.

For example, after the PNP machines 130, 130', 130" have completed instructions 124 in the program 122, the mandrel segments 235 move from the placement stations 100, 100', 100" to the assembly station 105. As the mandrel segments 236, 238, and 240 move from the placement stations 100, 100', and 100", each mandrel segment 236, 238, and 240 is moved to a respective radial zone Z3, Z1, or Z2. More specifically, due to the correspondence between the mandrel segments 236, 238, and 240 and the radial portions 212, 208, and 210, each mandrel segment 236, 238, and 240 is positioned in a respective radial zone Z3, Z1, or Z2 when the mandrel 140 is assembled from the mandrel segments 236, 238, and 240. The mandrel segments 236, 238, and 240 can be moved to any suitable radial zone Z1, Z2, or Z3 in any order to assemble the mandrel 140.

In one embodiment, the mandrel segments 235 are used as a tray-like transport device. The mandrel segments 235 are then coupled together, such as by fastening, bolting, affixing, etc.. For example, the mandrel segments 236, 238, and 240 are assembled together by applying fasteners 242 to the mandrel segments 236, 238, and 240. More specifically, the second mandrel segment 238 is coupled to one side of the third mandrel segment 240 using fasteners 242, and the first mandrel segment 236 is coupled to the other side of the third mandrel segment 240 using fasteners 242. In this manner, assembling the mandrel segments 236, 238, and 240 places each mandrel segment 235 in a different radial portion 212, 208, or 210 of the mandrel 140. The fasteners 242 can be applied after all of the mandrel segments 235 are positioned with respect to each other or can be applied as the each mandrel segment 235 is positioned. Seals can be installed between adjacent mandrel segments 235 before or after the fasteners 242 are applied to the mandrel segments 235.

When the assembly station 105 includes the mandrel support structure 106, the mandrel segments 235 are attached to the mandrel support structure 106. For example, the mandrel segments 235, individually or coupled together as the mandrel 140, are coupled to the mandrel support structure 106 using fasteners 244. In one example, the mandrel segments 235 are coupled together, and then the mandrel 140 formed of the mandrel segments 235 is attached to the mandrel support structure 106. In another example, the mandrel segments 235 are coupled to the mandrel support structure 106 and then coupled to an adjacent mandrel segment 235. While the fasteners 242 and 244 are assigned different reference numbers, the fasteners 242 and 244 can be the same type of fastener or different types of fasteners.

Some embodiments include assembling multiple mandrel segments 235 together into a half-barrel section 770 (or a full-barrel section 776 or less than a half-barrel section, such as a one-quarter panel) (shown in FIG. 29), after the PNP machines 130 have completed the instructions 124 in the program 122 (such as the NC program 123) for the mandrel segments 235 to place preforms 150 in desired locations. This segmented approach lends itself to a pulsed fabrication environment, as each group 218, 220, and 222 of stringer preforms 159 can be placed upon a mandrel segment 235 that proceeds in a pulsed or continuously moving fashion, and then the mandrel 140, shaped as a half-barrel section 770 or a full-barrel section 776, can be assembled from the mandrel segments 235. This design concept may be implemented to form full-barrel sections 776, as desired.

Illustrative details of the operation of placement system 50 will be discussed with regard to FIGS. 22 to 26. Assume, that a variety of objects 18 for placement onto the mandrel 140, such as one or more stringer preforms 159, are prepared at the tray 190 and await placement. Further, unless the mandrel segments 235 are specified, the methods described below can be used with the mandrel 140 or the one or more mandrel segment 235 when the mandrel 140 is referred to.

The methods described with respect to FIGS. 22 to 26 can be performed by the cell controller 120. For example, and referring to FIGS. 1 and 2, the steps of the methods are included in the program 122 embodied in the cell controller 120 and are sent in the instructions 124 from the cell controller 120 to the PNP machines 130 and/or in instructions sent to the mandrel 140 to perform the method(s). Accordingly, the cell controller 120 is operable to perform the methods 300, 400, 500, and 600 and steps described herein. When the method steps are performed by a system in the manufacturing line 10 other than the placement system 50, the cell controller 120 communicates with controller(s) in the other systems, such as the hardening system 60, the separation system 70, and/or the cleaning system 80, to move the mandrel 140 and perform the remainder of the method step(s).

The steps of the methods are described below with reference to the placement system 50 of FIG. 1, but those skilled in the art will appreciate that the herein-described methods may be performed in other systems. The steps of the flowcharts described herein are not all inclusive and may include other steps not shown and include optional steps that can be performed in some examples. The steps described herein may also be performed in an alternative order, and/or may be skipped. Furthermore, the picking and/or placing operations discussed herein may be performed synchronously or asynchronously.

FIG. 22 is a flowchart illustrating a method 300 for assembling a structure 12 using the placement system 50 of FIGS. 1 to 3. The method 300 operates the placement system 50 to coordinate the action of the PNP machines 130. As mentioned above, picking and/or placing steps can be performed synchronously or asynchronously, depending on the structure 12 being assembled. The picking and/or placing operations can occur while the mandrel 140 is paused at the placement station 100 between pulses, and the cell controller 120 may pause the mandrel 140 while at least a portion of the mandrel 140 is disposed at the placement station 100.

Referring to FIGS. 1, 2, and 22, the method 300 includes operating 302 in an asynchronous phase and operating 304 in a synchronous phase. When operating 302 in the asynchronous phase, the placement system 50 operates in the asynchronous mode. Similarly, while operating 304 in the synchronous phase, the placement system 50 operates in the synchronous mode. An example of the mode 412 is shown in FIGS. 24A and 24B. Placement of objects 18, such as the discrete object 20 and the large object 22, are described below; however, when the objects 18 are preforms 150, the discrete objects 20 include discrete preforms 154, such as frame filler preforms 158, and the large objects 22 include large preforms 156, such as stinger preforms 159. Accordingly, the method 300 as described below applies equally to place preforms 150, discrete preforms 154, frame filler preforms 158, large preforms 156, and stringer preforms 159.

In the step of operating 302, the cell controller 120 initiates an asynchronous phase in which the PNP machines 130 at a placement station 100 are each operated independently to place the objects 18, such as discrete objects 20, onto the mandrel 140. To initiate the asynchronous phase, the cell controller 120 sends instructions 124 to the PNP machines 130 to operate in the asynchronous mode. The asynchronous phase is a phase of operation in which each PNP machine 130 places the objects 18 at its own fastest rate, without the cell controller 120 enforcing coordination between the PNP machines 130.

Instructions 124 to operate 302 in the asynchronous phase cause each of the PNP machines 130 to place 404 the strong back 180 over at least one discrete object 20, apply 406 the vacuum pressure 160 that holds the at least one discrete object 20 at the strong back 180, lift 454 the strong back 180 into place over the mandrel 140, and release 470 the vacuum pressure 160 to remove the at least one discrete object 20 from the strong back 180 while the at least one discrete object 20 contacts the mandrel 140. The placing 404, applying 406, lifting 454, and releasing 470 steps are shown in FIGS. 24A and 24B during the mode 412.

During operation 302 in the asynchronous phase, the cell controller 120 provides 306 new instructions 124 for each of the PNP machines 130. The new instructions 124 are defined by the program 122 and are provided 306 by the cell controller 120 to a PNP machine 130 in response to detecting that prior instructions 124 from the program 122 have been completed by the PNP machine 130, regardless of the progress of the other PNP machines 130 in the placement station 100. Thus, each PNP machine 130 receives instructions 124 independently of other PNP machines 130 in the placement station 100. This enables each PNP machine 130 to operate efficiently and without reference to the other PNP machines 130.

As used herein, especially regarding the steps of operating 302 and operating 304, an instruction 124 from the program 122 is preferably from an NC program 123 and may comprise a command to move the end effector 134 to a specific location, to control operation of the vacuum system 138 and/or the gripping system 139 at the end effector 134, and/or to control an actuator, etc. in order to physically grab or apply vacuum pressure 160 to the strong back 180 (and any of the preforms 150 that are corresponding) for placement of an object 18 carried by the strong back 180. In response to each instruction 124, the PNP machine 130 performs the requested action, and the PNP controller 132 generates a confirmation for receipt by the cell controller 120. As each confirmation is received from the PNP machine 130, the cell controller 120 provides 306 a new instruction 124 to the PNP machine 130 from the program 122.

The PNP controllers 132 may use the data 137 to confirm that an instruction 124 has been carried out in a desired manner. If the data 137 indicates a condition in which the PNP machine 130 cannot complete the instruction 124 (e.g., due to a delay beyond a threshold amount, an error code, etc.), then the PNP controller 132 reports the condition to the cell controller 120 for interpretation and remediation.

Referring to FIGS. 19 and 22, operating 302 in the asynchronous phase can include placing 308 the discrete objects 20 onto a different radial portion 208, 210, 212, or 213 of the mandrel 140. When the mandrel 140 includes mandrel segments 235, the discrete objects 20 are placed 310 onto one or more mandrel segments, which become the radial portions 208, 210, 212, and/or 213 of the mandrel 140 when assembled together. Referring to FIGS. 20 and 22, additionally or alternatively operating 302 in the asynchronous phase can include placing 312 the discrete objects 20 onto a different longitudinal portion 224, 226, or 228 of the mandrel 140.

When the PNP machines 130 are divided in to the first subset 126 and the second subset 128, operating 302 in the asynchronous phase includes operating 314 the first subset 126 of PNP machines 130a at the placement station 100 independently in an asynchronous phase to place the discrete objects 20 onto the mandrel 140. The instructions 124a to operate 302 in the asynchronous phase cause each of the PNP machines 130a the first subset 126 to place 404 the strong back 180 over a discrete object 20, apply 406 the vacuum pressure 160 that holds the discrete object 20 at the strong back 180, lift 454 the strong back 180 into place over the mandrel 140, and release 470 the vacuum pressure 160 to remove the discrete object 20 from the strong back 180 while the discrete object 20 contacts the mandrel 140.

While operating 314 the first subset 126 in the asynchronous phase, new instruction 124 are provided 306 for each of the PNP machines 130 in the first subset 126. More specifically, new instructions 124 are provided 306 to each of the PNP machines 130 in the first subset 126 from the program 122 in response to detecting that prior instructions 124 from the program 122 have been completed by the PNP machine 130, regardless of the progress of the other PNP machines 130 in the first subset 126. Preferably, the program 122 is the NC program 123 and the instructions 124 are NC instructions 125.

When the placement system 50 includes multiple placement stations 100, 100', the PNP machines 130, 130' are distributed across the multiple placement stations 100, 100'. In such an embodiment, operating 302 includes operating 316 the PNP machines 130 at the first placement station 100 in the asynchronous phase or operating 316 the PNP machines 130' at the second placement station 100' in the asynchronous phase.

Any of the steps of placing 308, placing 310, placing 312, operating 314, and/or operating 316 can be combined to operate 302 in the asynchronous phase, depending on the structure 12 being assembled and/or the configuration of the placement system 50.

In the step of operating 304, the cell controller 120 initiates a synchronous phase in which the PNP machines 130 are operated in tandem to place a large object 22 that spans multiple PNP machines 130 onto the mandrel 140. The PNP machines 130 therefore operate in tandem during the synchronous phase to collaboratively transport one or more large objects 22 to desired positions at mandrel 140. To initiate the synchronous phase, the cell controller 120 sends instructions 124 to the PNP machines 130 to operate in the synchronous mode.

Instructions 124 during operation 304 in the synchronous phase cause each of the PNP machines 130 to synchronously place 404 the strong back 180 over the large object 22, apply 406 the vacuum pressure 160 that holds the large object 22 at the strong back 180, lift 454 the strong back 180 into place over the mandrel 140, and release 470 the vacuum pressure 160 to remove the large object 22 from the strong back 180 while the large object 22 contacts the mandrel 140. The placing 404, applying 406, lifting 454, and releasing 470 steps are shown in FIGS. 24A and 24B as steps during the mode 412.

During operation 304 in the synchronous phase, the cell controller 120 provides 318 new instructions 124 from the program 122 (e.g., the NC program 123) to each of the PNP machines 130 in response to detecting that all of the PNP machines 130 at the placement station 100 have completed a prior instruction 124 from the program 122. The operation 304 can result in a staged set of checkpointed operations that are performed by all of the PNP machines 130, such as positioning over a strong back 180, activating the vacuum systems 138 at the end effectors 134 to capture a preform 150 and hold the preform 150 in contact with the strong back 180, coordinating movement of the strong back 180 over the mandrel 140, coordinating release of vacuum pressure 160 to remove the preform 150 from the strong back 180, etc.

Referring to FIGS. 19 and 22, operating 304 in the synchronous phase can include placing 320 the one or more large objects 22 onto a different radial portion 208, 210, 212, or 213 of the mandrel 140. When the mandrel 140 includes mandrel segments 235, the one or more large objects 22 are placed 322 onto one or more mandrel segments 235, which become the radial portions 208, 210, 212, and/or 213 of the mandrel 140 when assembled together. Referring to FIGS. 20 and 22, additionally or alternatively operating 302 in the synchronous phase can include placing 324 one or more large objects 22 onto a different longitudinal portion 224, 226, or 228 of the mandrel 140.

When the PNP machines 130 are divided in to the first subset 126 and the second subset 128, operating 304 in the synchronous phase includes operating 326 a second subset 128 of PNP machines 130 in tandem in the synchronous phase to place a large object 22 onto the mandrel 140 simultaneously with the operating 314 of the first subset 126 of PNP machines 130. The operation 326 can occur at the same placement station (e.g., the first placement station 100) as the operation 314 and/or at a different placement station (e.g., the second placement station 100') than the operation 314. In one embodiment, the PNP machines 130a in the first subset 126 are distinct from the PNP machines 130b, 130c in the second subset 128.

The instructions 124b, 124c during operation 304 in the synchronous phase with multiple subsets 126 and 128 cause each of the PNP machines 130 in the second subset 128 to synchronously place 404 the strong back 180 over the large object 22, apply 406 the vacuum pressure 160 that holds the large object 22 at the strong back 180, lift 454 the strong back 180 into place over the mandrel 140, and release 470 the vacuum pressure 160 to remove the large object 22 from the strong back 180 while the large object 22 contacts the mandrel 140.

While operating 326 the second subset 128 in the synchronous phase, new instructions 124 are provided 318 to the PNP machines 130 in the second subset 128. More specifically, new instructions 124b, 124c are provided 318 from the program 122 to each of the PNP machines 130b, 130c in the second subset 128 in response to detecting that all of the PNP machines 130b, 130c in the second subset 128 have completed a prior instruction 124 from the program 122.

In an example where different type of objects, such as discrete objects 20 and large objects 22, are used to assemble the structure 12, the cell controller 120 can operate 302, 304 subsets 126 and 128 in different phases. For example, when the objects 18 include discrete objects 20, the cell controller 120 is configured to operate 302 each PNP machine 130a in a first subset 126 of the PNP machines 130 independently from each other in an asynchronous phase to place the discrete objects 20 onto the mandrel 140. Additionally or alternatively, when the objects 18 include a large object 22 that spans multiple PNP machines 130, the cell controller 120 is configured to operate 304 PNP machines 130b, 130c in a second subset 128 of PNP machines 130 in tandem in a synchronous phase to place the large object 22 onto the mandrel 140. Preferably, the cell controller 120 simultaneously operates the first subset 126 and the second subset 128.

When the placement system 50 includes multiple placement stations 100, 100', the PNP machines 130, 130' are distributed across the multiple placement stations 100, 100'. In such an embodiment, operating 304 includes operating 328 the PNP machines 130' at the second placement station 100' in the synchronous phase or operating 328 the PNP machines 130 at the first placement station 100 in the synchronous phase.

Any of the steps of placing 320, placing 322, placing 324, and/or operating 326 can be combined to operate 302 in the synchronous phase, depending on the structure 12 being assembled and/or the configuration of the placement system 50.

The cell controller 120 iteratively 330 operates 304, 302 the PNP machines 130 in the synchronous phase or mode and the asynchronous phase or mode. In a particular embodiment where the PNP machines 130 are divided into subsets 126 and 128, the cell controller 120 iteratively 332 operates 304, 302 the first subset 126 of PNP machines 130 and the second subset 128 of PNP machines 130 in the synchronous phase and the asynchronous phase. For example, referring to FIGS. 2 and 22, the method 300 includes iteratively 332 operating 302 the first subset 126 the asynchronous phase to place discrete objects 20 onto the mandrel 140 and then operating 304 the first subset 126 in the synchronous phase to place one more large objects 22 onto the mandrel 140. Similarly, the second subset 128 can iteratively 332 operate 302, 304 between the two phases to place discrete objects 20 and large objects 22 onto the mandrel 140.

More specifically, while the first subset 126 is operated 302 in the asynchronous phase to place the discrete objects 20, the second subset 128 is operated 304 in the synchronous phase to place one or more large objects 22. When the first subset 126 changes to operating 304 in the synchronous phase to place one more large objects 22, the second subset 128 changes to operate 302 in the synchronous phase to place the discrete objects 20. The change between operations 302 and 304 can be based on which objects 18 remain in the tray 190 and/or when a depleted tray 190 having no objects 18 remaining is replaced with a new tray 190 stocked with objects 18. This iterative 332 operation of the subsets 126 and 128 enables discrete objects 20 and large objects 22 to continually be placed by the placement station 100.

In an embodiment where the placement system 50 includes multiple placement stations 100, 100', the method includes iteratively 334 operating 304, 302 PNP machines 130, 130' at each of the placement stations 100, 100' in the synchronous phase and the asynchronous phase. For example, referring to FIGS. 1 and 22, the method 300 includes iteratively 334 operating 302 the first placement station 100 in the asynchronous phase to place discrete objects 20 onto the mandrel 140 and then operating 304 the first placement station 100 in the synchronous phase to place one more large objects 22 onto the mandrel 140. Similarly, the second placement station 100' can iteratively operate 302, 304 between the two phases to place objects 20, 22 onto the mandrel 140.

More specifically, while the first placement station 100 is operated 302 in the asynchronous phase to place discrete objects 20, the second placement station 100' is operated 304 in the synchronous phase to place one or more large objects 22. When the first placement station 100 changes to operating 304 in the synchronous phase to place one more large objects 22, the second placement station 100' changes to operate 302 in the synchronous phase to place discrete objects 20. The change between operations 302 and 304 can be based on which objects 18 remain in the tray 190, 190' and/or when a depleted tray 190, 190' having no objects 18 remaining is replaced with a new tray 190, 190' stocked with objects 18. This iterative 334 operation of the placement stations 100, 100' enables discrete objects 20 and large objects 22 to continually be placed by the placement stations 100, 100' as the mandrel 140 is moved (e.g., pulsed or continually) through a series of placement stations 100, 100'. The strong backs 180, 180' can be utilized to support these processes.

Further, when the placement system 50 includes multiple placement stations 100, 100', 100", each of the placement stations 100, 100', and/or 100" operates to place 308, 320 the objects 18 onto a different radial portion 208, 210, 212, or 213 of the mandrel 140, as shown in FIG. 19. For example, method 300 includes iteratively 334 operating 302 the first placement station 100 in the asynchronous phase to place discrete objects 20 onto the first radial portion 208 and then operating 304 the first placement station 100 in the synchronous phase to place one more large objects 22 onto the first radial portion 208. Similarly, the second placement station 100' can iteratively operate 302, 304 between the two phases to place objects 20, 22 onto the second radial portion 210, either in the same mode or the opposite mode from the first placement station 100. Alternatively, the first placement station 100 operates 302 to place discrete objects 20 onto the first radial portion 208, and then the mandrel 140 moves to the second placement station 100' to place large objects 22 onto the first radial portion 208 while the first placement station 100 operates 302 in the asynchronous mode to place the discrete objects 20 onto the second radial portion 210. Accordingly, the mandrel 140 experiences iteration 334 between phases as the mandrel 140 moves along the placement stations 100, 100'.

Additionally or alternatively, each of the placement stations 100, 100', and/or 100" operates to place 312, 324 the objects 18 onto a different longitudinal portion 224, 226, or 228 of the mandrel 140, as shown in FIG. 20. For example, method 300 includes iteratively 334 operating 302 the first placement station 100 in the asynchronous phase to place discrete objects 20 onto the first longitudinal portion 224 and then operating 304 the first placement station 100 in the synchronous phase to place one more large objects 22 onto the first longitudinal portion 224. Similarly, the second placement station 100' can iteratively 334 operate 302, 304 between the two phases to place objects 20, 22 onto the second longitudinal portion 226, either in the same mode or the opposite mode from the first placement station 100. Alternatively, the first placement station 100 operates 302 to place the discrete objects 20 onto the first longitudinal portion 224, and then the mandrel 140 moves to the second placement station 100' that operates 304 in the asynchronous phase to place the large objects 22 onto the first longitudinal portion 224 while the first placement station 100 operates 302 in the asynchronous mode to place the discrete objects 20 onto the second longitudinal portion 226. Accordingly, the mandrel 140 experiences iteration 334 between phases as the mandrel 140 moves along the placement stations 100, 100'.

Additionally or alternatively, each of the placement stations 100, 100', and/or 100" operates to place 310, 322 the objects 18 onto a different mandrel segment 236, 238, or 240, as shown in FIG. 21. For example, method 300 includes iteratively 334 operating 302 the first placement station 100 in the asynchronous phase to place discrete objects 20 onto the first mandrel segment 236 and then operating 304 the first placement station 100 in the synchronous phase to place one more large objects 22 onto the first mandrel segment 236. Similarly, the second placement station 100' can iteratively 334 operate 302, 304 between the two phases to place objects 20, 22 onto the second mandrel segment 238, either in the same mode or the opposite mode from the first placement station 100. Alternatively, the first placement station 100 operates 302 to place the discrete objects 20 onto the first mandrel segment 236, and then the first mandrel segment 236 moves to the second placement station 100' that operates 304 in the asynchronous phase to place the large objects 22 onto the first mandrel segment 236 while the first placement station 100 operates 302 in the asynchronous mode to place the discrete objects 20 onto the second mandrel segment 238. Accordingly, the mandrel segments 235 experience iteration 334 between phases as a series of mandrel segments 235 moves through a series of placement stations 100, 100'.

The method 300 can optionally include securing 336 the objects 18 to the mandrel 140. For example, when the objects 18 are preforms 150, the preforms 150 can be secured 336 to the mandrel 140. The securing 336 can occur after each phase of operating 302 and/or operating 304 and/or after all iterations 330 of the phases are completed. Securing 336 the objects 18 can include tacking the objects 18 to the mandrel 140, applying vacuum pressure 147 (shown in FIG. 13) to the objects 18, and/or pressing, compacting, and/or consolidating the object 18 against the mandrel 140 using the strong back 180. One example of tacking is using tactifier tape and media, in addition to compaction, gravity, and/or vacuum pressure 147, to maintain the positions of the preforms 150 with respect to each other throughout the placement operation and subsequent operations along the manufacturing line 10.

When the mandrel 140 includes mandrel segments 235, the method 300 includes assembling 504 multiple mandrel segments 235 together after the PNP machines 130 have completed the instructions 124 in the program 122 corresponding to the mandrel segments 235. In one example, the multiple mandrel segments 235 are assembled 504 together into a half-barrel section 770 (shown in FIG. 29) after the PNP machines 130 have completed the instructions 124 in the program 122 corresponding to the mandrel segments 235. Further details of the assembly 504 are described with respect to FIG. 25, including moving 506 the mandrel 140 to the assembly station 105 to perform the assembly 504. If the objects 18 are secured 336 to the mandrel segments 235, at least two mandrel segments 235 can be assembled 504 together after the objects 18 are secured 336.

The method 300 for assembling a structure 12 (shown in FIG. 1) can provide a substantial advantage over prior systems because the method 300 can enable a single program 122 (e.g., a single NC program 123) to control the actions of multiple PNP machines 130. Because provisioning of instructions 124 from the program 122 is synchronized across PNP machines 130 in synchronous phases, the PNP machines 130 can work together to carry objects, such as large objects 22, that a single one of PNP machines 130 would be unable to carry. Furthermore, because the provisioning of instructions 124 is not synchronized in asynchronous phases, each PNP machines 130 may operate efficiently when transporting objects, such as discrete objects 20, that can be carried by just one PNP machine.

FIG. 23 is a message diagram 350 that can be used during the method 300 shown in FIG. 22. The message diagram 350 depicts communications between the cell controller 120 and multiple PNP controllers 132a, 132b, and 132c to selectively coordinate operation of PNP machines 130a, 130b, and 130c in an illustrative embodiment. The PNP machines 130 performs a cyclical placement operation 352 that includes one or more series of an asynchronous phase 354 and a synchronous phase 356. During the asynchronous phase 354, the placement station 100 is operated 302 in the asynchronous mode. Similarly, during the synchronous phase 356, the placement station 100 is operated 304 in the synchronous mode.

As shown in FIG. 23, the cell controller 120 initiates an asynchronous phase to operate 302 the PNP machines 130. In the asynchronous phase 354, the cell controller 120 sends out a new instruction 124a, 124b, or 124c to a PNP controller 132a, 132b, or 132c immediately upon determining that the PNP controller 132a, 132b, or 132c has completed its latest instruction 124. This is performed regardless of the progress of other PNP controllers 132a, 132b, and/or 132c at the placement station 100.

In the synchronous phase 356, however, actions are synchronized among PNP controllers 132a, 132b, and 132c. That is, the cell controller 120 awaits confirmation from all PNP controllers 132 that are operating in tandem to pick up an object 18, such as a large object 22 (shown in FIG. 18), before sending out new instructions 124. This form of checkpointing may ensure that all PNP machines 130 have reached a desired milestone before further progress is requested. In further embodiments, the cell controller 120 may implement hybrid phases, wherein a subset 126 or 128 of PNP machines 130 at the placement station 100 operate in a synchronous mode, while one or more other PNP machines 130 at the placement station 100 operate in an asynchronous mode.

FIGS. 24A and 24B are a flowchart illustrating a placement method 400 for operating the placement station 100 shown in FIGS. 1 to 21, in illustrative embodiments. The method 400 operates the placement system 50 (shown in FIG. 1) to coordinate the action of the PNP machines 130. The various steps of the method 400 can be illustrated with regard to FIGS. 4 to 18. The method 400 is described with respect to placing preforms 150; however, the method 400 can be used to place any suitable objects 18.

Referring to FIGS. 22 and 23, the method 400 can be used during operation 302 in the asynchronous phase 354 and during operation 304 in the synchronous phase 356. For example, a mode 412 of the method 300 is performed during operation 302 in the asynchronous phase 354 and during operation 304 in the synchronous phase 356. The mode 412 is described in more detail below.

Referring to FIGS. 1, 2, and 24, the method 400 includes moving 402 the mandrel 140, placing 404 the strong back 180 at the tray 190 and/or at the preform(s) 150, applying 406 vacuum pressure 160 to hold the preform(s) 150, transporting 408 the strong back 180 and/or the preform(s) 150 to the mandrel 140, and placing 410 the preform(s) 150 on the mandrel 140. A mode 412 of operation includes at least placing 404 the strong back 180, applying 406 the vacuum pressure 160, transporting 408 to the mandrel 140, and placing 410 the preform 150.

Moving 402 the mandrel 140 includes moving the mandrel 140 in the process direction 14 relative to the placement station 100 having multiple PNP machines 130. The move 402 may be performed as part of a pulsed or continuously moving process along the manufacturing line 10 wherein the mandrel 140 is moved by its entire length, or as part of a micro-pulse process where the mandrel 140 is moved by less than its entire length, in order to expose a new portion of the mandrel 140 for receiving work. The moving 402 of the mandrel 140 can be at the direction of the cell controller 120. The mandrel 140 can be moved 402 along a track, rail, path, etc. through the placement system 50 and/or along the manufacturing line 10.

The mandrel 140 being moved 402 into the manufacturing cell 110 can include an identification device, such as an RFID tag and/or bar code. In such an example, moving 402 the mandrel 140 with respect to the placement system 50 can include obtaining data from the identification device for use by the cell controller 120. For example, the data can include which mandrel 140 or mandrel segment 235 is in the placement system 50, which part or model is to be assembled by the placement system 50, which components have been incorporated with the mandrel 140 before entering the placement system 50, etc. The cell controller 120 can use this data, possibly encoded in the data 137 if the PNP machine 130 is obtaining the data from the identification device, to send the appropriate instructions 124 to the PNP machines 130.

When the mandrel 140 includes multiple segments 235 as in FIG. 21, moving 402 the mandrel 140 includes moving 414 a mandrel segment 235. More specifically, one or more mandrel segments 235 are moved 414 in the process direction 14 relative to the placement station 100. The mandrel segments 235 can be moved 414 along one or more tracks, rails, paths, etc.

When the placement system 50 includes multiple placement stations 100, 100', 100", the mandrel segments 235 are each moved 414 with respective to the particular placement station 100, 100', or 100" that will place preforms 150 on that mandrel segment 235. The mandrel segments 235 can be moved 414 at the same speed through one or more placement stations 100, 100', and/or 100" or can be moved 414 at variable and/or different speeds depending on what type and how many preforms 150 are to be placed on a mandrel segment 235.

The method 400 optionally includes pausing 416 the mandrel 140 while at least a portion of the mandrel 140 is disposed at the placement station 100. The mandrel 140 can be paused 416 once for a duration long enough for all of the preforms 150 to be placed on the mandrel 140. Alternatively, the mandrel 140 is paused 416 for shorter durations so the mandrel 140 is pulsed through the placement station 100. Such pausing 416 in a pulsed fashion can be used when groups 230, 232, and 234 of preforms 150 are placed at longitudinal portions 224, 226, and 228 of the mandrel 140, as shown in FIG. 20. When the mandrel 140 is not paused 416, the mandrel 140 continually moves 402 through the placement station 100 during the placement process.

Referring to FIGS. 4, 5, and 24, the method 400 can further include identifying 418 a tray 190. For example, the type of tray 190a, 190b, and 190c of tray 190, the location of the tray 190 with respect to the placement station 100 and/or manufacturing cell 110, and/or the number and type of preform 150 in the tray 190 is identified 418. The identification 418 can include identifying 420 a tray 190 that stores a preform 150 of an unhardened fiber-reinforced material 152. Identifying 420 the tray 190 also identifies the type and/or number of preform(s) 150 stored in the tray 190.

In an example when the tray 190c of FIG. 5 is used, identification 418 includes identifying 422 a tray 190c that stores one or more large preforms156 and discrete preforms 154. As mentioned with respect to FIG. 5, the discrete preforms 154 can be disposed at locations 195 in which a frame 780 (shown in FIG. 29) will be installed relative to the large preform(s) 156. As discussed above, the locations 781 of the fuselage 766 correspond to locations 195 in the tray 190. Accordingly, the discrete preforms 154 are arranged for placement at locations 781 in which the frame 780 is to be installed relative to the one or more large preforms 156. In such an example, the identification 418 includes identifying 422 a tray 190c with discrete preforms 154 and large preforms 156 that are kitted.

In another example when the set 191 shown in FIG. 4 is used, the identification 418 includes identifying 422 one or more trays 190a and 190b having different types of preforms 150, such as one or more large preforms 156 and the discrete preforms 154. The identification 420, 422 includes an indication of the type of preform 154, 156 stored in each identified 420, 422 tray 190a, 190c. For example, step 418 includes identifying 420 that the first type of tray 190a include discrete preforms 154 and that the second type of tray 190b includes one or more large preforms 156.

The identification 418 can further include identifying 424 a tray 190 having one or more recesses 198. For example, the identification 420 can include identifying 424 that the tray 190 includes recesses 198 for storing multiple preforms 150. When the set 191 of FIG. 4 or the tray 190c of FIG. 5 is used to store different types of preforms 150, the identification 418 includes identifying 424 the tray 190a, 190b, or 190c that includes recess 198 for the discrete preforms 154 and for the one or more large preforms 156.

Identification 418 can be performed via camera or other sensing component, or based on instructions 124 in the program 122. Referring to FIG. 2, when the identification 418 is performed by camera or other sensing component, the sensors 136 of one or more PNP machine 130 acquire information about the tray 190 and sends the tray information to the cell controller 120 as part of the sensor data 137. The acquired information can be image data of the tray 190 and/or preform(s) 150 in the tray 190, radio frequency (RF) data (e.g., from an RF identification tag associated with the tray 190 and/or preform 150 detected and/or emitted at a sensor 136 for detecting RF signals), data from a bar code or other code on the tray 190 and/or preforms 150, detection and ranging data indicating a location and/or shape of the tray 190 and/or preforms 150 (e.g., from a sensor 136 configured for RADAR or LIDAR), and/or any other data that enables the cell controller 120 to send the appropriate instructions 124 to the PNP machine(s) 130 based on the type of tray 190 and/or preform 150.

Prior to identifying 418 the tray 190, the preform(s) 150 are disposed 426 in the tray 190. The disposition 426 of the preform(s) 150 can occur when the tray 190 is positioned within the placement station 100 or can occur at a different system or station within the manufacturing line 10 before the tray 190 is moved to the placement station 100. When the tray 190c of FIG. 5 is used, the discrete objects 20 are disposed 426 in the tray 190 with a large object 22 at locations 195 in which a frame 780 (shown in FIG. 29) is to be installed relative to the large object 22. In such an example, disposing 426 the different types of objects 20 and 22, such as the preforms 154 and 156, is considered kitting the objects 20 and 22 in the tray 190c.

Disposing 426 one or more of the object 18 in the tray 190 can further include associating an identification tag (e.g., an RFID tag, bar code, or other optical code) with the tray 190 and/or preform 150. For example, the data can include which tray 190 is in the placement system 50, which part or model is to be assembled by the placement system 50, which components have been incorporated with the tray 190 before entering the placement system 50, which objects 18 have been disposed 426 in the tray 190, which locations the objects 18 are located in the tray 190, etc. The cell controller 120 can use this data, possibly encoded in the data 137 if the PNP machine 130 is obtaining the data from the identification device, to send the appropriate instructions 124 to the PNP machines 130.

When the tray 190 includes the optional vacuum channels 200 and vacuum system 202, as shown in FIG. 7, the vacuum pressure can be applied after the preforms 150 are disposed 426 in the tray 190. When the optional release film 26 is used, the release film 26 is applied to the tray 190 before the preforms 150 are deposited 426.

Referring to FIGS. 24, 1, and 2, placing 404 the strong back 180 is performed by at least one PNP machine 130. When the optional release film 26 is used with the strong back 180, the release film 26 is applied to the strong back 180 before the strong back 180 is placed 404. During the placement 404, the strong back 180 is attached to at least one PNP machine 130 by, for example, attaching the end effector(s) 134 to strong back 180. However, the strong back 180 can be attached to the PNP machine 130 near the end effector 134. The attachment between the end effector 134 and/or PNP machines 130 and the strong back 180 enables the gripping system 139 and/or vacuum system 138 to work with the strong back 180 to pick and place the objects 18, as will be described in more detail below. The PNP machine(s) 130 are configured to move the strong back 180 at least to the tray 190 and to the mandrel 140, but may have further freedom of movement within the placement station 100, depending on the operations to be performed and/or the structure 12 to be assembled. For example, the PNP machine 130 can further move the strong back 180 to a location in the placement station 100 where the layer(s) 206 (shown in FIG. 18) are stored.

In the exemplary embodiment, the cell controller 120 controls the PNP machine(s) 130 to place 404 the strong back 180 at the tray 190 and/or preform 150. In some examples, the identification 418 of the tray 190 is used to determine where to place 404 the strong back 180 in relation to the tray 190 and/or preform 150. For example, when the cell controller 120 identifies 418 multiple trays 190 or multiple preforms 150 in the placement station 100, the cell controller 120 uses the identification 418 to place 404 the strong back 180 in relation to a particular tray 190 and/or preform 150. Even when one tray 190 or preform 150 has been identified 418, the cell controller 120 can use the position information in the identification 418 to place 404 the strong back 180 at a particular position in the placement station 100.

Placing 404 the strong back 180 includes at least one of placing 428 the strong back 180 at the tray 190 via at least one of the PNP machines 130 and placing 430 the strong back 180 at the preform 150 via at least one of the PNP machines 130. Placing 428 the strong back 180 at the tray 190 can include aligning the strong back 180 with the tray 190 using the strong back indexing elements 182 and the tray indexing elements 192. As the strong back indexing elements 182 engage the tray indexing elements 192, the strong back 180 is placed 428 in alignment with the tray 190.

Alternatively or additionally, the strong back 180 is placed at the preform 150. For example, sensors 136 can determine where the preform 150 is within the placement station 100 and/or tray 190, and the PNP machine(s) 130 places 430 the strong back 180 at the preform 150. For example, the strong back 180 is placed over an object 18, such as the preform 150. The determination of where the preform 150 is located can be part of the identification 418 of the tray 190 or a separate step not reliant on whether the tray 190 is identified 418. Because the preform 150 is stored in the tray 190, placing 428 the strong back 180 and the tray 190 also places 430 the strong back 180 at the preform 150. In another example where the indexing elements 182, 192 are not included and/or where the tray 190 is not identified 418, the cell controller 120 operates the PNP machines 130 to place 430 the strong back 180 at the preform 150, which causes the strong back 180 to also be placed 428 at the tray 190.

When the preform 150 is, for example, the layer(s) 206 (shown in FIG. 18), the layer 206 (or other type of object 18 or preform 150) may not be stored in a tray 190. Accordingly, the cell controller 120 can operate the PNP machine 140 to place 430 the strong back 180 at the preform 150, but not at the tray 190.

Referring to the configuration of the strong back 180 shown in FIG. 16, placing 404 the strong back 180 can include placing 404 the strong back 180 that is arcuate. Referring again to FIGS. 24 and 8 to 10, depending on the configuration of the strong back 180, the placement 404 of the strong back 180 can include placing 432 a recess 184 of the strong back 180 at the preform 150 via at least one of the PNP machines 130. The placement 404 and/or 432 may include covering the preform 150 with the strong back 180. This process can include indexing the strong back 180 to a recess 198 of the tray 190, for example via a cup-and-cone indexing system as is described with respect to FIGS. 8 and 9, in order to ensure a known and repeatable positioning of the strong back 180 relative to the recess 198.

When the strong back 180 is configured as in FIGS. 16 and 17 to have multiple recesses 184, one or more recesses 184 of the strong back 180 are placed 432, 434 at one or more respective preforms 150. For example, multiple recesses 184 of the strong back 180 are placed 434 at multiple preforms 150. In one example, each recess 184 of the multiple recesses 184 is placed 434 at a particular respective preform 150 of the multiple preforms 150. In another example, one recess 184 is placed 432, 434 at multiple preforms 150, such as multiple discrete preforms 154. As shown in FIG. 17, the multiple recesses 184 of the strong back 180 can each be configured to be placed 434 at a particular type of preform 150 such that the multiple recesses 184 maintain a kitted arrangement of the discrete preforms 154 and large preforms 156.

In embodiments where the PNP machine(s) 130 directly pick up the preform(s) 150 without the use of the strong back 180, the placement step(s) 404 is modified by placing the end effector 134 of the PNP machine 130 rather than placing the strong back 180, to the extent that the above description applies to the configuration of the end effector 134.

When the PNP machines 130 are be operated 302 (shown in FIG. 22) in the asynchronous phase 354 (shown in FIG. 23), the placement 404 of each PNP machine 130 can be different depending on the preform(s) 150 to be moved by each PNP machine 130. Further, during the asynchronous phase 354, one or more PNP machines 130 can also include move in the X direction(s) during placement 404. Additionally or alternatively, when the PNP machines 130 are divided into subsets, each PNP machine 130 in the first subset 126 (shown in FIG. 2) moves toward or apart in the X directions during any part of the placement 404 of each PNP machine 130 in the first subset 126.

When the PNP machines 130 are operated 304 (shown in FIG. 22) in the synchronous phase 356 (shown in FIG. 23), the PNP machines 130 are simultaneously placed 404 at the tray 190 and/or the large preform 156. When a subset of PNP machines 130, such as the second subset 128 (shown in FIG. 2), is operating in the synchronous phase 356, the PNP machines 130 may be moved in the X direction(s) (shown in FIG. 3) with respect to each other to be at the appropriate spacing for the dimensions of the large preform 156 during the placement 404.

After the PNP machine 130 and/or strong back 180 is placed 404 with respect to the preform 150, the preform 150 is pick up by the PNP machine 130 and/or the strong back 180. Referring to FIGS. 24 and 2, vacuum pressure 160 is applied 406 to hold the preform(s) 150 with respect to the PNP machines 130 and/or strong back 180. More specifically, the cell controller 120 operates 436 one or more vacuum systems 138 to apply 406 the vacuum pressure 160 to hold the preform(s) 150. When the strong back 180 is not used, the vacuum system 138 is operated 436 to apply 406 the vacuum pressure 160 directly to the preform 150 to hold the preform 150 at the PNP machine 130. When the strong back 180 is used to hold the preform(s) 150, as shown in FIGS. 9 to 12, the vacuum pressure 160 is applied 406 through the strong back 180 to the preform 150. For example, the vacuum system 138 is operated 436 to apply 406 the vacuum pressure 160 through the vacuum channels 188 that are coupled (e.g., in flow communication) with at least one recess 184 of the strong back 180.

Referring to FIGS. 24, 2, and 9 to 12, applying 406 the vacuum pressure 160 includes holding 438 the preform 150 in contact with the strong back 180. For example, when the vacuum pressure 160 is applied 406, the preform 150 is removed from the tray 190 and pulled against the strong back 180 by the vacuum pressure 160. Accordingly, the application 406 of the vacuum pressure 160 picks up the preform 150. Depending on the dimensions of the strong back 180 and the tray 190, the movement of the preform 150 from the tray 190 to the strong back 180 caused by the application 406 of the vacuum pressure 160 may be slight or large. If the optional vacuum pressure 147 has been applied through the tray 190, the vacuum system 144 is deactivated to cease the vacuum pressure 147 so the applied 406 vacuum pressure 160 can begin holding the preform 150.

When the strong back 180 includes one or more recesses 184, applying 406 the vacuum pressure 160 holds 440 the preform 150 in contact with the recess 184. When the strong back 180 includes multiple recesses 184 as shown in FIGS. 16 and 17, applying 406 the vacuum pressure 160 includes holding 442 multiple preforms 150 in contact with the multiple recesses 184. As discussed above with respect to step 434, each preform 150 can be held 442 in contact with a particular recess 184 or multiple preforms 150 can be held 442 in contact with a particular recess 184. Further, the application 406 of the vacuum pressure 160 can be selective applied only at the recess(es) 184 in which a preform 150 has been received. Selective application 406 of the vacuum pressure 160 at the different recesses 184 can prevent picking up objects that are not intended to be placed 410 on the mandrel 140.

When the preform(s) 150 includes multiple types of preforms, such as discrete preforms 154 and one or more large preforms 156, the vacuum pressure 160 is applied 406 to the discrete preforms 154 and the one or more large preform 156. More specifically, applying 406 the vacuum pressure 160 holds 444 the one or more large preforms 156 and the discrete preforms 154 in contact with the strong back 180. An example of the holding 444 is shown in FIG. 17. When the discrete preforms 154 at least partially contact an adjacent large preform 156, as shown in FIG. 18, applying 406 the vacuum pressure 160 includes holding 446 each of the discrete preforms 154 in contact with at least one large preform 156. The holding steps 444 and 446 occur simultaneously when the strong back 180 is configured as in FIG. 17; however, the holding step 446 can occur without the holding step 444 when the PNP machines 130, without the strong back 180, are used to place kitted preforms 154 and 156.

Further, the holding step 442 can be combined with either or both of the holding steps 444 and 446 when different types of preforms 150 are being used to assemble the structure 12. For example, at least one of the multiple recesses 184 holds 442, 444 one or more discrete preforms 154 and another of the multiple recesses 184 holds 442, 444 the one or more large preform 156. Depending on the configuration of the multiple recesses 184, the preforms 154 and 156 can also be held 446 in contact with each other while held 442 in the multiple recesses 184.

Referring again to FIGS. 24, 2, and 10 to 13, the strong back 180 and/or preform 150 is transported 408 to the mandrel 140. More specifically, while the vacuum pressure 160 is being applied 406 to hold the preform 150, the strong back 180 and/or preform 150 is transported 408. During the transporting 408, the PNP machines 130 follow a path from the tray 190 to the mandrel 140 according to the program 122 in the cell controller 120.

Referring additionally to FIG. 3, the path is in at least in the Y directions and Z directions and optionally in the X directions, and at least the distal end 135 of the PNP machine 130 moves along the path to perform the transportation 408. In one example, the PNP machine 130 moves in the +Y direction at the tray 190 and the PNP machine 130 or end effector 134 moves in the -Z direction toward the tray 190 and/or preform 150 to be placed 404. After the vacuum pressure 160 is applied 406, the transportation 408 includes moving the PNP machine 130 or end effector 134 in the +Z direction to lift 454 the strong back 180 and/or preform 150, moving the PNP machine 130 in the -Y direction toward the mandrel 140, and moving the PNP machine 130 and/or end effector 134 in the -Z direction toward the mandrel 140.

When the PNP machines 130 are be operated 302 (shown in FIG. 22) in the asynchronous phase 354, the path of each PNP machine 130 can be different depending on the preform(s) 150 to be moved by each PNP machine 130. Further, during the asynchronous phase 354, the path of one or more PNP machines 130 can also include movement in the X direction(s) during placement 404 and/or transportation 408. Additionally or alternatively, when the PNP machines 130 are divided into subsets, each PNP machine 130 in the first subset 126 (shown in FIG. 2) moves toward or apart in the X directions during any part of the path of each PNP machine 130 in the first subset 126 during the transportation 408.

When the PNP machines 130 are operated 304 (shown in FIG. 22) in the synchronous phase 356 (shown in FIG. 23), the path of all of the PNP machines 130 are parallel to each other to avoid distorting of the strong back 180 and/or preform 150 as the PNP machines 130 perform the transportation 408. When a subset of PNP machines 130, such as the second subset 128 (shown in FIG. 2) is operated in the synchronous phase 356, all of the PNP machines 130 in the subset 128 follow parallel paths during the transportation 408 and any optional movement in the X direction(s) is similar for all of the PNP machines 130 in the subset 128.

In one example, transporting 408 to the mandrel 140 can include transporting 448 the preform 150 to the mandrel 140 via the PNP machines 130. For example, the preform 150 is transported 448 from where the preform 150 is picked up to where the preform 150 is be placed on the mandrel 140. When the strong back 180 is not used, the PNP machine(s) 130 transports 448 the preform 150 to the mandrel 140.

Additionally or alternatively, transporting 408 to the mandrel 140 includes transporting 450 the strong back 180 to the mandrel 140 via the PNP machines 130. Transporting 450 the strong back 180 includes operating the PNP machines 130 synchronously to carry the strong back 180 or operating a single PNP machine 130 independently to carry the strong back 180. When the strong back 180 is used, the PNP machine(s) 130 transports 450, 448 the strong back 180 and the preform 150 to the mandrel 140. More specifically, the PNP machine(s) 130 transports 450 the strong back 180, which in turn is holding 438 the preform 150 to transport 448 the preform 150.

Transporting 450 the strong back 180 to the mandrel 140 can include positioning 452 the strong back 180 over the mandrel 140. More specifically, the strong back 180, having the preform 150, is transported 450 from the tray 190 to be positioned 452 over the mandrel 140 to where the preform 150 is to be placed 410 on the mandrel 140. For example, the strong back 180 is moved away from the tray 190 in the -Y direction (shown in FIG. 3) to be positioned 452 over the mandrel 140.

In some embodiments, the strong back 180 is lifted 454 (e.g., moved in the +Z direction shown in FIG. 3). For example, the strong back 180 is lifted 454 from the tray 190 to disengage the indexing elements 182 and 192, as shown in FIG. 10. The lifting 454 can also include lifting 454 the strong back 180 into position 452 over the mandrel 140. The positioning 452 and/or lifting 454 are part of the path along which the transporting 408 occurs.

Transporting 408 can further include aligning 456 the strong back 180 with the mandrel 140. More specifically, as or after the strong back 180 is positioned 452 over the mandrel 140 and/or lifted 454 over the mandrel 140, the strong back 180 is aligned 456 with the mandrel 140. The alignment 456 can include moving (e.g., lowering) the strong back 180 toward the mandrel 140. As the strong back 180 is moved toward the mandrel 140, the strong back indexing elements 182 engage the mandrel indexing elements 148 to bring the strong back 180 into alignment 456 with the mandrel 140 during the transporting 408.

The transporting 408 can end when the preform 150 is in contact with the mandrel 140. More specifically, the preform 150 can be resting against, or be within a tolerance of, a surface of the contoured cross-section 143 (shown in FIG. 3) of the mandrel 140 to be in contact with mandrel 140. Alternatively, the strong back 180 can compress the preform 150 against the mandrel 140 to end the transportation 408. The compression of the preform 150 can ensure the final shape of the preform 150 and/or secure 336 (shown in FIG. 22) the preform 150 to the mandrel 140. The optional release film 26 can prevent the preform 150 from sticking to the strong back 180 when the strong back 180 compresses the preform 150 against the mandrel 140 to facilitate placement 410.

For example, as shown in FIGS. 12 and 13, transporting 450 the strong back 180 to the mandrel 140 via the PNP machines 130 includes aligning 456 indexing elements 182 (e.g., the indexing pins 183 shaped as cones) at the strong back 180 with indexing elements 148 (e.g., the indexing cups 149 shaped complementary cups) at the mandrel 140. For example, the strong back 180 is transported 450 in the -Y direction and/or -Z direction (shown in FIG. 3) to bring the strong back indexing elements 182 into the contact with the mandrel indexing elements 148. The shape of the indexing elements 148 and 182 guides the strong back 180 into alignment 456 with the mandrel 140 as the strong back 180 is transported 450 toward the mandrel 140. The alignment 456 can include indexing the strong back 180 to a cut-out 142 of the mandrel 140, for example via a cup-and-cone indexing system, in order to ensure a known and repeatable positioning of the strong back 180 relative to the cut-out 142.

Additionally or alternatively, referring additionally to FIG. 16, transporting 450 the strong back 180 to the mandrel 140 includes aligning 458 the recess 184 of the strong back 180 with a cut-out 142 in the mandrel 140. The alignment 458 of the recess 184 and cut-out 142 can occur during the alignment 456 of the indexing elements 182 and 148. Additionally or alternatively, the program 122 in the cell controller 120 includes coordinates to where the recess 184 is aligned 458 with the cut-out 142, and/or the cell controller 120 uses position and/or image information in the data 137 received from the sensor(s) to align 458 the recess 184 with the cut-out 142. This example can be used when the indexing elements 148 and/or 182 are omitted, but can also be used in addition to the indexing elements 148 and 182. The alignment 456 and/or 458 enables the preform 150 to be deposited in the cut-out 142.

When multiple types of preforms 150 are assembled into structure 12, as shown in FIGS. 17 and 18, the first type of preform 150, such a large preform 156 is transported 408 to the mandrel 140. Further, a second type of preform 150, such as a discrete preform 154, is transported 408 and/or 460 to the mandrel 140. The different types of preforms 150 can transported 408, 460 to the mandrel 140 in series or simultaneously. In one example, a single PNP machine 130 transports 408, 460 the different types of preforms 150 in series. In another example, more than one PNP machine 130 transports 408, 460 the different types of preforms 150 in series and/or simultaneously depending on the preforms 150 being placed on the mandrel 140 and/or the structure 12 being assembled. Additionally or alternatively, transporting 408 includes transporting 460 one or more large preforms 156 and discrete preforms 154 to the mandrel 140 via the PNP machines 130 while maintaining an arrangement of the large preform(s) 156 and the discrete preforms 154.

When the mandrel 140 includes mandrel segments 235 as shown in FIG. 21, transporting 408 the preform 150 and/or strong back 180 includes transporting 462 to the mandrel segments 235 via the PNP machines 130. For example, the preform 150 and/or strong back 180 is transported 462 to the particular mandrel segment 235 positioned in the placement station 100. When multiple placement stations 100, 100', 100" perform the method 400 on a respective mandrel segment 235, the transportation 462 at each placement station 100, 100', 100" can occur at different or same rates.

Referring to FIGS. 24, 13, and 14, the preform(s) 150 are placed 410 on the mandrel 140. The placement 410 occurs after the strong back 180 and/or preform(s) 150 is transported 408 to the mandrel 140. The method 400 includes placing 410 the preform 150 onto the mandrel 140. Preferably, the preform 150 is placed 410 into the mandrel 140 while the preform 150 contact the mandrel 140. More specifically, the transportation 408 of the strong back 180 and/or preform 150 results in the preform 150 contacting the mandrel 140. In a particular embodiment, transportation 408 of the strong back 180 results in the strong back 180 compressing the preform 150 against the mandrel 140. The preform 150 is then placed 410 while contacting the mandrel 140 to prevent distortion of the preform 150 that may be caused by dropping the preform 150 from a distance away from the mandrel 140. However, a small gap may be present between preform 150 and the mandrel 140 after the transportation 408 depending on the dimensional tolerance of the strong back 180, preform 150, and mandrel 140.

The placement 410 include removing 464 the preform 150 from the strong back 180 (or from the PNP machine 130 when the strong back 180 is not used). The preform 150 is removed 464 from the strong back 180 after the strong back 180 is positioned 452 over the mandrel 140 and/or aligned 456, 458 with the mandrel 140. More specifically, the preform 150 is removed 464 from the recess 184 or the surface 185 (shown in FIG. 17) of the strong back 180 and transferred to the cut-out 142 or the surface 145 (shown in FIG. 3) of the mandrel 140.

The placement 410 and/or removal 464 of the preform 150 can include lifting 468 the strong back 180 and/or PNP machine 130 away from the mandrel 140 and the preform 150, especially when the strong back 180 has compressed the preform 150 against the mandrel 140 and/or the release film 26 has been applied between the surface 185 (shown in FIG. 17) and the preform 150.

Placement 410 can additionally or alternatively include releasing 470 the vacuum pressure 160 to place 410 the preform 150 onto the mandrel 140. More specifically, the cell controller 120 deactivates the vacuum system 138 to release 470 the vacuum pressure 160 holding the preform 150 at the strong back 180. For example, after or during placement, the vacuum pressure 160 applied 406 to the strong back 180 may be released 470 in order to facilitate removal 464 of the preform 150 from the strong back 180 and/or placement of the preform 150 in a desired location (e.g., a desired location on the mandrel 140). When placement 410 includes lifting 468 the strong back 180, the release 470 of the vacuum pressure 160 can occur before or while the strong back 180 is lifted 468.

When more than one type of preform 150 is being placed 410, the placement 410 includes placing 472 the one or more large preforms 156 and the discrete preforms 154 onto the mandrel 140. The large preform(s) 156 can be placed 472 separately from the discrete preforms 154. Alternatively, the large preform(s) 156 can be placed 472 with the discrete preforms 154 while the arrangement of the large preform(s) 156 and discrete preforms 154 is maintained. For example, when the arrangement is maintained during transport 460, the large preform(s) 156 and discrete preforms 154 are transferred from the strong back 180 to the mandrel 140 without changing the relative positions of the preforms 154 and 156 to each other to place 472 the preforms 154 and 156.

When the PNP machine(s) 130 are operated 302 (shown in FIG. 22) in the asynchronous phase 354 (shown in FIG. 23), placement 410 includes releasing 470 the vacuum pressure 160 to remove 464 at least one discrete object 20 from the strong back 180 which the discrete object 20 contacts the mandrel 140. When the PNP machines 130 are operated 304 (shown in FIG. 22) in the synchronous phase 356 (shown in FIG. 23), placement 410 includes releasing 470 the vacuum pressure 160 to remove 464 the large object 22 from the strong back 180 while the large object 22 contacts the mandrel 140.

When the mandrel 140 includes multiple mandrel segments 235, the placement 410 includes placing 474 the preform 150 onto a mandrel segment 235. The placement 474 onto the mandrel segments 235 can occur at one or more placement stations 100, 100', and/or 100". When mandrel segments 235 are to receive different types of preforms 150, the placement 474 of the different types of preforms 150 includes placing 472 the one or more large preforms 156 and the discrete preforms 154 onto the mandrel segment 235.

During and/or after placement 410, the strong back 180 is lifted 468 away from the mandrel 140 (e.g., by moving in the +Z direction shown in FIG. 3). The mode 412 repeats by moving the strong back 180 away from the mandrel 140 to again be placed 404 at the tray 190 and/or preform 150. The steps of placing 404, applying 406, transporting 408, and placing 410 of the mode 412 repeat until an asynchronous phase 354 and/or a synchronous phase 356 (shown in FIGS. 22 and 23) is completed and/or until all of the preforms 150 have been placed 410 on the mandrel 140 or mandrel segment 235.

After each or all of the preforms 150 are placed 410, the preform(s) 150 can optionally be secured 336 to the mandrel 140 as described with respect to FIG. 22. For example, the method 400 further includes securing 336 at least the large preform(s) 156 to the mandrel 140. In an embodiment that includes the optional mandrel vacuum system 144 (as shown in FIG. 13), securing 336 includes securing the preforms 150 at the mandrel 140 and/or mandrel segment 235 via the vacuum system 144. When the mandrel 140 includes mandrel segments 235, the securing 336 can occur at each mandrel segment 235.

Further, after the last placement 410, post-placement steps can be performed as part of the method 400 and/or as part of a post-placement method 500 (shown in FIG. 25). The post-placement steps are described in more detail with respect to FIG. 25; however, some examples of the steps are provided below with respect to FIGS. 24A and 24B. Further, the data of the identification device of the mandrel 140 can be updated to include which one or more object 18 have been placed on the mandrel 140 for use by subsequent stations and/or systems in the manufacturing line 10.

For example, when the mandrel 140 includes mandrel segments 235, the method 400 can include assembling 504 multiple mandrel segments 235 together. More specifically, the multiple mandrel segments 235 are assembled 504 together after the PNP machines 130 have completed instructions 124 in the program 122 corresponding to the mandrel segments 235. For example, the multiple mandrel segments 235 are assembled 504 together into a half-barrel section 770 (shown in FIG. 29). Accordingly, the method 400 includes assembling 504 the mandrel segments 235 together. In further embodiments, the vacuum pressure 147 is applied at the mandrel segment 235 to hold the preforms 150 in place.

When the layer(s) 206 is included in the structure 12, the method 400 includes placing 516 the layer(s) 206 over multiple preforms 150 disposed on the mandrel 140. For example, the PNP machines 130 can be used to place 516 the layer 206 similarly to how the preforms 150 are placed during the mode 412. Alternatively, the layer 206 can be placed manually and/or by different machines within the manufacturing line 10. When the mandrel 140 includes mandrel segments 235, the layer 206 is placed 516 after the mandrel segments 235 have been assembled 504. The layer 206 and preforms 150 are hardened 520, such as co-cured 524. In a further embodiment, the method 300 further includes placing 516 the layer 206 of unhardened fiber-reinforced material 152 over multiple preforms 150 disposed on the mandrel 140 and hardening 520, such as co-curing 524, the layer 206 and the preforms 150.

The method 400 of FIGS. 24A and 24B can be tailored to the components of the placement system 50 and/or the particular structure 12 being assembled by combining the variations of steps of moving 402, identifying 418, placing 404, applying 406, transporting 408, and/or placing 410. The following examples are provided, but additional combinations are also possible.

When the preforms 150 are kitted, the method 400 can include identifying 422 the tray(s) 190, placing 428 the strong back 180 at the tray(s) 190, transporting 460 the large preforms 156 and discrete preforms 154 to the mandrel 140 while maintaining the arrangement of the large preforms 156 and the discrete preforms 154, and placing 472 the large preforms 156 and the discrete preforms 154 onto the mandrel 140. In this example, the method 400 can further include holding 442 the multiple preforms 150 in multiple recesses 184 of the strong back 180 and/or holding 444 and/or 446 the first and second types of preforms 150.

In another example when multiple types of preforms 150 are to be placed, the tray 190 stores an array of multiple preforms 154 and/or 156, for example as shown in FIG. 5, and the strong back 180 includes multiple recesses 184 for each preform 154 or 156 in the array stored in the tray 190. In this embodiment, placing 432 the recess 184 of the strong back 180 at the preform 150 includes placing 434 the multiple recesses 184 of the strong back 180 at the multiple preforms 154 and/or 156 and applying 406 the vacuum pressure 160 includes applying the vacuum pressure 160 through multiple vacuum channels 188 to hold 442 the multiple preforms 154 and/or 156 in contact with the multiple recesses 184.

When the mandrel 140 includes multiple mandrel segments 235 that are radial (shown in FIG. 21), the method 400 includes at least moving 414 one or more mandrel segments 235, transporting 462 to one or more mandrel segment 235, and placing 474 preforms 150 on one or more mandrel segments 235.

When the strong back 180 includes multiple strong back segments 181 as shown in FIG. 16, the method 400 includes placing 404 one or more strong back segments 181 at the tray 190 and/or preform 150, applying 406 the vacuum pressure 160 at the one or more strong back segments 181, transporting 450 the one or more strong back segments 181 to the mandrel 140, and placing 410 the preforms 150 on the mandrel 140 using each strong back segment 181. The strong back segments 181 can each be used by a different PNP machine 130, which can enable each strong back segment 181 to be used independently of one or more other strong back segments 181. Alternatively, more than one PNP machine 130 is assigned to a strong back segment 181, which can enable larger strong back segments 181 and/or preforms 150 to be moved to the mandrel 140, in series or simultaneously with one or more other strong back segments 181. The strong back segments 181 can each move at the same rate in the same direction, or movements of the strong back segments 181 can be independent of the movement of any other strong back segment 181 (as long as the strong back segments 181 do not inadvertently contact using the independent movements).

When using a placement system 50 that does not include the strong back 180, the method 400 includes step 404 where the placement 404 is modified to place the PNP machine 130 (rather than the strong back 180) at the tray 190 and/or preform 150, step 406 where the vacuum pressure 160 is applied 406 at the PNP machine 130 and/or end effector 134, transporting 448 the preform 150, and placing 410 the preform 150 from the PNP machine 130 and/or end effector 134 onto the mandrel 140. Similarly, for such a placement system 50, the mode 412 includes steps of placing 404, applying 406, transporting 448, and placing 410 with the modifications previously described.

FIG. 25 is a flowchart illustrating a post-placement method 500 for operating the placement system 50 shown in FIGS. 1 to 21. More specifically, FIG. 25 illustrates the post-placement method 500 for operating the placement system 50 and/or manufacturing line 10 (shown in FIG. 1) at least partially during and/or after the method 400 shown in FIGS. 24A and 24B.

Referring to FIGS. 25 and 21, the method 500 includes an assembly process 502. The assembly method 502 is preferably preformed when the mandrel 140 includes multiple mandrel segments 235. The assembly process 502 includes assembling 504 multiple mandrel segments 235 together. Assembling 504 the mandrel segments 235 together forms the mandrel 140. When the structure 12 being assembled is a portion 768 of a fuselage 766 (shown in FIG. 29), multiple mandrel segments 235 are assembled 504 together into a half-barrel section 770.

The assembly method 502 can optionally including moving 506 the mandrel 140 and/or mandrel segments 235 and/or positioning 508 the mandrel segments 235. More specifically, before the mandrel segments 235 are assembled 504 together, the mandrel segments 235 can be moved 506 to the assembly station 105. During or after the moving 506 of the mandrel segments 235, the mandrel segments 235 are positioned 508 with respect to each other to be assembled 504 together.

When the mandrel segments 235 are each a radial segment of the mandrel 140, each mandrel segments 235 is positioned 510 in a different radial zone Z1, Z2, or Z3 of the mandrel 140. For example, as the mandrel segments 236, 238, and 240 move 506 from the placement station(s) 100, 100', and 100" to the assembly station 105, each mandrel segment 236, 238, and 240 is moved 506 to be positioned 510 in a respective radial zone Z3, Z1, or Z2. More specifically, due to the correspondence between the mandrel segments 236, 238, and 240 and the radial portions 212, 208, and 210, each mandrel segment 236, 238, and 240 is positioned 510 in a respective radial zone Z3, Z1, or Z2 before the mandrel 140 is assembled 504 from the mandrel segments 236, 238, and 240.

Assembling 504 the mandrel segments 235 can include applying 512 fasteners 242 to the mandrel segments 235. For example, the second mandrel segment 238 is assembled 504 to one side of the third mandrel segment 240 by applying 512 fasteners 242 to the second mandrel segment 238 and the third mandrel segment 240. Similarly, the first mandrel segment 236 is assembled 504 to the other side of the third mandrel segment 240 by applying 512 fasteners 242 to the first mandrel segment 236 and the third mandrel segment 240. The fasteners 242 can be applied 512 after all of the mandrel segments 235 are positioned with respect to each other or can be applied 512 as the each mandrel segment 235 is positioned.

In a further example, assembling 504 the mandrel segments 235 includes installing seals between adjacent mandrel segments 235 before or after the fasteners 242 are applied 512 to the mandrel segments 235. In a particular example, the seals are installed such that forces act in a normal direction against the seals.

The mandrel 140 and/or mandrel segments 235 can be attached 514 to the mandrel support structure 106. More specifically, the mandrel segments 235, individually or assembled 504 together as the mandrel 140, are attached 514 to the mandrel support structure 106. In one example, the mandrel segments 235 are assembled 504 together, and then the mandrel 140 formed of the mandrel segments 235 is attached 514 to the mandrel support structure 106 using the fasteners 244. In another example, the mandrel segments 235 are attached 514 to the mandrel support structure 106, for example using the fasteners 244, and are then assembled 504 to an adjacent mandrel segment 235, for example using fasteners 242. Accordingly, assembling 504 the mandrel segments 235 together can include attaching 514 the mandrel segments 235 to the mandrel support structure 106.

The post-placement method 500 can further include placing 516 (e.g., by laying up) the layer(s) 206 on the preforms 150 and/or mandrel 140. The placement 516 of the layer 206 can be by manual lay-up, automated lay-up, or a combination of both. The layer 206 can be placed 516 before or after the assembly method 502. When preformed before the assembly method 502, the layer 206 is placed 516 over the preforms 150 that have already been placed 410 on the mandrel 140 and/or placed 474 on the mandrel segments 235. For example, a layer 206 is placed 516 on each mandrel segment 235 before the mandrel segments 235 are moved 506 to the assembly station 105. For example, the layer 206 is placed 516 at the placement station 100. The layers 206 are spliced 518 together after the assembly method 502 to create, for example, the skin 782 (shown in FIG. 29). When the layer 206 is placed 516 after the assembly method 502, the layer 206 is placed 516 over the assembled mandrel segments and/or over the mandrel 140 attached to the mandrel support structure 106. The layer 206 can be placed 516 at the assembly station 105 or at layer placement station (not shown) after the assembly station 105.

The post-placement method 500 can further include a hardening method 520. The hardening method 520 includes hardening at least the preforms 150. To perform the hardening method 520, the mandrel 140 and/or mandrel segments 235 are moved 522 to the hardening system 60 (shown in FIG. 1). The hardening method 520 can be performed before or after the assembly method 502, so the hardening system 60 be positioned before or after the assembly station 105 along the manufacturing line 10. When the layer(s) 206 is included in the structure 12, the hardening method 520 includes co-curing 524 the layer 206 and the preforms 150.

When the mandrel segments 235 are used and the hardening method 520 is performed before the assembly method 502, the preforms 150 and the layers 206 (if included) are co-cured 524 on each mandrel segment 235 and the mandrel segments 235 and then moved 506 to the assembly station 105 for assembly 504. The cured layers 206 are then spliced 518 together. In one example, the method 500 includes laying up 516 the skin layer 206 atop each mandrel segment 235 before the mandrel segments 235 have been assembled 504 together, co-curing 524 the skin layer 206 atop each mandrel segment 235 with the preforms 150 on corresponding mandrel segments 235 to create the skin 782, and splicing 518 the skin 782 together after assembling 504 the mandrel segments 235 together.

When the mandrel segments 235 are used and the hardening method 520 is performed after the assembly method 502, the mandrel segments 235 are assembled 504 together and moved 522 as the mandrel 140 to the hardening system 60 for the preforms 150 and layer 206 (if included) to be co-cured 524. The splicing 518 of the layer 206 is not needed when the mandrel segments 235 are assembled 504 together before the hardening method 520. In one example, the method 500 includes laying up 516 the skin layer 206 atop the mandrel segments 235 after the mandrel segments 235 have be assembled 504 together and co-curing 524 the skin layer 206 with the preforms 150 on the mandrel segments 235.

When the mandrel 140 is not formed of multiple mandrel segments 235, the post-placement method 500 can still be performed. For example, the method 500 can include moving 506 the mandrel 140 to the assembly station 105 if the mandrel 140 is to be supported by the mandrel support structure 106 and, then, attaching 514 the mandrel 140 to the mandrel support structure 106. When the layer(s) 206 is to be included in the structure 12, the method 500 includes placing 516 the layer 206 before or after the mandrel 140 is attached 514 to the mandrel support structure 106. The mandrel 140 (and the mandrel support structure 106) are moved 522 to the hardening system 60, and the preforms 150 and layer 206 are co-cured 524.

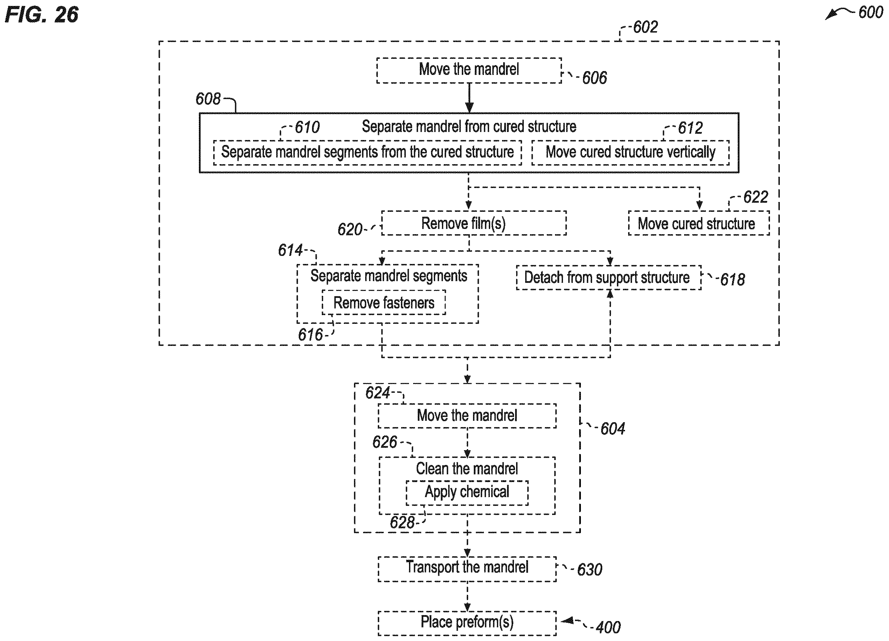

After the skin 782 is spliced 518 together or after the skin layer 206 is co-cured 524 with the preforms 150, the mandrel 140 can be reused 526. The mandrel 140 can be reused 526 as a whole or the mandrel segments 235 can each be reused 528. Details of the reuse 526, 528 are described with respect to the preparation method 600 shown in FIG. 26.

FIG. 26 is a flowchart illustrating a method 600 of preparing the mandrel 140 shown in FIGS. 2 to 20). The method 600 in whole or some of the steps of the method 600 can be used to perform the reuse 526 and/or 528 shown in the method 500 of FIG. 25. The preparation method 600 can include a separation method 602 and/or a cleaning method 604. Referring to FIGS. 26 and 1, the method 600 may occur after layup has been completed and the preforms 150 have been hardened 520.

To perform the separation method 602, the mandrel 140 can be moved 606 to the separation system 70. When the mandrel 140 includes mandrel segments 235, the mandrel 140 is moved 606 to the separation system 70 where the mandrel segments 235 can be separated from each other. In a particular example, the mandrel 140 moves 606 along the manufacturing line 10 in the process direction 14 from the hardening system 60 to the separation system 70. When objects 18 are not made from the unhardened fiber-reinforced material 152 and are not hardened but are placed and assembled into the structure 12, the mandrel 140 moves 606 along the manufacturing line 10 from the placement system 50 to the separation system 70 to remove the structure 12 from the mandrel 140.

According to the method 600, the separation method 602 includes separating 608 the mandrel 140 from the hardened structure 64. When the mandrel 140 includes mandrel segments 235, the separation 608 includes separating 610 the mandrel segments 235 from the hardened structure 64. In a particular example, separating 610 the mandrel segments 235 from the hardened structure 64 includes separating 610 the mandrel segments 235 from a cured portion 768 of the fuselage 766 (shown in FIGS. 28 and 29). For example, separation 608 form the hardened structure 64 can include moving 612 the mandrel segments 235 vertically to separate the hardened structure 64 from the mandrel segments 235. In one embodiment, the mandrel segments 235 are moved vertically downward, away from the hardened structure 64.

The separation method 602 can further include separating 614 the mandrel segments 235 from each other. The separation 614 of the mandrel segments 235 may include removing 616 the fasteners 242 that hold the mandrel segments 235 together. For example, the separation 614 of the mandrel segments 235 from each other includes removing 616 the fasteners 242 from the mandrel segments 235. Accordingly, when the mandrel 140 includes the mandrel segments 235, the separation method 602, and thus the preparing method 600, includes separating 610 the mandrel segments 235 from the hardened structure 64 and separating 614 the mandrel segments 235 from each other.

Additionally or alternatively, the separation 614 of the mandrel segments 235 can include detaching 618 the mandrel segments 235 from the mandrel support structure 106. For example, the fasteners 244 can be removed to detach 618 the mandrel segments 235 from the mandrel support structure 106. When the mandrel 140 does not include the mandrel segments 235 but is supported by the mandrel support structure 106, the mandrel 140 can be detached 618 from the mandrel support structure 106. The detachment 618 can occur during the separation method 602 or after the cleaning method 604.

When the release film(s) 62 are used, the separation method 602 includes removing 620 the release films 62 from the mandrel 140 and/or mandrel segments 235. For example, after the hardened structure 64 is separated 608 from the mandrel 140, the release films 62 are removed 620 from the mandrel 140 and/or the hardened structure 64. When the mandrel segments 235 are used, the release films 62 are removed 620 from the mandrel segments 235 after separating 610 the mandrel segments 235 from the hardened structure 64 and prior to separating 614 the mandrel segments 235 from each other.

As part of the separation method 602 or after the separation method 602, the hardened structure 64 can be moved 622 to a new location in the manufacturing line 10 for receiving further manufacturing processes. For example, the composite part 16 and/or hardened structure 64 moves 622 to the new location, such as to a different system, in the manufacturing line 10 to receive further manufacturing processes. The different system can be a fabrication or assembly system, and the further manufacturing processes can assemble the composite part 16 into a final product, such as the aircraft 750 (shown in FIGS. 28 and 29).

The preparation method 600 can further include the cleaning method 604. The cleaning method 604 can include moving 624 the mandrel 140 and/or mandrel segments 234 to the cleaning system 80. The cleaning method 604 include cleaning 626 the mandrel 140. When the mandrel segments 235 are used, the mandrel segments 235 are cleaned 626. The cleaning 626 can be done via scrubbing, rubbing, or other cleaning processes using, for example, moving brushes, scrubbers, etc.

The cleaning 626 includes applying 628 at least one cleaning chemical 82 to the mandrel 140 and/or mandrel segment(s) 235. The cleaning chemical(s) 82 can be a solvent, water, and/or soap. When more than one cleaning chemical 82 is applied 628, the different cleaning chemicals 82 are applied 628 sequentially and/or simultaneously. The application 628 of the cleaning chemicals 82 can occur before, during, or after other cleaning processes (e.g., scrubbing, rubbing, etc.). In alternative embodiment, the mandrel segments 235 are separated 614 from each other after the mandrel 140 is cleaned 626 as a whole; however, the mandrel segments 235 may be more thoroughly cleaned and/or cleaned in parallel if separated 614 from each other prior to cleaning 626.

When separation method 602 and, optionally the cleaning method 604, has been performed, the method 600 can include transporting 630 the mandrel 140 or the mandrel segments 235 to the start position 52 for placement station(s) 100, 100', and/or 100" that pick and place preforms 150 onto the mandrel 140 or the mandrel segments 235. The transporting 630 of the mandrel 140 can be the movement 402 that occurs during the placement method 400 (shown in FIGS. 24A and 24B). The method 600 then includes placing 400 the preforms 150 on the mandrel 140 or mandrel segments 235 via the PNP machines 130 after the mandrel segments 235 have been, for example, separated 614 and/or cleaned 626.

Referring to FIGS. 1 and 24 to 26, an overall example of a flow of a mandrel 140, such as a segmented mandrel having mandrel segments 235, through an assembly environment of the manufacturing line 10 is shown. FIG. 21 shows the mandrel segments 235, 236, 238, and 240 and the placement stations 100, 100', and 100" and the assembly station 105.

Referring to FIGS. 1, 21, and 24 to 26, the mandrel segments 236, 238, and 240 individually receive preforms 150 at the placement system 50, where PNP machines 130 place 410 preforms 150 onto the mandrel segments 236, 238, and/or 240 at predetermined locations. The mandrel segments 235 are moved 506 to the assembly station 105. The mandrel segments 235 are attached to each other (e.g., during the assembly 504) at unique radial positions after the mandrel segments 235 have been radially positioned 510. Alternatively or additionally, the mandrel segments 235 are attached 514 to a mandrel support structure 106.. For example, the mandrel segments 235 are attached 514 to the mandrel support structure 106 via fasteners 244.

Skin layer(s) 206 may be placed over the preforms 150 at the mandrel segments 236, 238, 240 and co-cured 524 with the preforms 150 to form a skin 782 integral with stringers 778 (shown in FIG. 29). This may be performed prior to or after the assembly 504 of the mandrel segments 236, 238, and 240. If performed after the assembly 504 of the mandrel segments 236, 238, and 240, then the skin layer 206 and preforms 150 may be hardened 520 into one integral whole in a single step. However, if performed prior to assembly 504, additional splicing 518 may be performed to facilitate the assembly method 502 after the skin layer 206 has been laid-up 516 and/or hardened 520. The mandrel support structure 106 proceeds to move 522 to a hardening system 60, where the preforms 150 are hardened. The hardening system 60 itself, or a location upstream or downstream of the hardening system 60, may form a boundary of a clean room environment.

The mandrel support structure 106 proceeds to a separation system 70, which removes or separates 608 a cured portion 768 of the fuselage 766 from the mandrel segments 235, by moving 612 the cured portion 768 of fuselage 766 vertically to separate it from the mandrel segments 235. The cured portion 768 of the fuselage 766 then proceeds to move 622 to a new location for receiving work (e.g., attachment to another section of the fuselage 766, installation of windows or frames, etc.).

Release films 62 (e.g., vacuum bagging materials, peel plies, separation films, etc.) are also removed 620 from the mandrel segments 235, either at the separation system 70, or at another separation station not shown. Then, the mandrel segments 235 are separated 614 from each other, by removing 616 the fasteners 242 from the mandrel segments 235. For example, the mandrel segments 235 are separated 614 from each other via the separation system 70, or at another separation station not shown. The individual mandrel segments 235 can be cleaned 626 at the cleaning system 80. The cleaning system 80 applies 628 a cleaning chemical 82, such as water, solvents, soap, etc., and may do so in combination with a scrubbing, rubbing, or other cleaning 626 (e.g., moving brushes, scrubbers, etc.). The mandrel segments 235 return, via transporting 630, to the placement system 50 for receiving additional preforms 150. This involves placing 400, 410 the preforms 150 onto the mandrel segments 235 via PNP machines 130 after the mandrel segments 235 have been cleaned 626.

### Examples

In the following examples, additional processes, systems, and methods are described in the context of system that coordinates the action of PNP machines, such as the PNP machines 130 described above.

Referring more particularly to the drawings, embodiments of the disclosure may be described in the context of aircraft manufacturing and service in method 700 as shown in FIG. 27 and an aircraft 750 as shown in FIGS. 28 and 29. During pre-production, the method 700 may include specification and design 702 of the aircraft 750 and material procurement 704. During production, component and subassembly manufacturing 706 and system integration 708 of the aircraft 750 takes place. Thereafter, the aircraft 750 may go through certification and delivery 710 in order to be placed in service 712. While in service by a customer, the aircraft 750 is scheduled for routine work in maintenance and service 714 (which may also include modification, reconfiguration, refurbishment, and so on).

Systems and methods embodied herein may be employed during any one or more suitable stages of the production and service described in method 700 (e.g., component and subassembly manufacturing 706, system integration 708, maintenance and service 714) and/or in any suitable component of aircraft 750 (e.g., airframe 752, systems 754, interior 756, propulsion system 758, electrical system 760, hydraulic system 762, environmental system 764). Each of the processes of method 700 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 28, the aircraft 750 produced by the method 700 may include an airframe 752 with a plurality of systems 754 and an interior 756. The airframe 752 includes a fuselage 766 that defines at least a portion of the interior 756. Examples of systems 754 include one or more of a propulsion system 758, an electrical system 760, a hydraulic system 762, and an environmental system 764. Any number of other systems may be included. Although an aerospace example is shown, the principles of the systems and methods described herein may be applied to other industries, such as the automotive industry.

FIG. 29 is a perspective view of the aircraft 750 shown in FIG. 28. The aircraft 750 includes the fuselage 766. The fuselage 766 can make up part of the airframe 752 (shown in FIG. 28) and define the interior 756 of the aircraft 750. The fuselage 766 also houses at least a portions of the systems 754. The fuselage 766 can be made up of portions 768 that are manufactured individually or as a subassembly using the manufacturing line 10, placement system 50, and methods 300, 400, 500, and/or 600 described with respect to FIGS. 1 to 26. For example, the portion 768 of the fuselage 766 can be the structure 12 assembled by the placement system 50.

As described above, a half-barrel section 770 is an example of the portion 768 of the fuselage 766 assembled using the placement system 50 and methods 300, 400, 500, and/or 600. Because the fuselage 766 makes up at least part of the airframe 752, the portion 768 and half-barrel section 770 can be considered parts of the airframe 752. In the example of FIG. 29, the fuselage 766 is fabricated from half-barrel sections 770 by joining an upper half-barrel section 772 to a lower half-barrel section 774 to form a respective full-barrel section 776-1, 776-2, 776-3, and 776-4. The full barrel sections 776-1, 776-2, 776-3, and 776-4 are joined serially to form the fuselage 766.

Each portion 768 or section 770 of the fuselage 766 includes stringers 778, frames 780, and skin 782. The skin 782 is attached to the stringers 778 and frames 780. In some embodiments, a frame filler 784 can be positioned between the skin 782 and the frames 780. After hardening method 520 (shown in FIG. 25), the stringer preforms 159 (shown in FIGS. 5 and 18) become the stringers 778 and the frame filler preforms 158 (shown in FIGS. 5 and 18) become the frame fillers 784. When the layer(s) 206 (shown in FIG. 18) is included in the structure 12 (shown in FIG. 1), the layer(s) 206 that is laid up 516 on the preforms 158 and 159 becomes the skin 782 after hardening method 520, as described with respect to FIG. 25.

In one embodiment, a part comprises a portion of airframe 752, and is manufactured during component and subassembly manufacturing 706. The part may then be assembled into an aircraft 750 during system integration 708, and then be utilized in service 712 until wear renders the part unusable. Then, during maintenance and service 714, the part may be discarded and replaced with a newly manufactured part. Inventive components and methods may be utilized throughout component and subassembly manufacturing 706 in order to manufacture new parts.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically-readable digital data storage media.

Although specific embodiments are described herein, the scope of the disclosure is not limited to those specific embodiments. The scope of the disclosure is defined by the following claims.

## Claims

1. A method (300) for assembling a structure (12) from objects (18) including discrete objects (20) and a large object (22) that is bigger than the discrete objects (20), the method (300) comprising:
operating (314) a first subset (126) of pick-and-place (PNP) machines (130) at a placement station (100) independently in an asynchronous phase (354) to place the discrete objects (20) onto a mandrel (140);
while operating (314) the first subset (126) in the asynchronous phase (354), for each of the PNP machines (130a) in the first subset (126): providing (306) new instructions (124) from a program (122) in response to detecting that prior instructions (124) from the program (122) have been completed by the PNP machine (130a), regardless of progress of other PNP machines (130) in the first subset (126);
operating (326) a second subset (128) of PNP machines (130) in tandem in a synchronous phase (356) to place the large object (22) onto the mandrel (140) simultaneously with the operating (314) of the first subset (126) of PNP machines (130), wherein the large object (22) spans multiple PNP machines (130b, 130c); and
while operating (326) the second subset (128) in the synchronous phase (356), providing (318) new instructions (124) from the program (122) to each of the PNP machines (130b, 130c) in the second subset (128) in response to detecting that all of the PNP machines (130b, 130c) in the second subset (128) have completed a prior instruction (124) from the program (122).

2. The method (300) of claim 1 further comprising:
iteratively (332) operating (326, 314) the first subset (126) of PNP machines (130) and the second subset (128) of PNP machines (130) in the synchronous phase (356) and the asynchronous phase (354).

3. The method (300) of claim 1 or 2 wherein:
the PNP machines (130a) in the first subset (126) are distinct from the PNP machines (130b, 130c) in the second subset (128).

4. The method (300) of any one of claims 1 to 3 further comprising:
assembling (504) multiple mandrel segments (235) together into a half-barrel section (770) after the PNP machines (130) have completed the instructions (124) in the program (122) corresponding to the mandrel segments (235).

5. The method (300) of any one of claims 1 to 4 wherein the objects (18) each comprise a preform (150) of unhardened fiber-reinforced material (152), and the method (300) further comprises:
securing (336) the preforms (150) to the mandrel (140).

6. The method (300) of any one of claims 1 to 5 wherein:
the instructions (124) in the asynchronous phase (354) cause each of the PNP machines (130a) in the first subset (126) to place (404) a strong back (180) over a discrete object (20), apply (406) vacuum pressure (160) to hold the discrete object (20) at the strong back (180), lift (454) the strong back (180) into place over the mandrel (140), and release (470) the vacuum pressure (160) to remove (464) the discrete object (20) from the strong back (180) while the discrete object (20) contacts the mandrel (140), and
the instructions (124) in the synchronous phase (356) cause each of the PNP machines (130b, 130c) in the second subset (128) to synchronously place (404) the strong back (180) over the large object (22), apply (406) the vacuum pressure (160) to hold the large object (22) at the strong back (180), lift (454) the strong back (180) into place over the mandrel (140), and release (470) the vacuum pressure (160) to remove (464) the large object (22) from the strong back (180) while the large object (22) contacts the mandrel (140).

7. A non-transitory computer-readable medium embodying programmed instructions (124) which, when executed by a processor, are operable for performing the method (300) of any one of claims 1 to 6 for assembling the structure (12).

8. A placement system (50) for fabricating a structure (12) formed of objects (18), the placement system (50) comprising:
pick-and-place (PNP) machines (130) within a manufacturing cell (110) that are disposed within reach of the objects (18) and a mandrel (140), the mandrel (140) moves with respect to the PNP machines (130); and
a cell controller (120) operatively coupled to the PNP machines (130) to place the objects (18) on the mandrel (140) using the PNP machines (130),
wherein the cell controller (120) is operable to iteratively (332) operate (326, 314) a first subset (126) of PNP machines (130) and a second subset (128) of PNP machines (130) in a synchronous phase (356) and an asynchronous phase (354).

9. The placement system (50) of claim 8 wherein the objects (18) include discrete objects (20) and a large object (22) that is bigger than the discrete objects (20), and the cell controller (120) is configured to:
operate (314) the first subset (126) of PNP machines (130) independently in the asynchronous phase (354) to place the discrete objects (20) onto the mandrel (140);
while operating (314) the first subset (126) in the asynchronous phase (354), for each of the PNP machines (130a) in the first subset (126): provide (306) new instructions (124) from a program (122) in response to detecting that prior instructions (124) from the program (122) have been completed by the PNP machine (130a), regardless of progress of other PNP machines (130) in the first subset (126);
operate (326) the second subset (128) of PNP machines (130) in tandem in the synchronous phase (356) to place the large object (22) onto the mandrel (140) simultaneously with the operating (314) of the first subset (126) of PNP machines (130), wherein the large object (22) spans multiple PNP machines (130b, 130c); and
while operating (326) the second subset (128) in the synchronous phase (356), provide (318) new instructions (124) from the program (122) to each of the PNP machines (130b, 130c) in the second subset (128) in response to detecting that all of the PNP machines (130b, 130c) in the second subset (128) have completed a prior instruction (124) from the program (122).

10. The placement system (50) of any one of claims 8 to 9 wherein:
the PNP machines (130a) in the first subset (126) are distinct from the PNP machines (130b, 130c) in the second subset (128).

11. The placement system (50) of any one of claims 8 to 10 wherein:
the objects (18) each comprise a preform (150) of unhardened fiber-reinforced material (152).

12. The placement system (50) of any one of claims 8 to 11, wherein the objects (18) include discrete objects (20) and a large object (22) that spans multiple PNP machines (130), wherein the cell controller (120) includes a program (122) having:
instructions (124) in an asynchronous phase (354) cause each of the PNP machines (130a) in the first subset (126) to place (404) a strong back (180) over a discrete object (20), apply (406) vacuum pressure (160) to hold the discrete object (20) at the strong back (180), lift (454) the strong back (180) into place over the mandrel (140), and release (470) the vacuum pressure (160) to remove (464) the discrete object (20) from the strong back (180) while the discrete object (20) contacts the mandrel (140), and
instructions (124) in a synchronous phase (356) cause each of the PNP machines (130b, 130c) in the second subset (128) to synchronously place the strong back (180) over the large object (22), apply (406) the vacuum pressure (160) to hold the large object (22) at the strong back (180), lift (454) the strong back (180) into place over the mandrel (140), and release (470) the vacuum pressure (160) to remove (464) the large object (22) from the strong back (180) while the large object (22) contacts the mandrel (140).

13. The placement system (50) of any one of claims 8 to 12 wherein the objects (18) include discrete objects (20) and wherein:
the cell controller (120) is configured to operate (314) each PNP machine (130a) in the first subset (126) of the PNP machines (130) independently from each other in the asynchronous phase (354) to place the discrete objects (20) onto the mandrel (140).

14. The placement system (50) of any one of claims 8 to 13 wherein the objects (18) include a large object (22) that spans multiple PNP machines (130) and wherein:
the cell controller (120) is configured to operate (326) PNP machines (130b, 130c) in the second subset (128) of PNP machines (130) in tandem in the synchronous phase (356) to place the large object (22) onto the mandrel (140), preferably wherein the cell controller (120) simultaneously operates the first subset (126) and the second subset (128).

15. Fabricating a portion (768) of an aircraft (750) using the placement system (50) of any one of claims 8 to 14.

## Patentansprüche

1. Verfahren (300) zur Montage einer Struktur (12) aus Objekten (18), die diskrete Objekte (20) und ein großes Objekts (22) umfassen, das größer als die diskreten Objekte (20) ist, wobei das Verfahren (300) Folgendes umfasst:
Betreiben (314) einer ersten Untergruppe (126) von Pick-and-Place-Maschinen (PNP-Maschinen) (130) an einer Platzierungsstation (100) unabhängig voneinander in einer asynchronen Phase (354), um die diskreten Objekte (20) auf einem Dorn (140) zu platzieren;
während die erste Untergruppe (126) in der asynchronen Phase (354) betrieben (314) wird, für jede der PNP-Maschinen (130a) in der ersten Untergruppe (126): Bereitstellen (306) neuer Anweisungen (124) aus einem Programm (122) als Reaktion auf die Erkennung, dass vorherige Anweisungen (124) aus dem Programm (122) von der PNP-Maschine (130a) ausgeführt worden sind, unabhängig von einem Fortschritt anderer PNP-Maschinen (130) in der ersten Untergruppe (126);
Betreiben (326) einer zweiten Untergruppe (128) von PNP-Maschinen (130) im Tandem in einer synchronen Phase (356), um das große Objekt (22) gleichzeitig mit dem Betrieb (314) der ersten Untergruppe (126) von PNP-Maschinen (130) auf dem Dorn (140) zu platzieren, wobei das große Objekt (22) mehrere PNP-Maschinen (130b, 130c) überspannt; und
während die zweite Untergruppe (128) in der synchronen Phase (356) betrieben (326) wird, Bereitstellen (318) neuer Anweisungen (124) aus dem Programm (122) an jede der PNP-Maschinen (130b, 130c) in der zweiten Untergruppe (128) als Reaktion auf die Erkennung, dass alle PNP-Maschinen (130b, 130c) in der zweiten Untergruppe (128) eine vorherige Anweisung (124) aus dem Programm (122) ausgeführt haben.

2. Verfahren (300) nach Anspruch 1, das ferner Folgendes umfasst:
iteratives (332) Betreiben (326, 314) der ersten Untergruppe (126) von PNP-Maschinen (130) und der zweiten Untergruppe (128) von PNP-Maschinen (130) in der synchronen Phase (356) und der asynchronen Phase (354).

3. Verfahren (300) nach Anspruch 1 oder 2, wobei:
die PNP-Maschinen (130a) in der ersten Untergruppe (126) sich von den PNP-Maschinen (130b, 130c) in der zweiten Untergruppe (128) unterscheiden.

4. Verfahren (300) nach einem der Ansprüche 1 bis 3, das ferner Folgendes umfasst:
Montieren (504) mehrerer Dornsegmente (235) zusammen zu einem Halbzylinderabschnitt (770), nachdem die PNP-Maschinen (130) die den Dornsegmenten (235) entsprechenden Anweisungen (124) in dem Programm (122) abgeschlossen haben.

5. Verfahren (300) nach einem der Ansprüche 1 bis 4, wobei die Objekte (18) jeweils einen Vorformling (150) aus ungehärtetem faserverstärktem Material (152) umfassen und das Verfahren (300) ferner Folgendes umfasst:
Sichern (336) der Vorformlinge (150) an dem Dorn (140).

6. Verfahren (300) nach einem der Ansprüche 1 bis 5, wobei:
die Anweisungen (124) in der asynchronen Phase (354) jede der PNP-Maschinen (130a) in der ersten Untergruppe (126) zu Folgendem veranlassen: Platzieren (404) eines Trägers (180) über einem diskreten Objekt (20), Anlegen (406) von Vakuumdruck (160), um das diskrete Objekt (20) an dem Träger (180) zu halten, Anheben (454) des Trägers (180) über den Dorn (140) und Lösen (470) des Vakuumdrucks (160), um das diskrete Objekt (20) von dem Träger (180) zu entfernen (464), während das diskrete Objekt (20) den Dorn (140) berührt, und
die Anweisungen (124) in der synchronen Phase (356) jede der PNP-Maschinen (130b, 130c) in der zweiten Untergruppe (128) zu Folgendem veranlassen: synchrones Platzieren (404) des Trägers (180) über dem großen Objekt (22), Anlegen (406) des Vakuumdrucks (160), um das große Objekt (22) an dem Träger (180) zu halten, Anheben (454) des Trägers (180) über den Dorn (140) und Lösen (470) des Vakuumdrucks (160), um das große Objekt (22) von dem Träger (180) zu entfernen (464), während das große Objekt (22) den Dorn (140) berührt.

7. Übergangsloses computerlesbares Medium, das programmierte Anweisungen (124) enthält, die, wenn sie von einem Prozessor ausgeführt werden, betreibbar sind, um das Verfahren (300) nach einem der Ansprüche 1 bis 6 zur Montage der Struktur (12) durchzuführen.

8. Platzierungssystem (50) zum Herstellen einer aus Objekten (18) gebildeten Struktur (12), wobei das Platzierungssystem (50) Folgendes umfasst:
Pick-and-Place-Maschinen (PNP-Maschinen) (130) innerhalb einer Fertigungszelle (110), die in Reichweite der Objekte (18) und eines Dorns (140) angeordnet sind, wobei der Dorn (140) sich relativ zu den PNP-Maschinen (130) bewegt; und
eine Zellensteuerung (120), die operativ mit den PNP-Maschinen (130) gekoppelt ist, um die Objekte (18) mithilfe der PNP-Maschinen (130) auf dem Dorn (140) zu platzieren,
wobei die Zellensteuerung (120) betreibbar ist zum iterativen (332) Betreiben (326, 314) einer ersten Untergruppe (126) von PNP-Maschinen (130) und einer zweiten Untergruppe (128) von PNP-Maschinen (130) in einer synchronen Phase (356) und einer asynchronen Phase (354).

9. Platzierungssystem (50) nach Anspruch 8, wobei die Objekte (18) diskrete Objekte (20) und ein großes Objekt (22) umfassen, das größer als die diskreten Objekte (20) ist, und die Zellensteuerung (120) zu Folgendem konfiguriert ist:
Betreiben (314) der ersten Untergruppe (126) von PNP-Maschinen (130) unabhängig voneinander in der asynchronen Phase (354), um die diskreten Objekte (20) auf dem Dorn (140) zu platzieren;
während die erste Untergruppe (126) in der asynchronen Phase (354) betrieben (314) wird, für jede der PNP-Maschinen (130a) in der ersten Untergruppe (126): Bereitstellen (306) neuer Anweisungen (124) aus einem Programm (122) als Reaktion auf die Erkennung, dass vorherige Anweisungen (124) aus dem Programm (122) von der PNP-Maschine (130a) ausgeführt worden sind, unabhängig von einem Fortschritt anderer PNP-Maschinen (130) in der ersten Untergruppe (126);
Betreiben (326) der zweiten Untergruppe (128) von PNP-Maschinen (130) im Tandem in der synchronen Phase (356), um das große Objekt (22) gleichzeitig mit dem Betrieb (314) der ersten Untergruppe (126) von PNP-Maschinen (130) auf dem Dorn (140) zu platzieren, wobei das große Objekt (22) mehrere PNP-Maschinen (130b, 130c) überspannt; und
während die zweite Untergruppe (128) in der synchronen Phase (356) betrieben (326) wird, Bereitstellen (318) neuer Anweisungen (124) aus dem Programm (122) an jede der PNP-Maschinen (130b, 130c) in der zweiten Untergruppe (128) als Reaktion auf die Erkennung, dass alle PNP-Maschinen (130b, 130c) in der zweiten Untergruppe (128) eine vorherige Anweisung (124) aus dem Programm (122) ausgeführt haben.

10. Platzierungssystem (50) nach einem der Ansprüche 8 und 9, wobei:
die PNP-Maschinen (130a) in der ersten Untergruppe (126) sich von den PNP-Maschinen (130b, 130c) in der zweiten Untergruppe (128) unterscheiden.

11. Platzierungssystem (50) nach einem der Ansprüche 8 bis 10, wobei:
die Objekte (18) jeweils einen Vorformling (150) aus ungehärtetem faserverstärktem Material (152) umfassen.

12. Platzierungssystem (50) nach einem der Ansprüche 8 bis 11, wobei die Objekte (18) diskrete Objekte (20) und ein großes Objekt (22) umfassen, das mehrere PNP-Maschinen (130) überspannt, wobei die Zellensteuerung (120) ein Programm enthält, das Folgendes aufweist:
Anweisungen (124), die in einer asynchronen Phase (354) jede der PNP-Maschinen (130a) in der ersten Untergruppe (126) zu Folgendem veranlassen: Platzieren (404) eines Trägers (180) über einem diskreten Objekt (20), Anlegen (406) von Vakuumdruck (160), um das diskrete Objekt (20) an dem Träger (180) zu halten, Anheben (454) des Trägers (180) über den Dorn (140) und Lösen (470) des Vakuumdrucks (160), um das diskrete Objekt (20) von dem Träger (180) zu entfernen (464), während das diskrete Objekt (20) den Dorn (140) berührt, und
Anweisungen (124), die in einer synchronen Phase (356) jede der PNP-Maschinen (130b, 130c) in der zweiten Untergruppe (128) zu Folgendem veranlassen: synchrones Platzieren des Trägers (180) über dem großen Objekt (22), Anlegen (406) des Vakuumdrucks (160), um das große Objekt (22) an dem Träger (180) zu halten, Anheben (454) des Trägers (180) über den Dorn (140) und Lösen (470) des Vakuumdrucks (160), um das große Objekt (22) von dem Träger (180) zu entfernen (464), während das große Objekt (22) den Dorn (140) berührt.

13. Platzierungssystem (50) nach einem der Ansprüche 8 bis 12, wobei die Objekte (18) diskrete Objekte (20) umfassen und wobei:
die Zellensteuerung (120) dazu konfiguriert ist, jede PNP-Maschine (130a) in der ersten Untergruppe (126) von PNP-Maschinen (130) unabhängig voneinander in der asynchronen Phase (354) zu betreiben, um die diskreten Objekte (20) auf dem Dorn (140) zu platzieren.

14. Platzierungssystem (50) nach einem der Ansprüche 8 bis 13, wobei die Objekte (18) ein großes Objekt (22) umfassen, das mehrere PNP-Maschinen (130) überspannt, und wobei:
die Zellensteuerung (120) dazu konfiguriert ist, PNP-Maschinen (130b, 130c) in der zweiten Untergruppe (128) von PNP-Maschinen (130) im Tandem in der synchronen Phase (356) zu betreiben, um das große Objekt (22) auf dem Dorn (140) zu platzieren, wobei die Zellensteuerung (120) vorzugsweise die erste Untergruppe (126) und die zweite Untergruppe (128) gleichzeitig betreibt.

15. Herstellen eines Teils (768) eines Flugzeugs (750) unter Verwendung des Platzierungssystems (50) nach einem der Ansprüche 8 bis 14.

## Revendications

1. Procédé (300) d'assemblage d'une structure (12) à partir d'objets (18) comprenant des objets distincts (20) et un objet de grande taille (22) qui est plus grand que les objets distincts (20), le procédé (300) comprenant :
l'exploitation (314) d'un premier sous-ensemble (126) de machines bras-transferts (130) au niveau d'un poste de mise en place (100) indépendamment lors d'une phase asynchrone (354) de façon à placer les objets distincts (20) sur un mandrin (140) ;
pendant l'exploitation (314) du premier sous-ensemble (126) lors de la phase asynchrone (354), pour chacune des machines bras-transferts (130a) du premier sous-ensemble (126) : la fourniture (306) de nouvelles instructions (124) issues d'un programme (122) en réaction à la détection du fait que des instructions préalables (124) issues du programme (122) ont été exécutées par la machine bras-transfert (130a), indépendamment de l'état d'avancement d'autres machines bras-transferts (130) du premier sous-ensemble (126) ;
l'exploitation (326) d'un deuxième sous-ensemble (128) de machines bras-transferts (130) en tandem lors d'une phase synchrone (356) afin de placer l'objet de grande taille (22) sur le mandrin (140) simultanément à l'exploitation (314) du premier sous-ensemble (126) de machines bras-transferts (130), ledit objet de grande taille (22) s'étendant sur de multiples machines bras-transferts (130b, 130c) ; et
pendant l'exploitation (326) du deuxième sous-ensemble (128) lors de la phase synchrone (356), la fourniture (318) de nouvelles instructions (124) issues du programme (122) à chacune des machines bras-transferts (130b, 130c) du deuxième sous-ensemble (128) en réaction à la détection du fait que toutes les machines bras-transferts (130b, 130c) du deuxième sous-ensemble (128) ont exécuté une instruction préalable (124) issue du programme (122).

2. Procédé (300) selon la revendication 1, comprenant en outre :
l'exploitation (326, 314) itérative (332) du premier sous-ensemble (126) de machines bras-transferts (130) et du deuxième sous-ensemble (128) de machines bras-transferts (130) lors de la phase synchrone (356) et de la phase asynchrone (354).

3. Procédé (300) selon la revendication 1 ou 2, dans lequel :
les machines bras-transferts (130a) du premier sous-ensemble (126) sont différentes des machines bras-transferts (130b, 130c) du deuxième sous-ensemble (128).

4. Procédé (300) selon l'une quelconque des revendications 1 à 3, comprenant en outre :
l'assemblage (504) de multiples segments de mandrin (235) entre eux pour former une section de demi-barrique (770) une fois que les machines bras-transferts (130) ont exécuté les instructions (124) du programme (122) correspondant aux segments de mandrin (235).

5. Procédé (300) selon l'une quelconque des revendications 1 à 4, dans lequel les objets (18) comprennent chacun une préforme (150) de matériau renforcé de fibres non durci (152), le procédé (300) comprenant en outre :
la fixation (336) des préformes (150) au mandrin (140).

6. Procédé (300) selon l'une quelconque des revendications 1 à 5, dans lequel :
les instructions (124), lors de la phase asynchrone (354), amènent chacune des machines bras-transferts (130a) du premier sous-ensemble (126) à placer (404) une pièce de renforcement (180) au-dessus d'un objet distinct (20), à appliquer (406) un vide (160) pour retenir l'objet distinct (20) au niveau de la pièce de renforcement (180), à soulever (454) la pièce de renforcement (180) afin de la placer au-dessus du mandrin (140), et à interrompre (470) l'application du vide (160) afin de retirer (464) l'objet distinct (20) de la pièce de renforcement (180) pendant que l'objet distinct (20) est en contact avec le mandrin (140), et
les instructions (124), lors de la phase synchrone (356), amènent chacune des machines bras-transferts (130b, 130c) du deuxième sous-ensemble (128) à placer de manière synchrone (404) la pièce de renforcement (180) au-dessus de l'objet de grande taille (22), à appliquer (406) un vide (160) pour retenir l'objet de grande taille (22) au niveau de la pièce de renforcement (180), à soulever (454) la pièce de renforcement (180) afin de la placer au-dessus du mandrin (140), et à interrompre (470) l'application du vide (160) afin de retirer (464) l'objet de grande taille (22) de la pièce de renforcement (180) pendant que l'objet de grande taille (22) est en contact avec le mandrin (140).

7. Support non transitoire lisible par ordinateur doté d'instructions programmées (124) qui, lorsqu'elles sont exécutées par un processeur, permettent de mettre en oeuvre le procédé (300) selon l'une quelconque des revendications 1 à 6 pour assembler ladite structure (12).

8. Système de mise en place (50) permettant de fabriquer une structure (12) constituée d'objets (18), le système de mise en place (50) comprenant :
des machines bras-transferts (130) situées à l'intérieur d'une cellule de fabrication (110) et disposées à portée des objets (18) et d'un mandrin (140), le mandrin (140) se déplaçant relativement aux machines bras-transferts (130), et
un organe de commande de cellule (120) couplé de manière fonctionnelle aux machines bras-transferts (130) de façon à placer les objets (18) sur le mandrin (140) au moyen des machines bras-transferts (130) ;
ledit organe de commande de cellule (120) permettant d'exploiter (326, 314) de manière itérative (332) un premier sous-ensemble (126) de machines bras-transferts (130) et un deuxième sous-ensemble (128) de machines bras-transferts (130) lors d'une phase synchrone (356) et d'une phase asynchrone (354).

9. Système de mise en place (50) selon la revendication 8, dans lequel les objets (18) comprennent des objets distincts (20) et un objet de grande taille (22) qui est plus grand que les objets distincts (20), et l'organe de commande de cellule (120) est conçu pour :
exploiter (314) le premier sous-ensemble (126) de machines bras-transferts (130) indépendamment lors de la phase asynchrone (354) de façon à placer les objets distincts (20) sur le mandrin (140) ;
pendant l'exploitation (314) du premier sous-ensemble (126) lors de la phase asynchrone (354), pour chacune des machines bras-transferts (130a) du premier sous-ensemble (126) : fournir (306) de nouvelles instructions (124) issues d'un programme (122) en réaction à la détection du fait que des instructions préalables (124) issues du programme (122) ont été exécutées par la machine bras-transfert (130a), indépendamment de l'état d'avancement d'autres machines bras-transferts (130) du premier sous-ensemble (126) ;
exploiter (326) le deuxième sous-ensemble (128) de machines bras-transferts (130) en tandem lors de la phase synchrone (356) afin de placer l'objet de grande taille (22) sur le mandrin (140) simultanément à l'exploitation (314) du premier sous-ensemble (126) de machines bras-transferts (130), ledit objet de grande taille (22) s'étendant sur de multiples machines bras-transferts (130b, 130c) ; et
pendant l'exploitation (326) du deuxième sous-ensemble (128) lors de la phase synchrone (356), fournir (318) de nouvelles instructions (124) issues du programme (122) à chacune des machines bras-transferts (130b, 130c) du deuxième sous-ensemble (128) en réaction à la détection du fait que toutes les machines bras-transferts (130b, 130c) du deuxième sous-ensemble (128) ont exécuté une instruction préalable (124) issue du programme (122).

10. Système de mise en place (50) selon l'une quelconque des revendications 8 et 9, dans lequel :
les machines bras-transferts (130a) du premier sous-ensemble (126) sont différentes des machines bras-transferts (130b, 130c) du deuxième sous-ensemble (128).

11. Système de mise en place (50) selon l'une quelconque des revendications 8 à 10, dans lequel :
les objets (18) comprennent chacun une préforme (150) de matériau renforcé de fibres non durci (152).

12. Système de mise en place (50) selon l'une quelconque des revendications 8 à 11, dans lequel les objets (18) comprennent des objets distincts (20) et un objet de grande taille (22) qui s'étend sur de multiples machines bras-transferts (130), ledit organe de commande de cellule (120) comportant un programme (122) comprenant :
des instructions (124) qui, lors d'une phase asynchrone (354), amènent chacune des machines bras-transferts (130a) du premier sous-ensemble (126) à placer (404) une pièce de renforcement (180) au-dessus d'un objet distinct (20), à appliquer (406) un vide (160) pour retenir l'objet distinct (20) au niveau de la pièce de renforcement (180), à soulever (454) la pièce de renforcement (180) afin de la placer au-dessus du mandrin (140), et à interrompre (470) l'application du vide (160) afin de retirer (464) l'objet distinct (20) de la pièce de renforcement (180) pendant que l'objet distinct (20) est en contact avec le mandrin (140), et
des instructions (124) qui, lors d'une phase synchrone (356), amènent chacune des machines bras-transferts (130b, 130c) du deuxième sous-ensemble (128) à placer de manière synchrone la pièce de renforcement (180) au-dessus de l'objet de grande taille (22), à appliquer (406) un vide (160) pour retenir l'objet de grande taille (22) au niveau de la pièce de renforcement (180), à soulever (454) la pièce de renforcement (180) afin de la placer au-dessus du mandrin (140), et à interrompre (470) l'application du vide (160) afin de retirer (464) l'objet de grande taille (22) de la pièce de renforcement (180) pendant que l'objet de grande taille (22) est en contact avec le mandrin (140).

13. Système de mise en place (50) selon l'une quelconque des revendications 8 à 12, dans lequel les objets (18) comprennent des objets distincts (20) et dans lequel :
l'organe de commande de cellule (120) est conçu pour exploiter (314) chaque machine bras-transfert (130a) du premier sous-ensemble (126) des machines bras-transferts (130) indépendamment les unes des autres lors de la phase asynchrone (354) de façon à placer les objets distincts (20) sur le mandrin (140).

14. Système de mise en place (50) selon l'une quelconque des revendications 8 à 13, dans lequel les objets (18) comprennent un objet de grande taille (22) qui s'étend sur de multiples machines bras-transferts (130), et dans lequel :
l'organe de commande de cellule (120) est conçu pour exploiter (326) des machines bras-transferts (130b, 130c) du deuxième sous-ensemble (128) de machines bras-transferts (130) en tandem lors de la phase synchrone (356) afin de placer l'objet de grande taille (22) sur le mandrin (140), ledit organe de commande de cellule (120) exploitant de préférence simultanément le premier sous-ensemble (126) et le deuxième sous-ensemble (128).

15. Fabrication d'une portion (768) d'un aéronef (750) au moyen du système de mise en place (50) selon l'une quelconque des revendications 8 à 14.
